# EUROPEAN PATENT APPLICATION

(11) **EP 1 852 787 A1**
(43) Date of publication of application: **07.11.2007**
(21) Application number: 06270044.8
(22) Date of filing: 05.05.2006
(51) Int. Cl.: G06F 17/30

(54) **Progressive retrieval of data**

(71) Applicant: Microsoft Corporation, Redmond WA 98052 (US)
(72) Inventor: Brandel, Jonas Microsoft EPDC, Leopardstown Dublin 18 (IE)
(74) Representative: Wallis, Helen Frances Mary

(57) **Abstract**

A method of satisfying a query for data and a data retrieval system are described. The method comprises retrieving a data portion related to the query, where the data portion comprises one or more markers corresponding to a further data portion. From the query it is determined whether a further data portion is required to satisfy the query and if required the further data portion is retrieved. This determination is then repeated for each marker contained within any data portions retrieved. Once all required data portions have been retrieved, data is selected from the retrieved data portions to satisfy the query.

## Description

### COPYRIGHT NOTICE

A portion of the disclosure of this patent contains material which is subject to copyright protection. The copyright owner has no objection to the facsimile reproduction by anyone of the patent document or the patent disclosure as it appears in the Patent and Trademark Office patent file or records, but otherwise reserves all copyright rights whatsoever.

### BACKGROUND

XML (Extensible Markup Language) is a standard developed by W3C which allows annotation of text in a manner which can be read by humans and processed by computers. The annotations identify the structure of a document. Many processing languages (e.g. XPath, XSLT and XQuery) have also been developed which means that data in XML format is easy to navigate, query or otherwise process. Consequently, there are many applications where it is beneficial to work with data in XML format even if the data was originally in another format (e.g. a database or SQL server tables). However, in order to use the processing languages, it is necessary for the entire data set (e.g. the entire database) to be first converted into XML format. Although this is not problematic for small amounts of data, problems arise for larger amounts of data because resource limitations, such as bandwidth, processing power, memory usage etc, lead to slower, more costly and less scalable processing.

A technique has been developed to enable large amounts of data to be retrieved from a data source and displayed to a user. This technique provides a subset of the data to a user and uses server side database cursors to keep track of what data has been provided so that the next portion of data can be provided upon request. However, server side cursors require the server to maintain state information and also require server resources. Furthermore, messages must pass from the user to the server and back to the user again each time additional data is requested (e.g. in response to the user moving the cursor) and this can be problematic if there is latency in the connection.

The invention seeks to provide an improved method and apparatus for progressive retrieval and / or processing of data.

It is another object of the invention to provide an improved method and apparatus for progressive retrieval of data in which the amount of data retrieved is reduced or minimised.

### SUMMARY

The following presents a simplified summary of the disclosure in order to provide a basic understanding to the reader. This summary is not an extensive overview of the disclosure and it does not identify key/critical elements of the invention or delineate the scope of the invention. Its sole purpose is to present some concepts disclosed herein in a simplified form as a prelude to the more detailed description that is presented later.

The present example provides a method of satisfying a query by progressive retrieval of data. A portion of data is retrieved which includes a marker to an additional portion of data. From the query it is determined whether this additional portion of data is needed to respond to the query, and if it is, this portion is retrieved. This is then repeated for each marker which is included within any data portion which is retrieved. Have retrieved all required data portions, data is selected from that retrieved in order to satisfy the query.

A first example provides a method of satisfying a query for data comprising: retrieving a first data portion related to the query, the first data portion comprising one or more markers, each marker corresponding to a further data portion; determining from the query whether a further data portion is required to satisfy the query and if required, retrieving the further data portion; repeating the determining step for the or each marker in the first data portion and for any markers in retrieved further data portions; and selecting data from the retrieved data portions to satisfy the query.

Preferably the selected data comprises one of the retrieved data portions or a part of one of the retrieved data portions.

The query may be received from an application and the method may further comprise: outputting the selected data to the client application.

Preferably the method further comprises, before the step of retrieving a first data portion: creating the first data portion.

Preferably, creating the first data portion comprises: accessing a data source; retrieving data from the data source; selecting a part of the data based on predefined criteria; and creating a first data portion comprising the selected part of the data and one or more markers.

Preferably the predefined criteria comprise one or more of: a data hierarchy, a portion size restriction, location of the data, and characteristics of a link over which the first data portion is to be sent.

Preferably the method further comprises, before the step of retrieving a further data portion: creating the further data portion.

Preferably creating the further data portion comprises: accessing a second data source; retrieving data from the second data source; selecting a part of the data based on predefined criteria; and creating a further data portion comprising the selected part of the data and one or more markers.

The first data source and the second data source may be the same or different.

The step of creating the first data portion may be performed by a server-side module. The step of creating the further data portion may also performed by the server-side module.

Preferably each marker comprises location information for a data portion, the location information comprising a URI (Uniform Resource Identifier), a file path or a folder.

Preferably the query comprises an XPath, XSLT (Extensible Stylesheet Language Transformations) or XQuery query.

Preferably each data portion comprises XML data.

A second example provides a computer program comprising computer program code means adapted to perform all the steps of any of the preceding methods when said program is run on a computer. This computer program may be embodied on a computer readable medium.

A third example provides a data retrieval system comprising: a navigational interface arranged to receive a query; and a data retrieval means arranged to: retrieve a first data portion related to the query, the first data portion comprising one or more markers, each marker corresponding to a further data portion; determine from the query whether a further data portion is required to satisfy the query and if required, to retrieve the further data portion; repeat the determining step for the or each marker in the first data portion and for any markers in retrieved further data portions; and select data from the retrieved data portions to satisfy the query.

Preferably the data retrieval system further comprises an output arranged to output the selected data.

A fourth example provides a method of creating a data portion for use in satisfying a query, the method comprising: accessing a data source; retrieving data from the data source; selecting a part of the data based on predefined criteria; and creating a first data portion comprising the selected part of the data and one or more markers, each marker corresponding to a further data portion.

The method may be performed by software in machine readable form on a storage medium. The software can be suitable for execution on a parallel processor or a serial processor such that the method steps may be carried out in any suitable order, or simultaneously.

This acknowledges that software can be a valuable, separately tradable commodity. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a data retrieval system;
FIG. 2 is an example flow diagram showing the operation of a client-side module;
FIG. 3 is a schematic diagram showing a hierarchical data structure;
FIG. 4 is a schematic diagram of another data retrieval system; and
FIG. 5 is an example flow diagram showing the operation of a server-side module.

Like reference numerals are used to designate like parts in the accompanying drawings.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

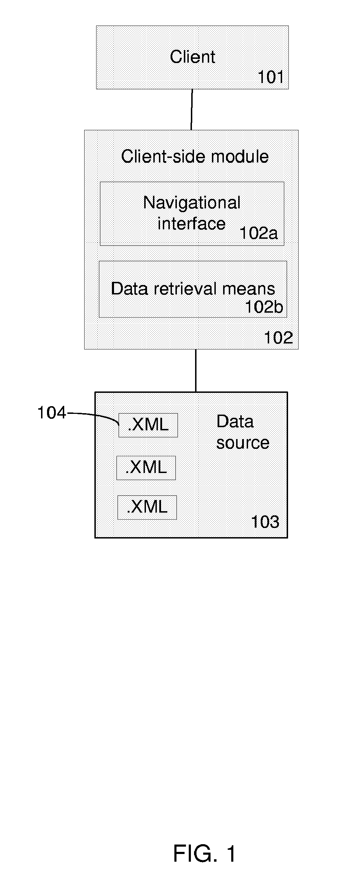

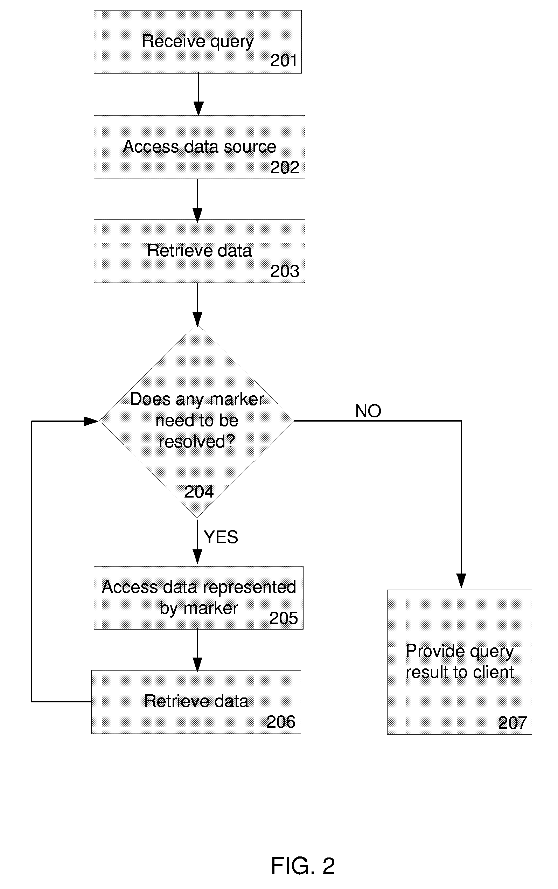

FIG. 1 is a schematic diagram of a data retrieval system comprising a client 101, a client-side module 102 and a data source 103, which may comprise a set of XML files 104. The client 101 provides a user with an interface for retrieving data from the data source 103. The client-side module 102 interfaces between the client 101 and the data store 103 and comprises a navigational interface 102a which receives queries from the client 101, such that it appears to the client that it is querying a single XML file. The client 101 is unaware of the operation of the client-side module 102. The client-side module also comprises a data retrieval means 102b which retrieves data from the data source 103 that is required to respond to a query received from the client 101. The navigational interface 102a, such as .NET frameworks XPathNavigator, allows traversal of the data by moving from one node or piece of data to the next or previous or child or parent, by only traversing needed parts of the data space. The data retrieval means 102b only retrieves the data that is actually traversed to. The client-side module operates over a non-linear set of data or multidimensional data sets. The operation of the client-side module can be described with reference to FIG. 2.

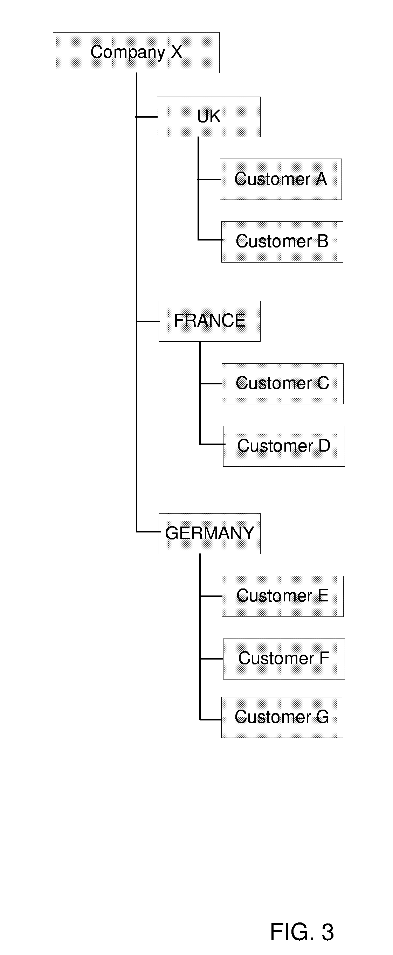

The client-side module 102 receives a query from the client 101 for data from the data source 103 (step 201). In an example, the data store 103 may comprise a set of XML files detailing customer information arranged in a hierarchical data structure (e.g. a folder structure) as shown in FIG. 3. The customer information may be arranged by country and then for each customer in each country, information such as the products purchased, the contact information and account number may be stored in an XML file. The query received from the client (in step 201) may be of the form:

```
        /Company[@Name='Company X']/
        Country[@Name='UK']/Customer[@Name='B']
```

As the client-side module provides a navigational interface, it executes the query from the top level down i.e. from left to right, to determine a set of nodes that satisfy the query. The client-side module 102 accesses the data source 103 (step 202) and retrieves data appropriate to the query (step 203) e.g. the XML file relating to Company X (the top level of the query). The data retrieved may include one or more markers for additional data, e.g. markers to XML files each containing information about a different country:

```
        <Country Name='UK'>
        <MARKER 'REF=XYZ://Company X/UK/*'/>
        </Country>
        <Country Name='France'>
        <MARKER 'REF=XYZ://Company X/France/*'/>
        </Country>
        <Country Name='Germany'>
        <MARKER 'REF=XYZ://Company X/Germany/*'/>
        </Country>
```

Each marker includes a reference to more information and may be in the form of a URI (Uniform Resource Identifier), a file path (as in the example above), a file name, a folder or other means of identifying where data is located. In addition to referencing the location of some data, the reference may also identify which part of the data to retrieve. The markers may point to a whole file or to a part of a file.

Having retrieved the data including one or more markers (in step 203), the client-side module 102 iterates through the query and the data retrieved and determines whether it is necessary to resolve the first of the markers to satisfy the query (step 204). In the query given above, the second level of the query requires information for the UK; therefore it is necessary to resolve the first marker which points to information about the UK. Therefore, the client-side module accesses the data represented by the first marker (step 205) and retrieves that data (step 206), e.g. the XML file relating to the UK. This newly retrieved data may in turn include further markers:

```
        <Customer Name='A'>
        <MARKER 'REF=XYZ://Company X/UK/Customer A/*'/>
        </Customer >
        <Customer Name='B'>
        <MARKER 'REF=XYZ://Company X/UK/Customer B/*'/>
        </Customer >
```

Again each marker includes a reference to a location of more information, in this case files containing information relating to each customer, A and B. In further iterations, the client-side module repeats the analysis of the query and the markers (steps 204-206) to determine whether it is necessary to resolve each marker and if it is necessary, the client-side module retrieves the additional data. In the example given above, the second level query requires information on the UK so it is not necessary to resolve the second and third markers from the first file retrieved (the markers for information on France and Germany). The next level of the query requires information on Customer B and so it is not necessary to resolve the first marker in the second file retrieved (the marker for information on Customer A). However, it is necessary to resolve the second marker in the second file retrieved to obtain the required information on Customer B.

Having processed through every level of the query received from the client 101 (in step 201) and resolved all the markers that are necessary to respond to the query, the query result is passed to the client (step 207). In the example given, the query result comprises the data contained in the XML file containing information on Customer B:

```
        <Customer Name='B'>
               <Product>Product 1 </Product>
               <Product>Product 2</Product>
               <Product>Product 3</Product>
               <Contact>John Smith</Contact>
               <Account>123456</Account>
        </Customer >
```

Having iterated through the query and provided the result to the client, the data retrieved may be discarded. However, it may be beneficial in some applications to save some or all of the data portions in a cache in preparation for another query. This may be particularly beneficial for the higher level data portions (e.g. the data containing markers for each of the countries in the example given above) when the same overall data set is queried multiple times. For example, the next query received may be for information about Customer C in France and therefore this top level data, if held in a cache, will not need to be retrieved again.

In an embodiment, the navigational interface may comprise an XPathNavigator based interface and the client-side module may retrieve the data using an Iterator, such as XPathNodelterator, and a custom XmlResolver as defined in the .NET Framework. The markers may be based on the XInclude standard, such that an example marker has the form:
<xi:include href="http://www.microsoft.com/file.xml">
The href attribute is used to specify the URI of the data the marker represents. The marker may also include an XPointer fragment identifier such that the marker only represents (or points to) part of a file (e.g. part of file.xml). In such an embodiment, the client-side module operates differently to known XInclude processors, because when an XInclude processor reads a file which contains XInclude references, it resolves all references and returns a file which does not contain any XInclude statements.

The data retrieval system may be implemented using three core classes / files as shown in Appendices 1-3. Appendix 1 shows the main class, class XmlResolvingNavigator (XmlResolvingNavigator.cs). This class implements a XPathNavigator interface which implements the 'substitution' of markers to XPathNavigators when traversed by a query or by code. This happens when run on a URL or another XPathNavigator which exposes 'markers' which are resolved by using the XlncludeXmlResolver and MultiXmlResolver classes (see below and appendices 2 and 3). For example, an implementation of a XPathNavigator that exposes a file system structure and it's files and metadata can be used as input to XmlResolvingNavigator and then XmlResolvingNavigator will detect the markers exposed by the File system navigator and resolve those into corresponding files. XmlResolvingNavigator keeps track of current location, and manages swapping in and out current piece of data (XPathNav) based on client/query navigation on the top interface.

Appendix 2 shows a custom XmlUrlResolver (MultiXmlResolver.cs) that also implemets a pluggable framework for custom XmlResolvers that can resolve different markers. For instance if a certain data source uses a custom implementation of an XPathNavigator that runs on something that isn't actually XML underneath, such providers can be plugged in here and the system will be unaware where it comes from. The class also implements the caching of already resolved/retrieved markers. Appendix 3 shows a class (XIncludeXmlResolver.cs) that resolves the 'XInclude' style markers used by the system and inherits MultiXmlResolver.

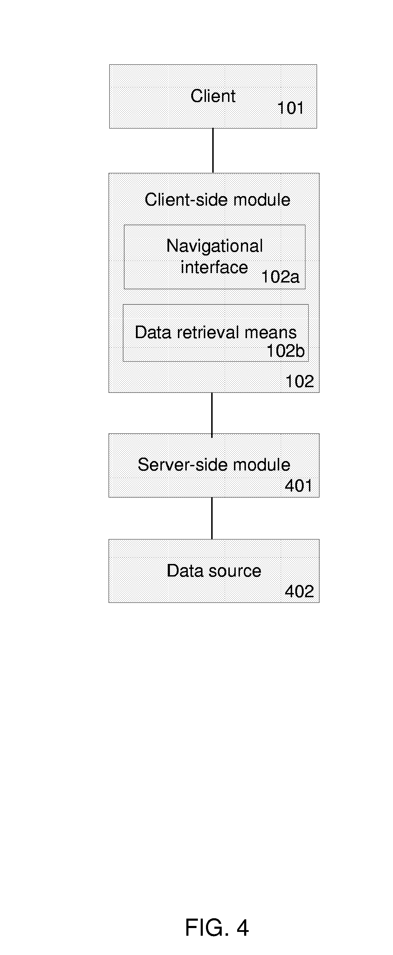

In the example described above with reference to FIGS. 1-3, the data source comprised a set of static XML files, with some files containing markers to other files. This is only one example of a suitable data source. The data source may comprise one or more XML files that do not contain any markers, the data sources need not be XML documents, there may be multiple data sources and these data sources may be stored at different locations. Where the data source does not contain any markers, these may be added by a server-side module which provides an interface between the client-side module and the data source, as can be described with reference to FIG. 4. Where the data source (or one or more of the data sources) is not an XML file, the server-side module or a custom XmlResolver presents the data to the client-side module as if it is in XML format (e.g. as an XPathNavigator based object via for example a custom XmiResolver). Where the data sources are stored at different locations, the markers for additional data are configured to point to different locations. In an embodiment which can be used to navigate a file structure, the file system structure and it's meta data /attributes are exposed as an XPathNavigator. This does not require the creation of any XML data/document.

By using markers to represent data which has not yet been retrieved, this provides a scalable and efficient data retrieval method. It enables retrieval of data from large data sources without the need to retrieve all the data or without requiring the implementation of server side cursors. Furthermore, the ability to include markers which point to different data sources provides a mechanism for querying a large virtual data set without the need to import all the data sources into a single document. By using a server-side module or custom XmlResolver that presents data to the client-side module as if it is XML data, it eliminates the need for conversion of large amounts of data into XML when it may ultimately never be queried and retrieved. In other embodiments, any pluggable client-side mechanism that can resolve a marker into a navigational interface which is supported by the client-side module may be used instead of the server-side module or custom Xmlresolver.

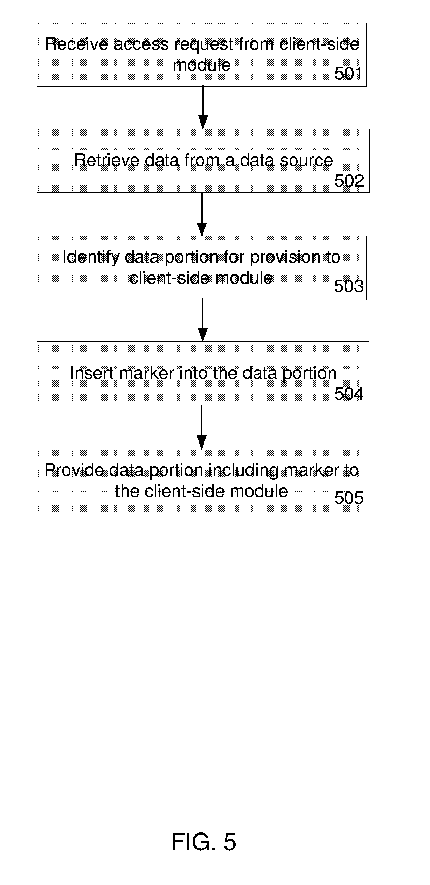

FIG. 4 shows a schematic diagram of another data retrieval system. The data retrieval system comprises a client 101 and client-side module 102 as described above. The client-side module 102 connects to a server-side module 401 which interfaces to a data source 402 which may comprise a database (e.g. a bug database). The operation of the server-side module 401 can be described with reference to FIG. 5. The server-side module 401 receives an access request from the client-side module 102 (step 501, see also FIG. 2 step 202). This provides the server-side module with information on what data the client-side module is trying to access and as a result of this the server-side module retrieves data from the data source 402 (step 502). The amount of data retrieved may be all the data that the client-side server wished to access or may be a different (e.g. smaller) amount of data. The server-side module identifies a portion of data for provision to the client-side module in response to the access request (step 503). The size of the data portion identified may be fixed or variable as described below. Where the data portion is smaller in size than the amount of data that the client-side server wished to access, the server-side module inserts a marker for additional data into the data portion (step 504) and then provides the data portion including the marker to the client-side module (step 505).

As described above in relation to FIG. 2, the client-side module 102 may resolve a marker within a data portion it receives by accessing the data at the location identified in the marker (step 205). This results in the server-side module 401 receiving another access request (step 501) and the process (steps 501-505) is repeated.

In the embodiment described above, the server-side module identifies a portion of data for provision to the client-side module in response to the access request (in step 503). However, in another embodiment, the actual request coming from the client-side module (received in step 501) may have embedded in it details of what subset of data is to be retrieved, based on a previous marker inserted by the server-side module.

In an embodiment, the server-side module may be implemented as a webserver. The server-side module may be implemented as a custom implementation of ASP.NET IHttpModule and IHttpHandler interfaces. This implements a pluggable framework for handlers of requests from a client-side based on a custom URL scheme.

This process can be described with reference to an example where the data source comprises a large database of bug information (e.g. a SQL database). Although this database may not be in XML format, the server-side module converts some of the data in the database into an XML stream for presentation to the client-side server and a fragment of the database comprises:

```
 <Product Name="lrlOffice11">
 
        <Groups Name="DDS">
               <Application Name="Excel">
                       <Feature Name="Externals">
                              <SubFeature Name="Excel Dcube">
                                      <Bug ... Language="Spanish" />
                              </SubFeature>
                       <Feature Name="MapPoint DS">
                              <Bug Application="Excel"
                                     Feature="Externals"
                                     ID="3187"
                                     Title="XL: FRA: Externals: MapPoint DS:
                                     Missing checkbox in the Add-Ins dialog box"
                                     Opened_By="ITA-IE -jsmith@PARTNERS"
                                     Status="Closed"
                                     Priority="2"
                                     Language="Spanish" />
                       </Feature>
               </Application>
        </Groups>
 </Product>
```

The query received by the client-side module 102 from the client comprises an XPath query of the form:

```
 /Product[@Name='lrlOffice11'/Groups/Application[@Name='Excel']/Feature[@Na
 me='External']/Feature[@Name='MapPoint'/Bug[@Language='Spanish']
```

In a first iteration of the process (steps 501-505), the server-side module scans the database for elements named 'Groups' and returns a data portion containing information on each one it identifies:

```
 <Groups Name='DDS'>
        < MARKER
 REF='XYZ://PS?Product[@Name="lrloffice11"] /Groups[@Name="DDS"]/*'/>
 </Groups>
 <Groups Name='ACS-A'>
        < MARKER
 REF='XYZ://PS?Product[@Name="lrlOffice11"]/Groups[@Name='ACS-A']/*'/>
 </Groups>
```

This data portion contains two markers each containing a URI.

The next stage of the XPath query looks for child elements Application to find the one called Excel. Consequently, the client-side module will resolve each of the 'Groups' markers because the initial data portion did not include any information on Application child elements. In a second iteration of the process (steps 501-505) at the server-side client, the following data portion is provided to the client-side module:

```
 <Application Name='Access'>
        <MARKER REF='XYZ://PS?
 Product[@Name="lrlOffice11"]/Groups[@Name='DDS']/Application[@Name='Acce
 ss']/* />
 </Application>
 <Application Name='Excel'>
        <MARKER REF='XYZ://PS?
 Product[@Name="lrlOffice11"]/Groups[@Name='DDS']/Application[@Name='Excel
 ']/* />
 </Application>
```

The client-side module will then traverse to the children of the Excel application element to look for Feature elements with Name='External'. Again this requires a marker to be resolved and a new data portion will be retrieved via the server-side module. This process is then repeated as the client-side server steps through the query to identify the data sought by the client. By using this process, the query only touches a very small proportion of the total amount of data in the database. In the example given above, although the database may contain information on 40,000 bugs, the query only touches 75 elements: 13 Groups, 37 Applications, 1 5 Features, 3 Sub-Features and 6 bugs.

In identifying the data portion for provision to the client-side module (step 503), the server-side module determines where a marker should be inserted into the data. The markers may be inserted dynamically according to one or more criteria, for example:
- Hierarchy of the data: For example, the markers may be inserted at predetermined points in the data structure (e.g. at each level in the data or at alternate levels in the data).
- Size of data portion: For example, the data portions provided may be of fixed size. The size of data portion may be varied according to certain parameters, for example, connection bandwidth. In another example, a maximum size of data portion may be specified. This enables the size of the data portion to be optimised for the particular transmission characteristics between a client-side module and a server-side module.
- Location of data: For example, all the data from a single file may be provided and markers may be inserted to point to data stored in different files. This enables the multiple files to be presented and queried as if it comprises a single large file.
- Transmission time of data portion: For example, the server-side module may monitor the connection properties between the server-side module and the client-side module and select a data portion such that it can be transmitted within a fixed time period. This would result in larger data portions being sent over larger bandwidth connections and smaller data portions being sent over lower bandwidth connections. This enables the transmission of the data portion to be optimised dependent on the connection available. This therefore eliminates delays which might otherwise be experienced in trying to send large data portions over a poor link whilst also enabling the benefits of good links to be exploited.
- Input received from the client.

Although the above description has referred to data sources such as file structures, XML files and databases, all of which have an inherently hierarchical data structure, the systems and methods described above may also be used for non-hierarchical data, for example a streaming media file. The markers described above point to data which is positioned lower in the data structure hierarchy. However, the markers may be used to point to any data, including data which is located at the same level or above it in a hierarchical structure. For example, a marker may be inserted in data comprising a portion of a streaming media file which may point to any position within the same media file or a different file (e.g. to multiple alternative streaming media files) and then the markers may be substituted with the data they represent based on interaction from a user.

There are many applications where the methods and systems described above may be used to query and retrieve data. For example, querying a file structure, including the content of the files stored therein and meta data for the files, querying large databases or querying collections of files and any combination of the above, in any form nested as many layers as required. The methods and systems described enable the implementation of a 'federated'/'virtual' data 'space'/base. Any system that exposes data through an API, be it via HTTP or custom APls can be exposed and integrated into a virtual data space using the methods and systems described above - only requirement is that markers can be resolved into a navigational interface by e.g. a custom XmlResolver, or via a web server/service etc. The methods and systems described above may also be used to enable the data retrieval implementation of a system based on the co-pending European Patent Application, application number 06270038.0, filed 6 April 2006 and entitled 'Modelling data from disparate data sources'.

Although the present examples are described and illustrated herein as being implemented using XML and XPathNavigator from the .NET Framework, this is by way of example only. As those skilled in the art will appreciate, the present examples are suitable for application in a variety of different types of languages and data description/modelling techniques.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Any range or device value given herein may be extended or altered without losing the effect sought, as will be apparent to the skilled person.

The steps of the methods described herein may be carried out in any suitable order, or simultaneously where appropriate. It will be understood that the above description of a preferred embodiment is given by way of example only and that various modifications may be made by those skilled in the art.

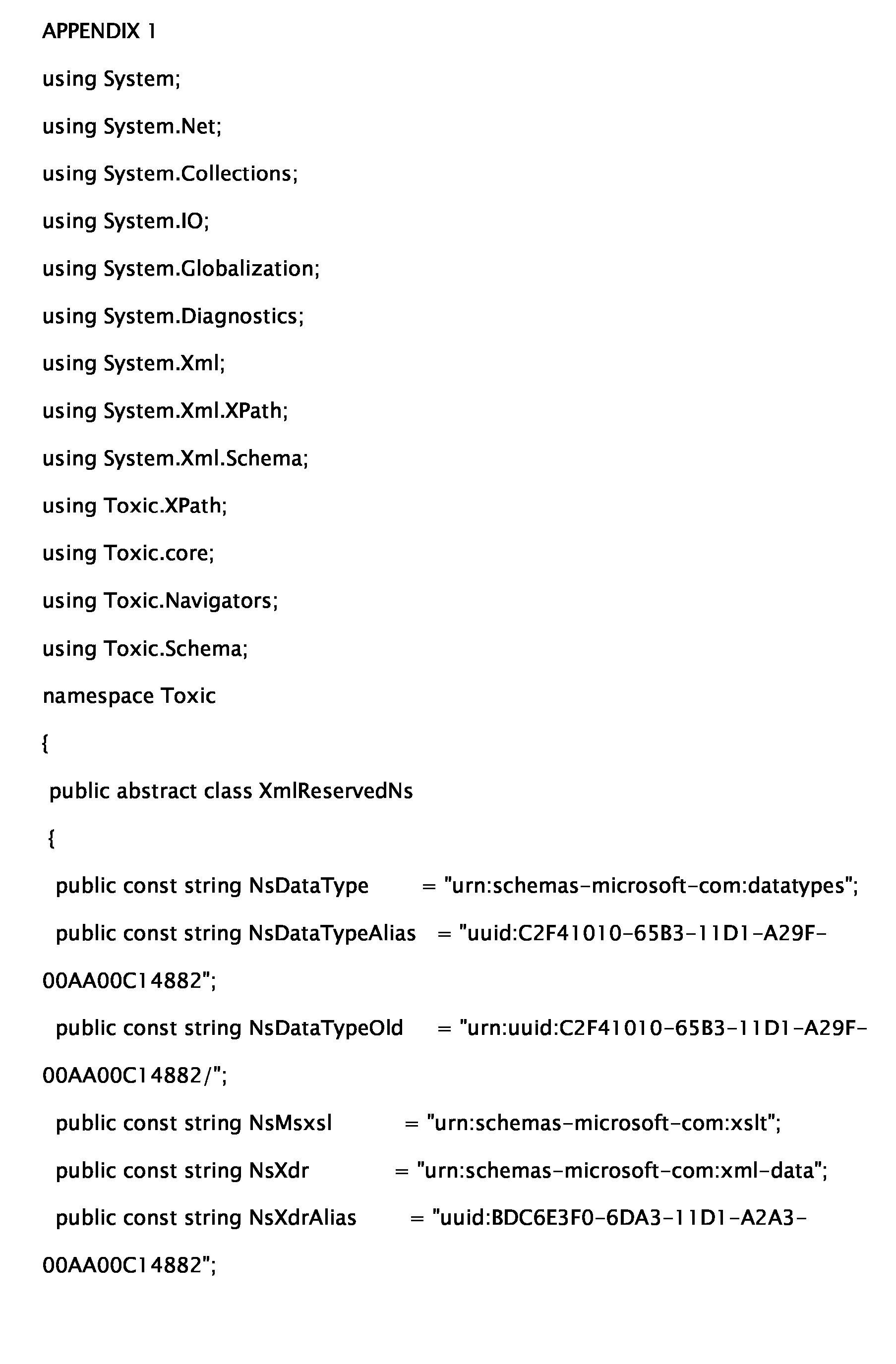

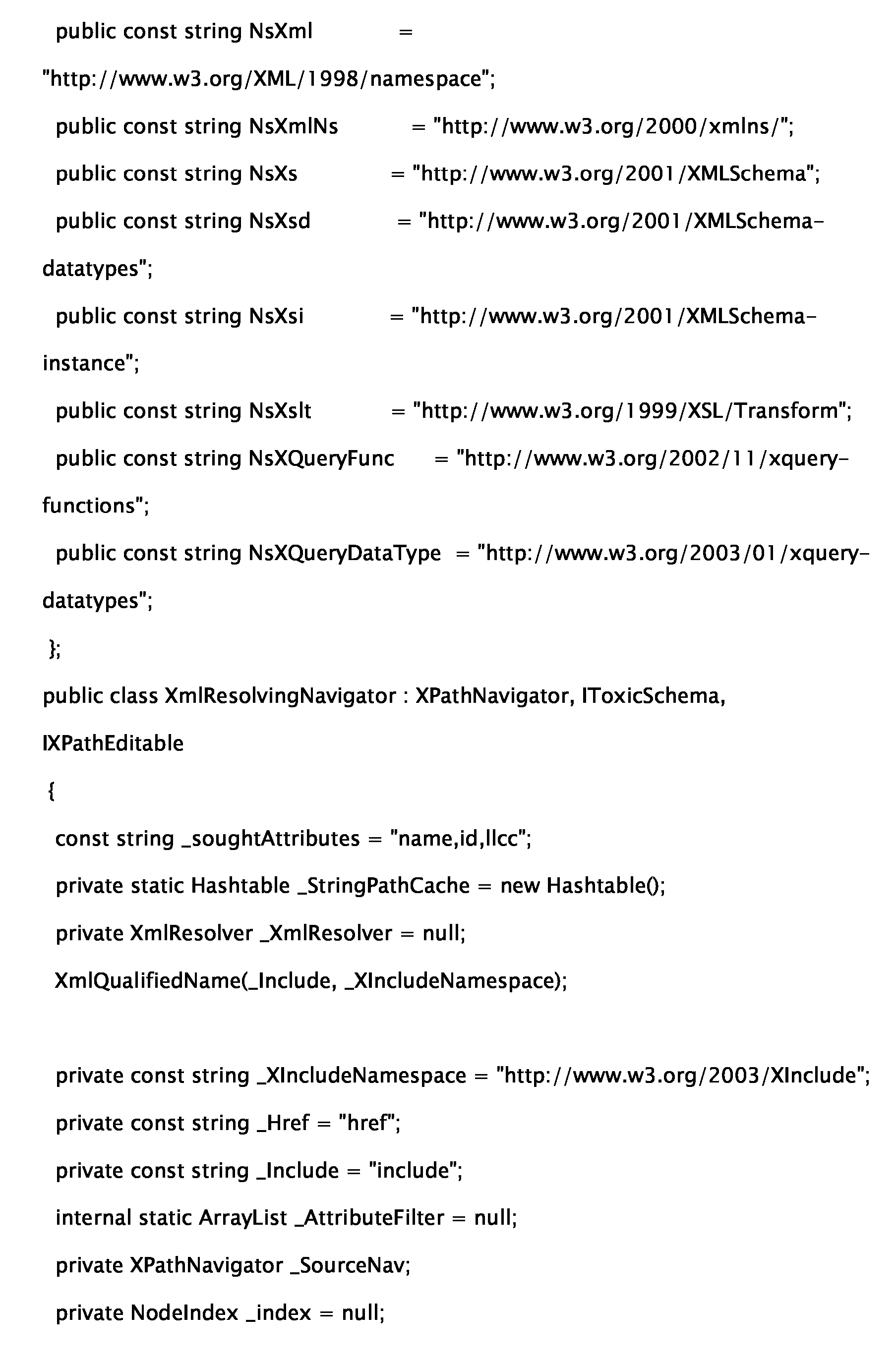

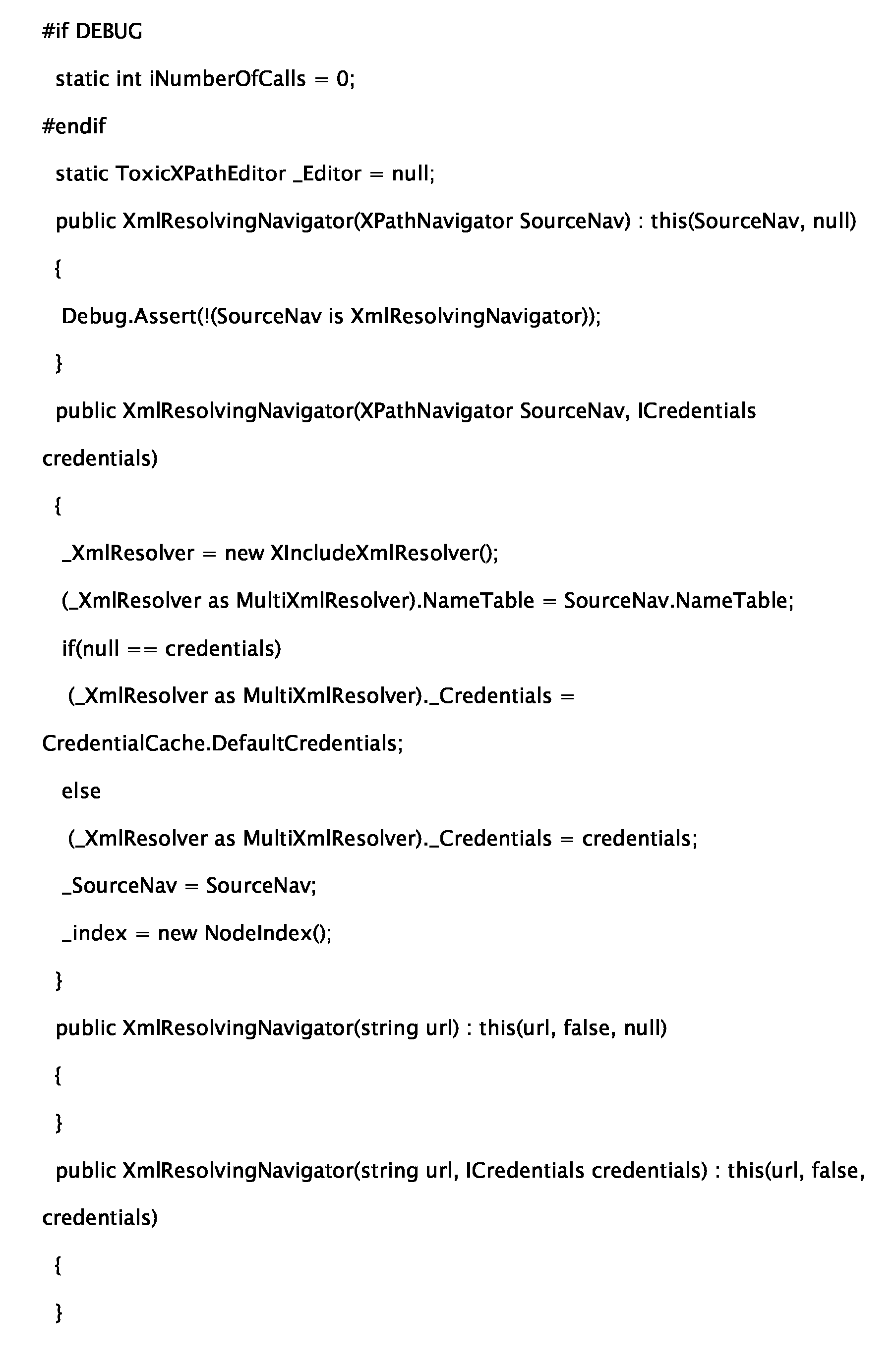

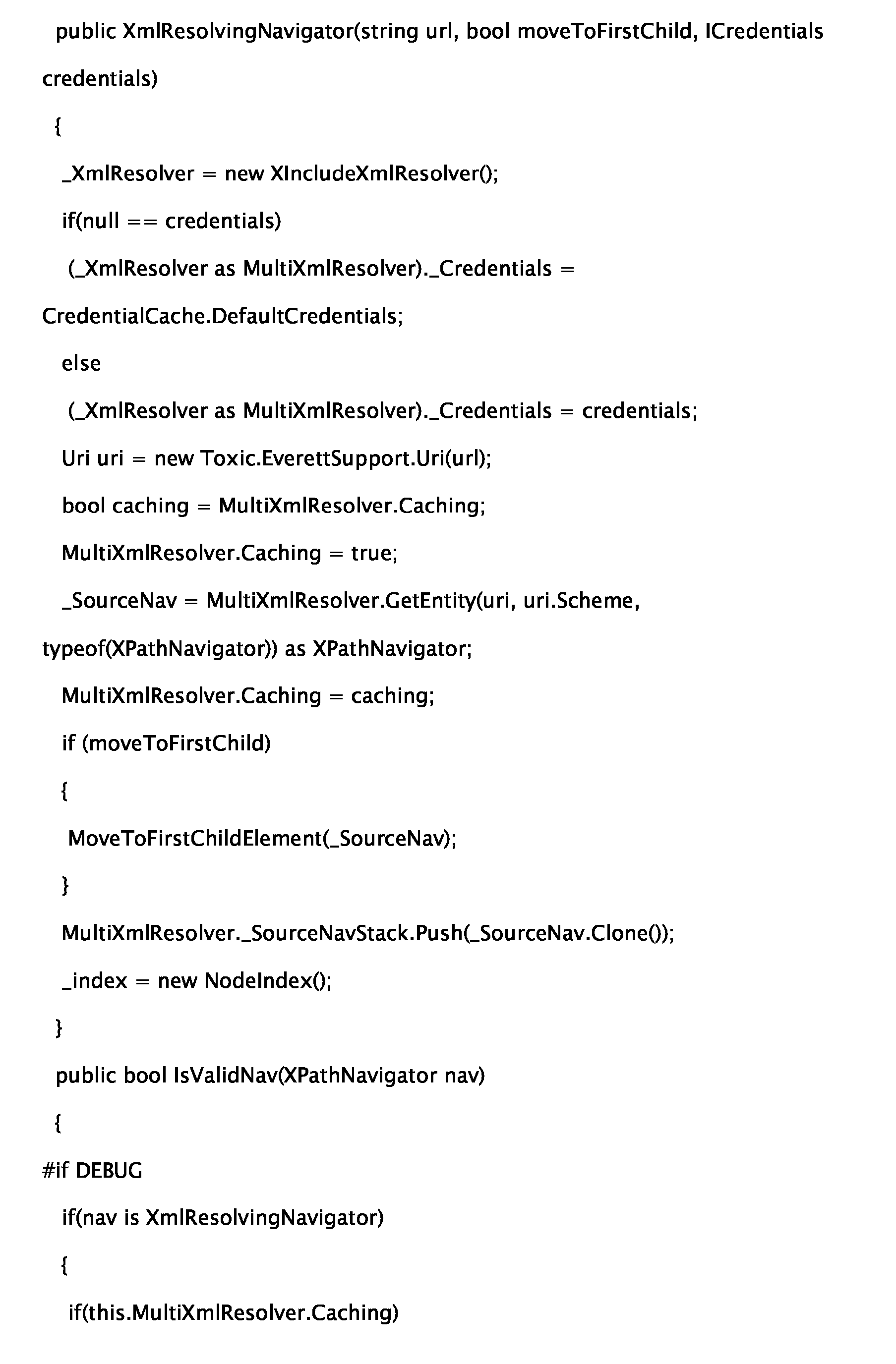

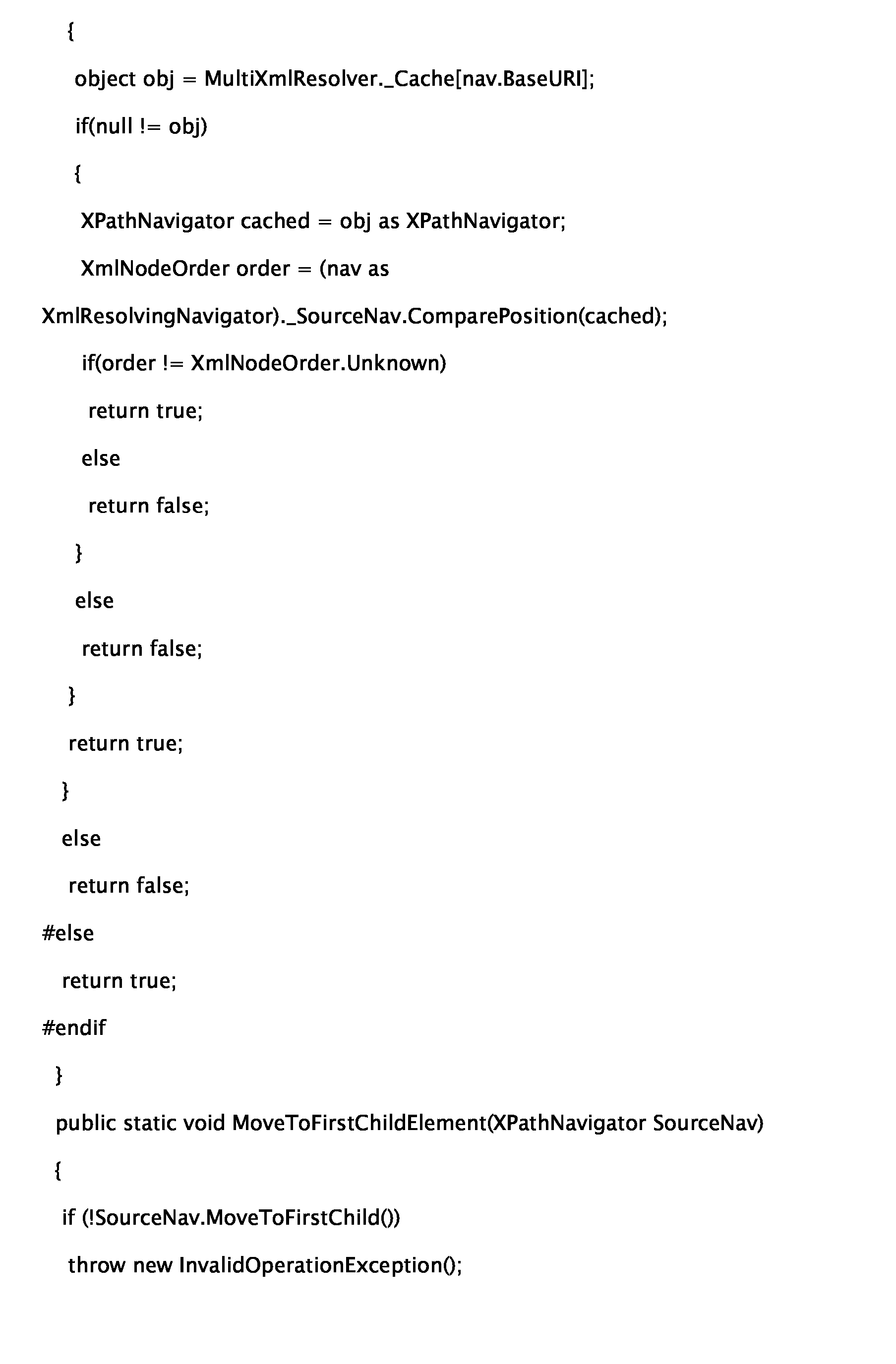

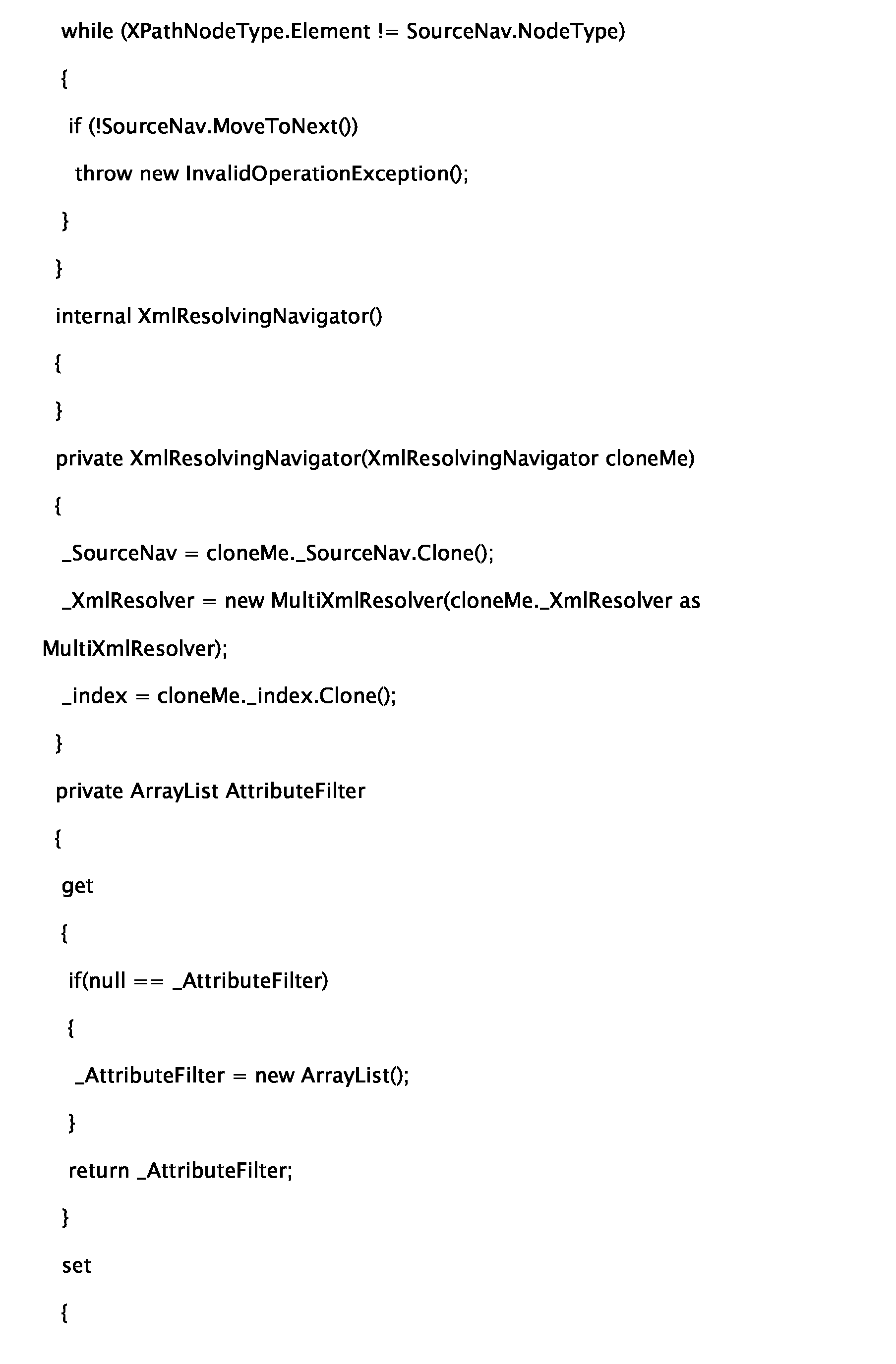

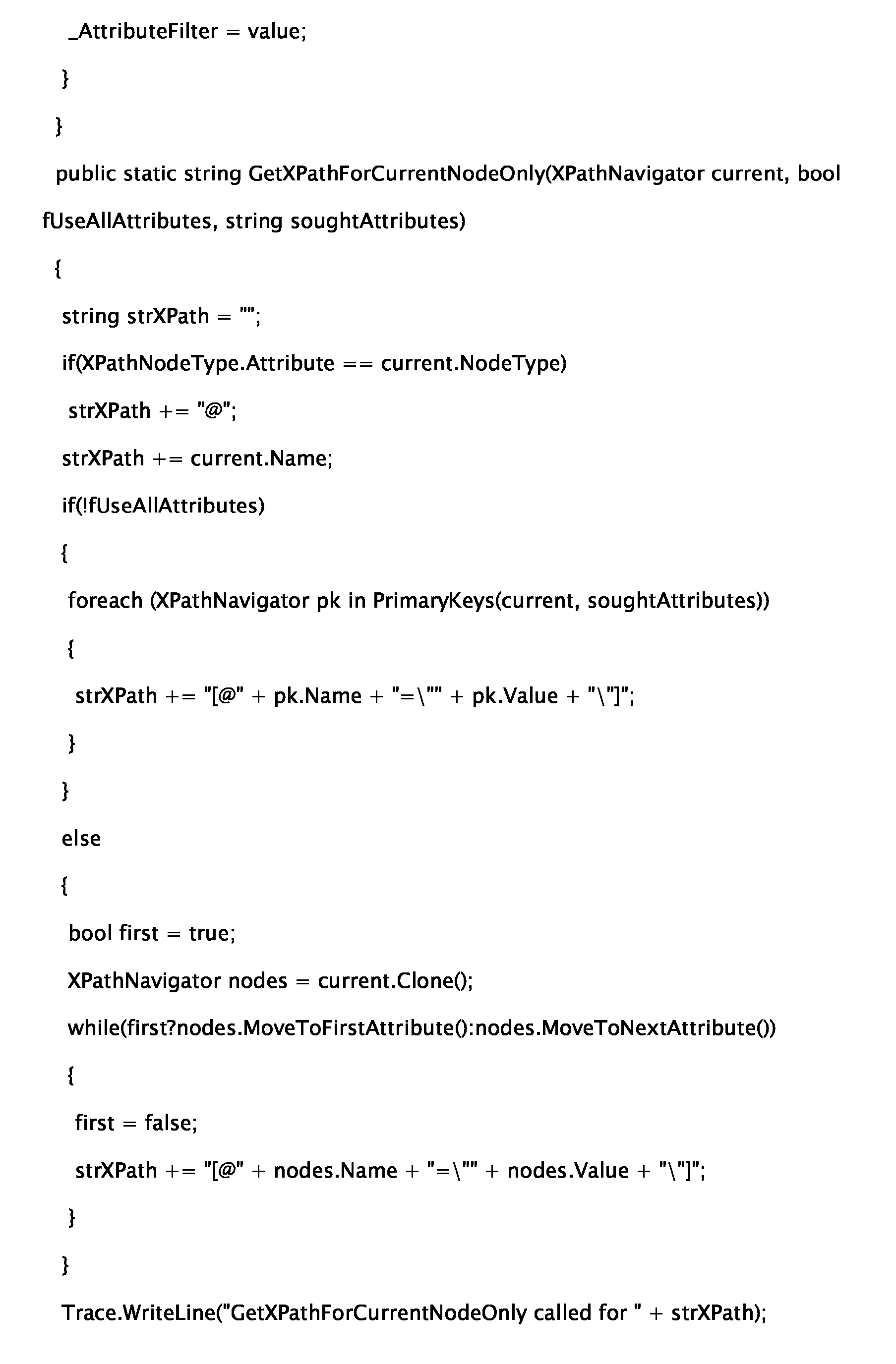

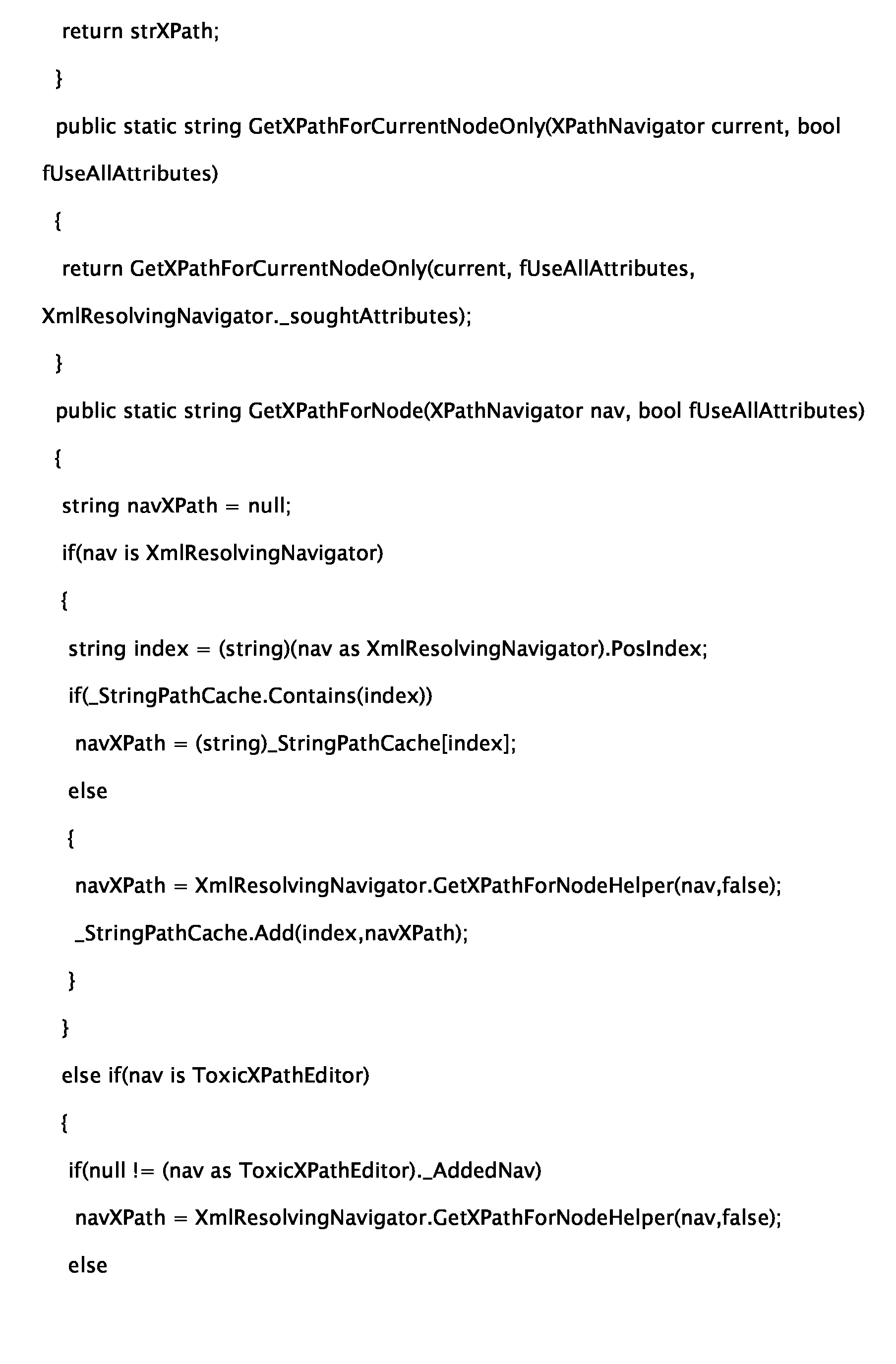

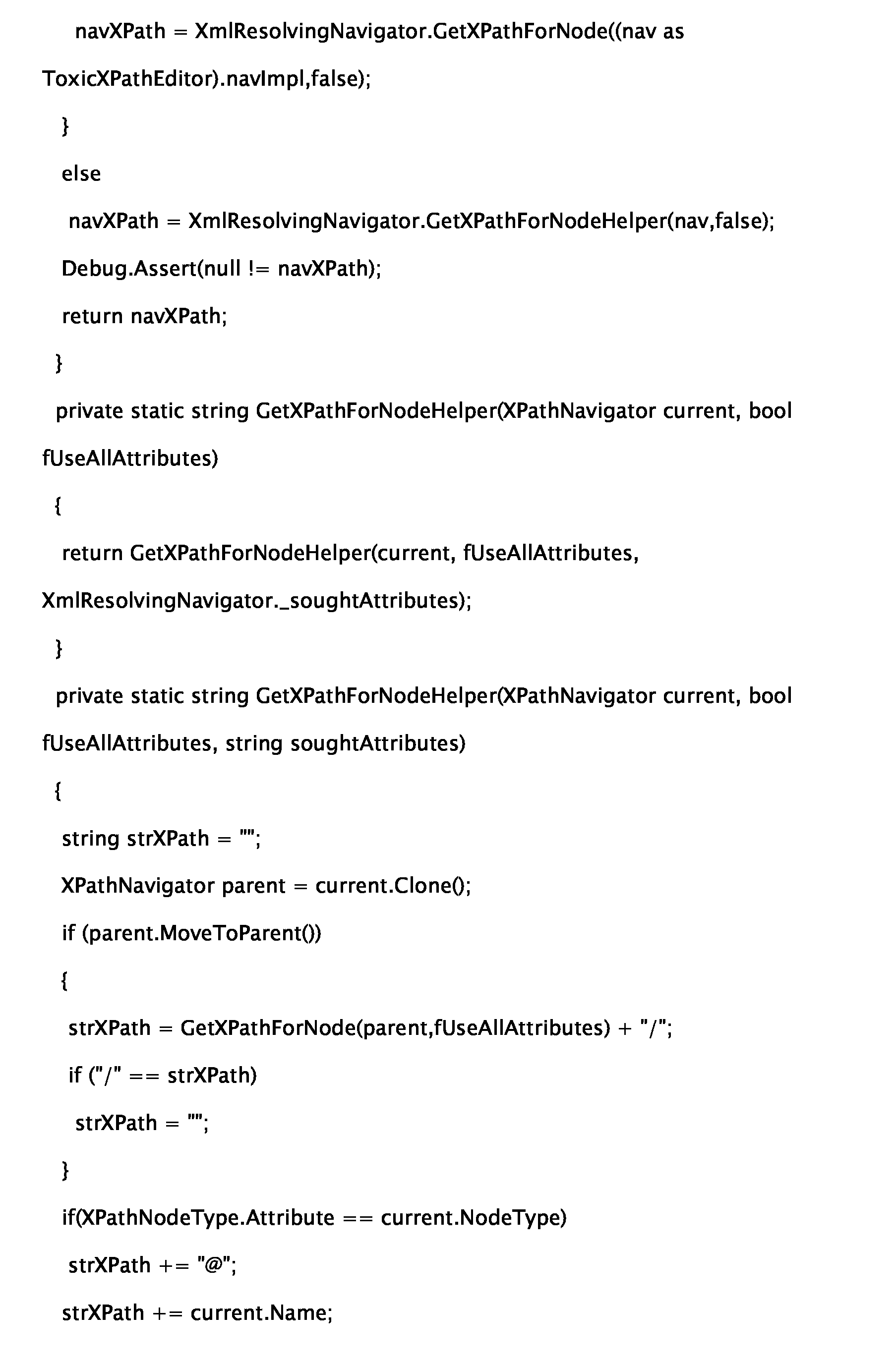

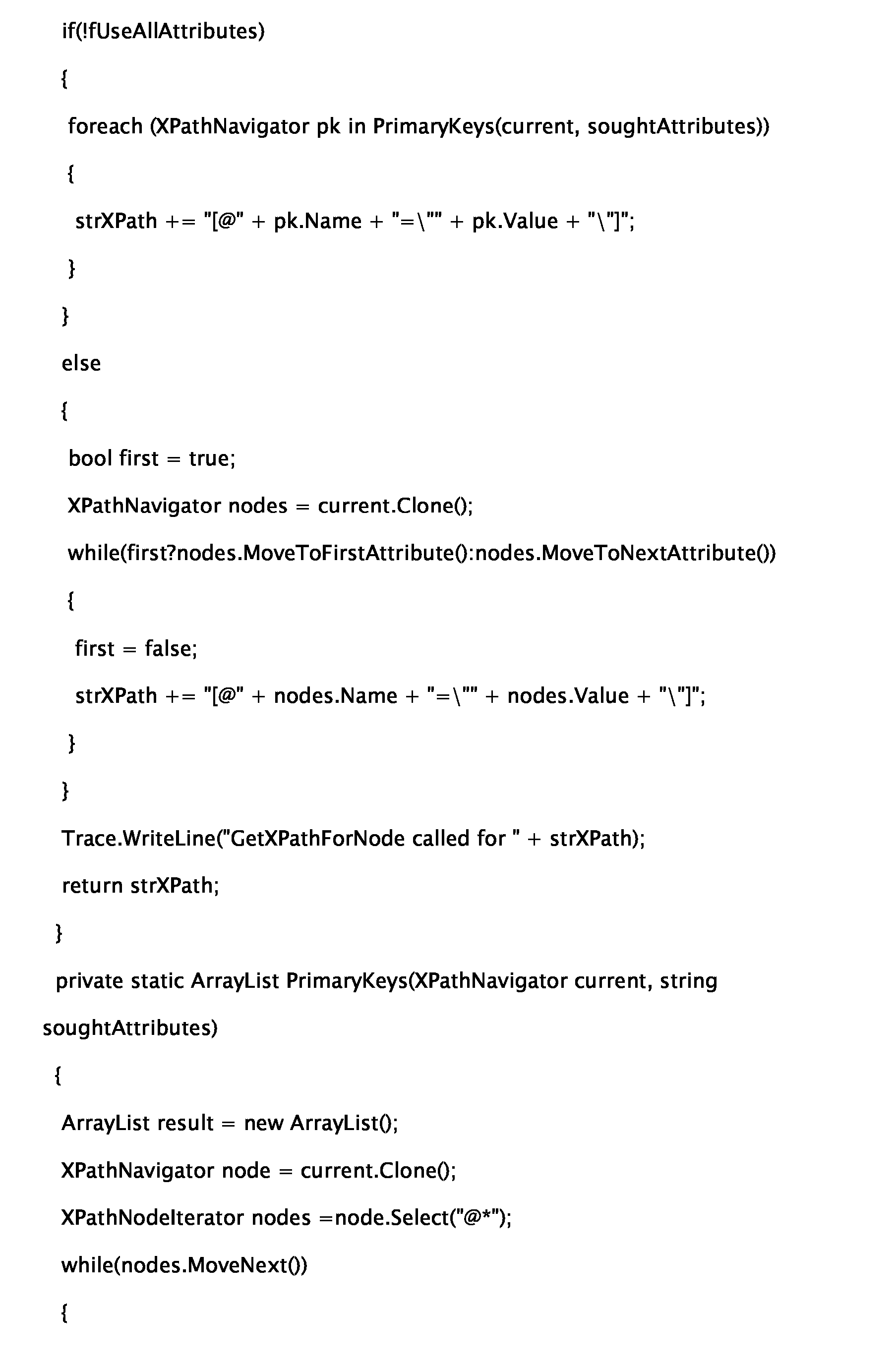

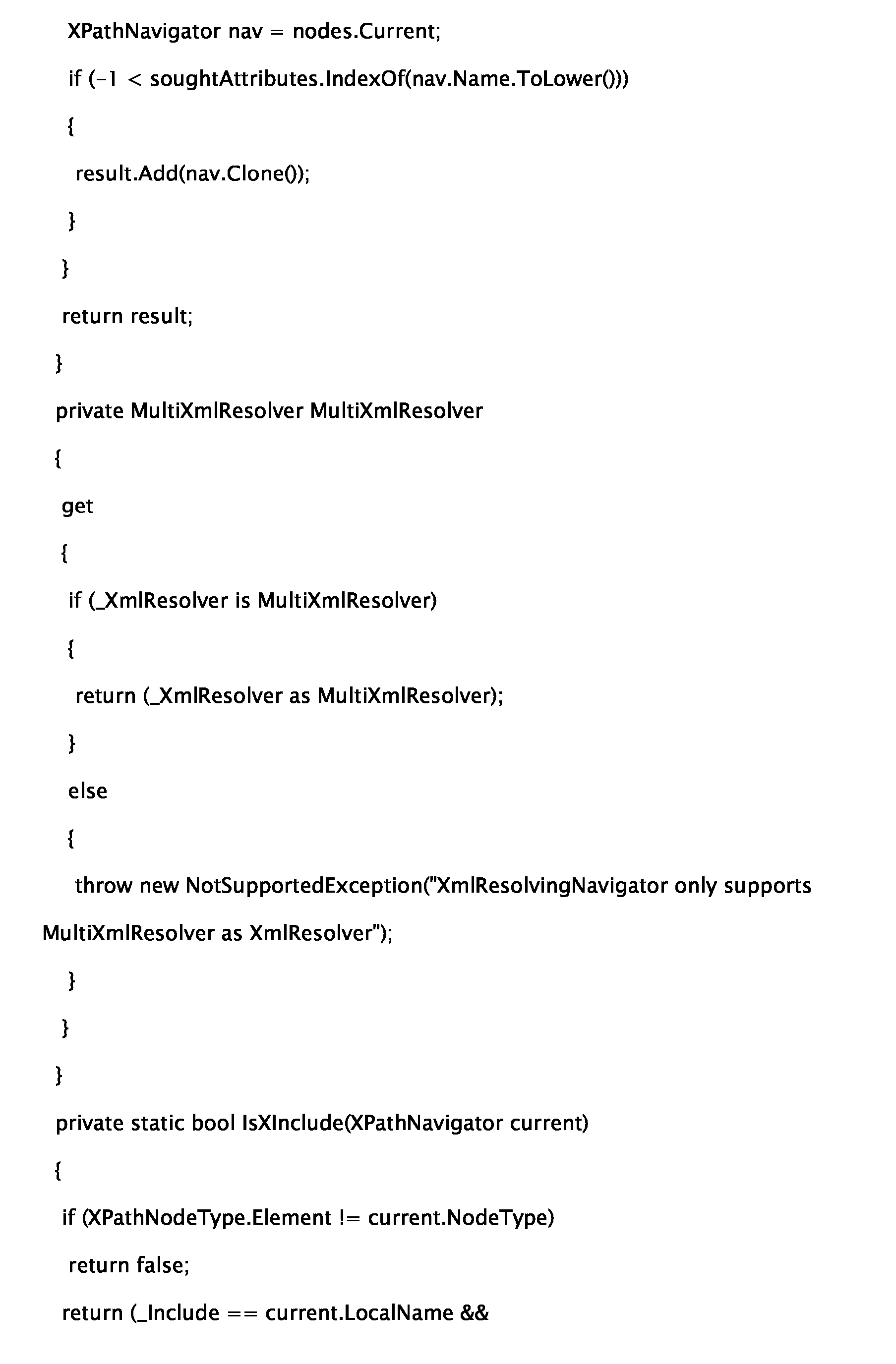

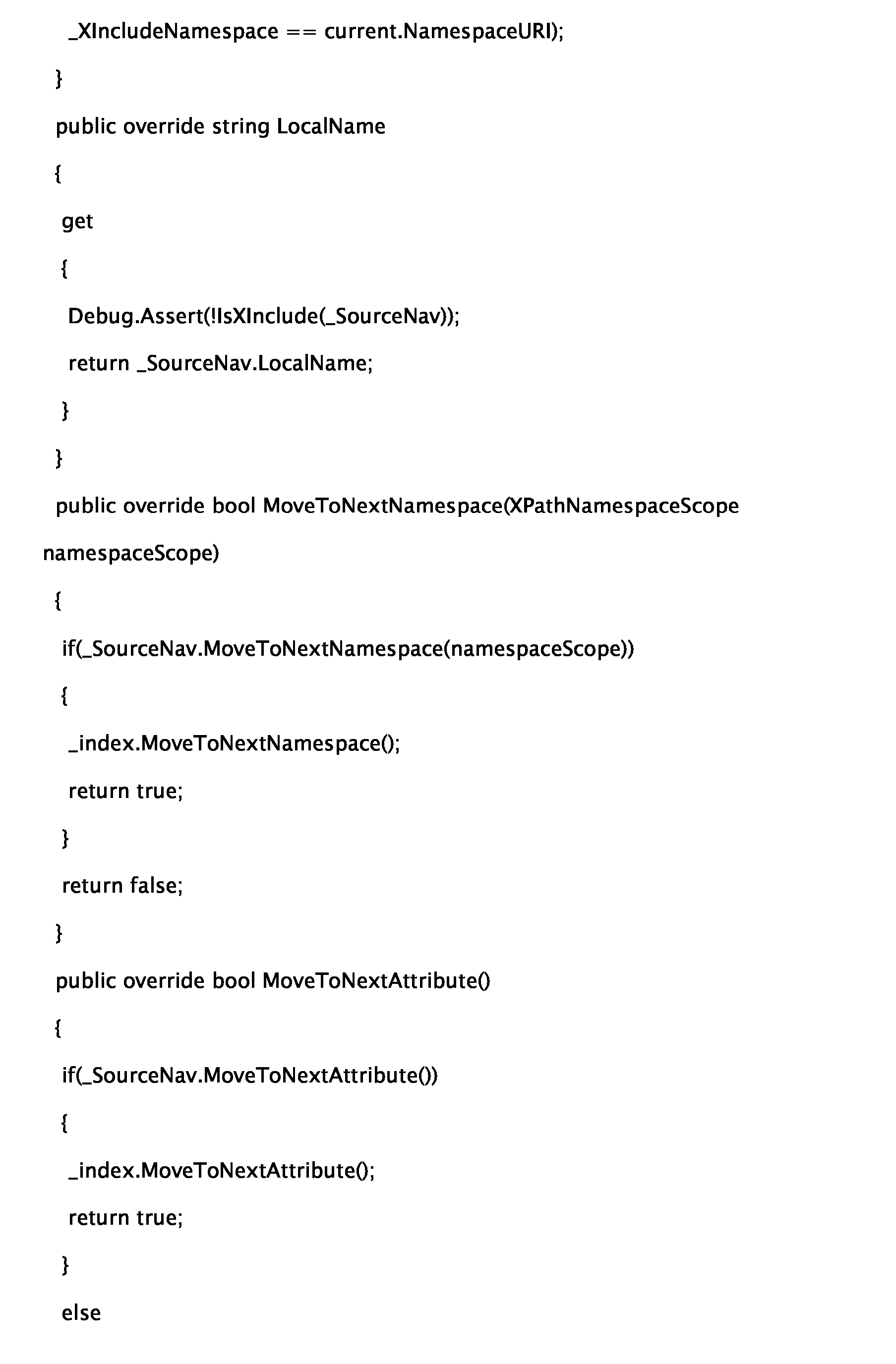

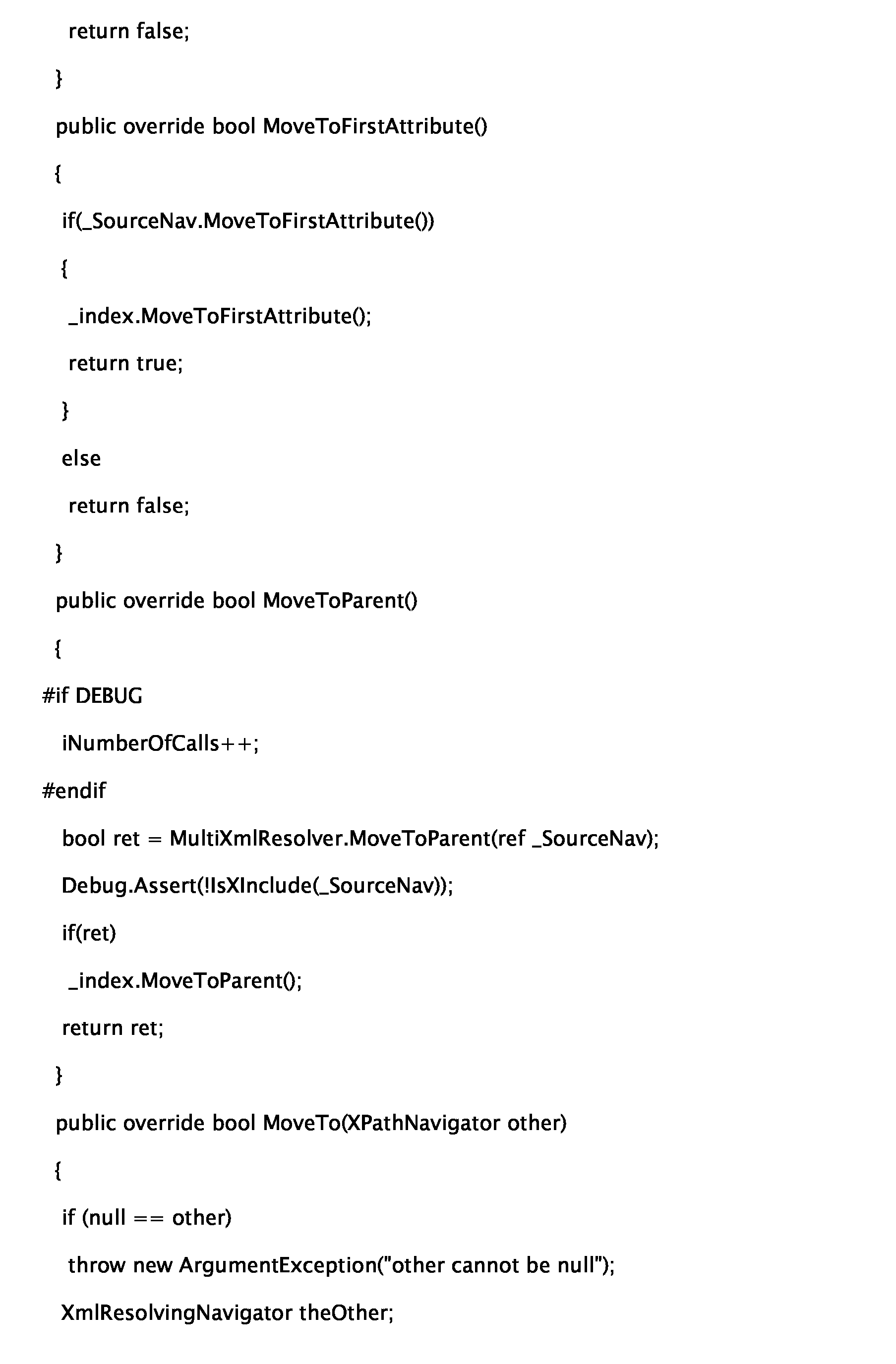

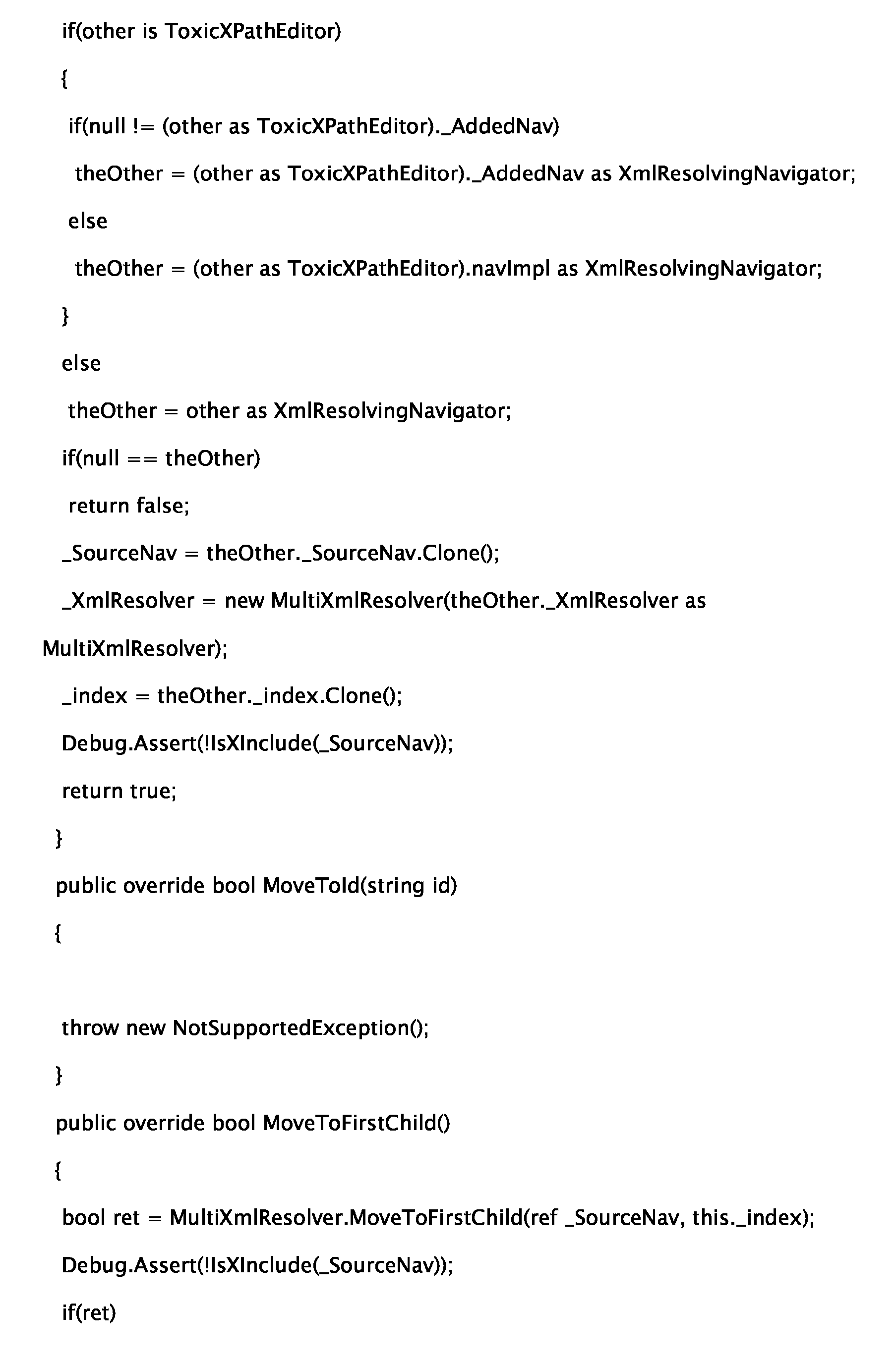

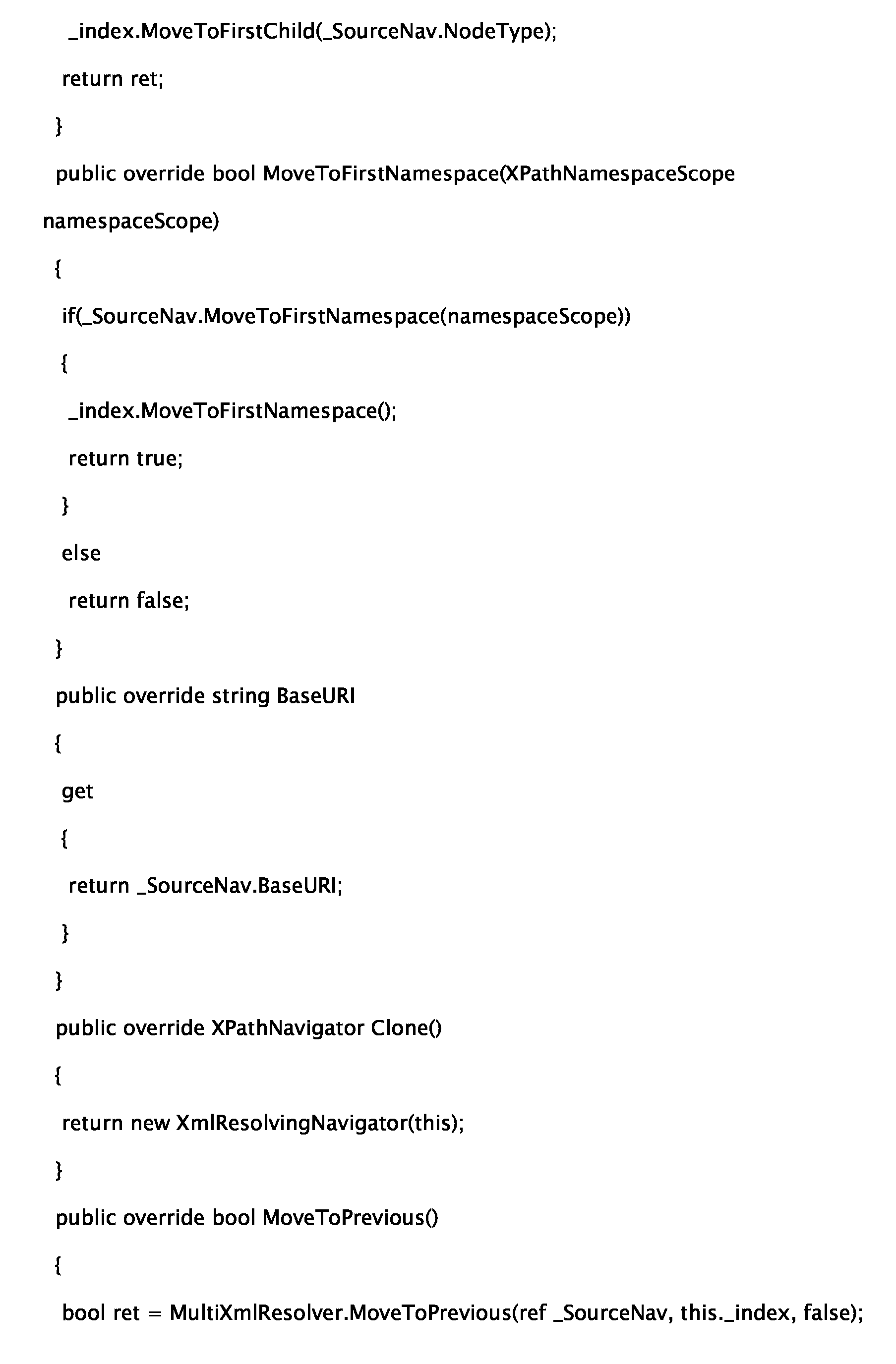

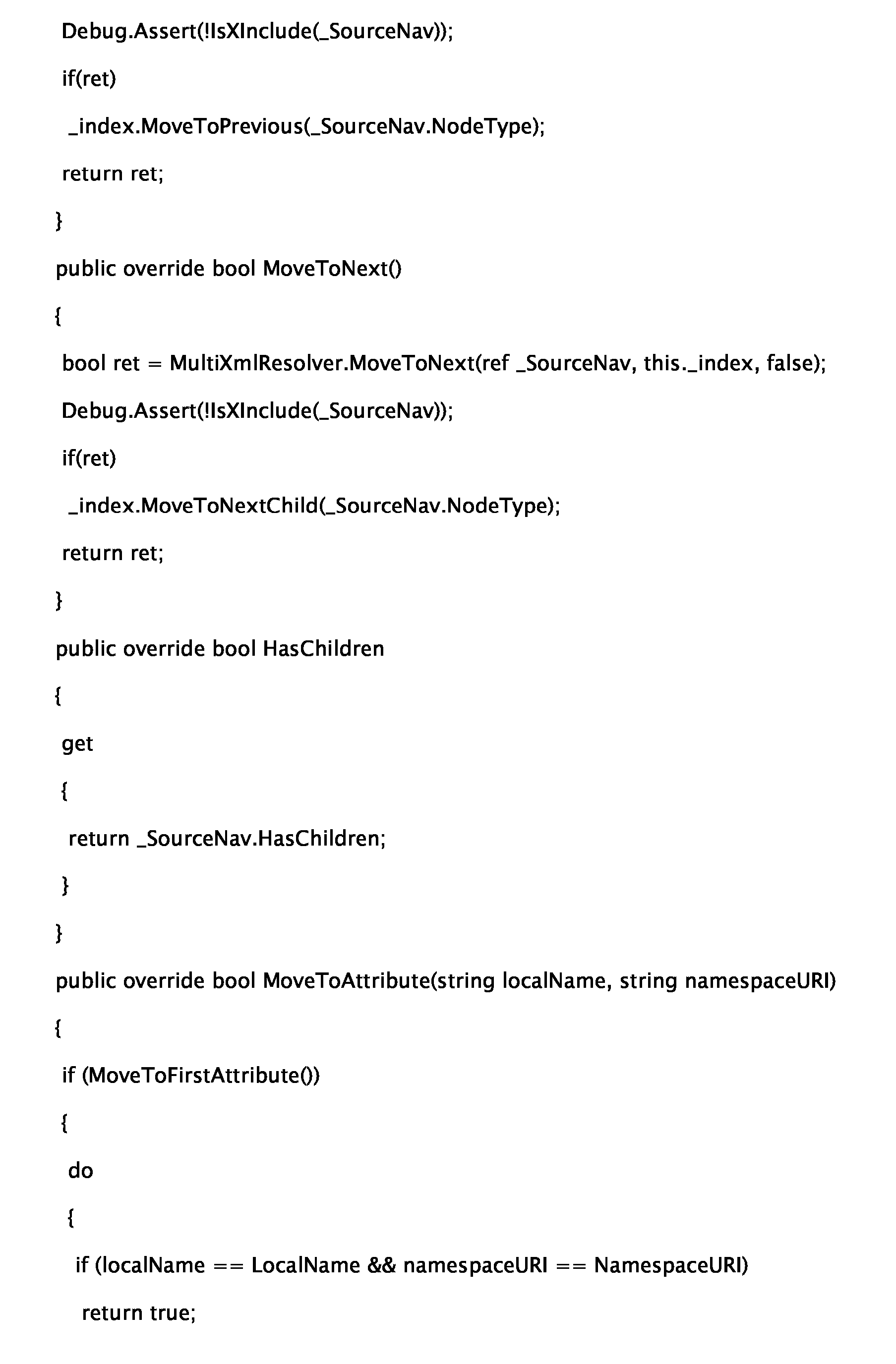

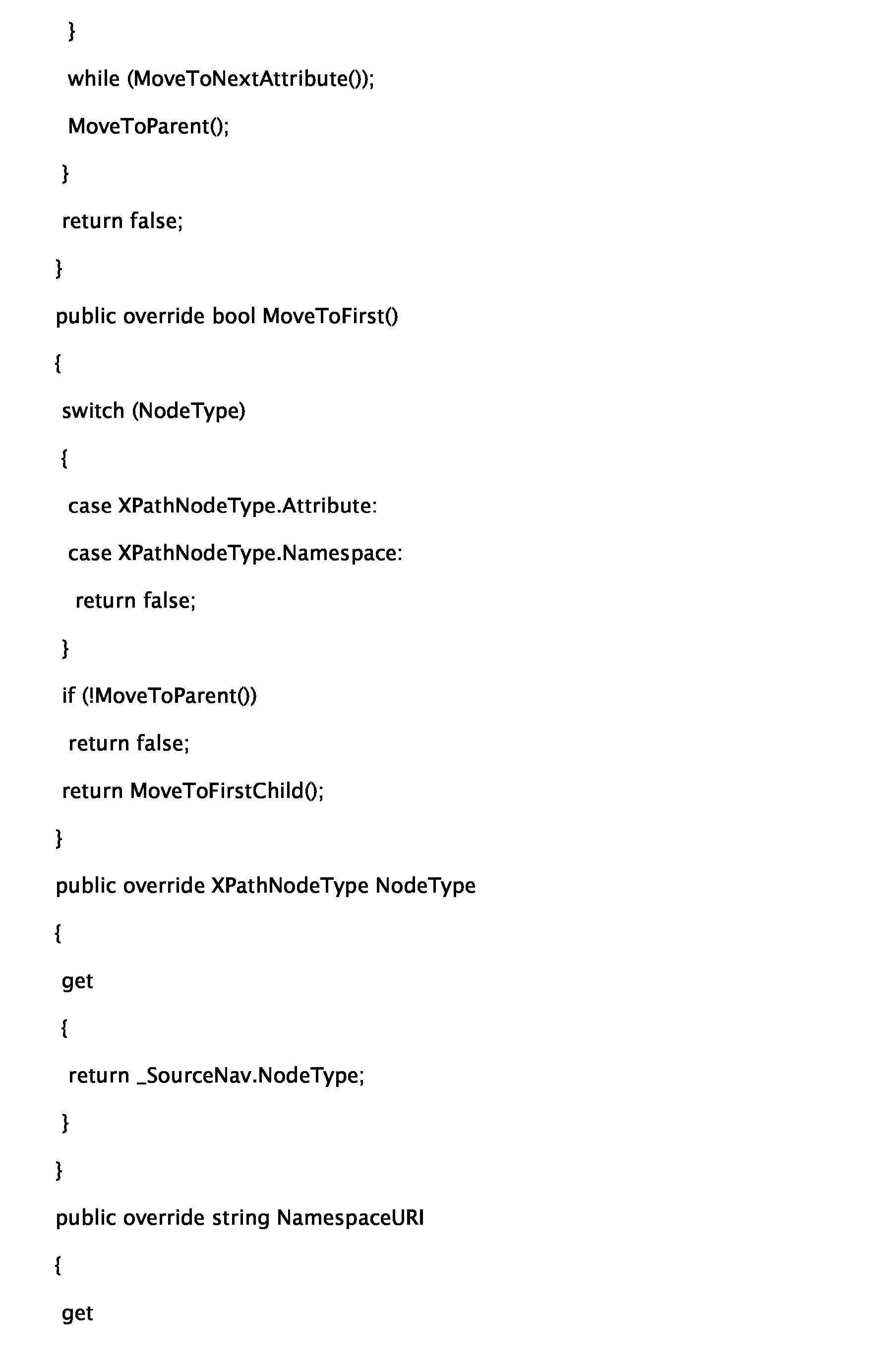

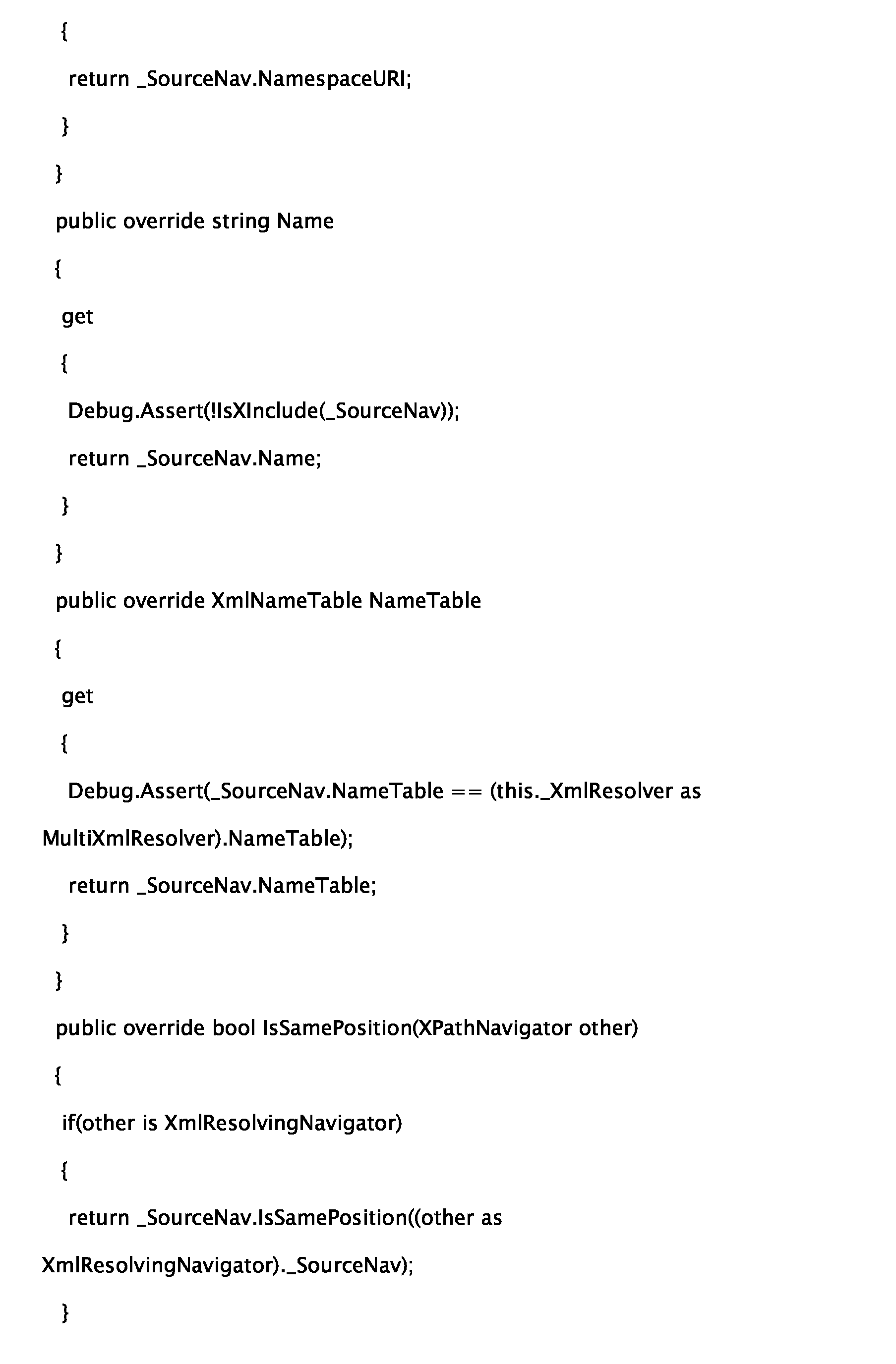

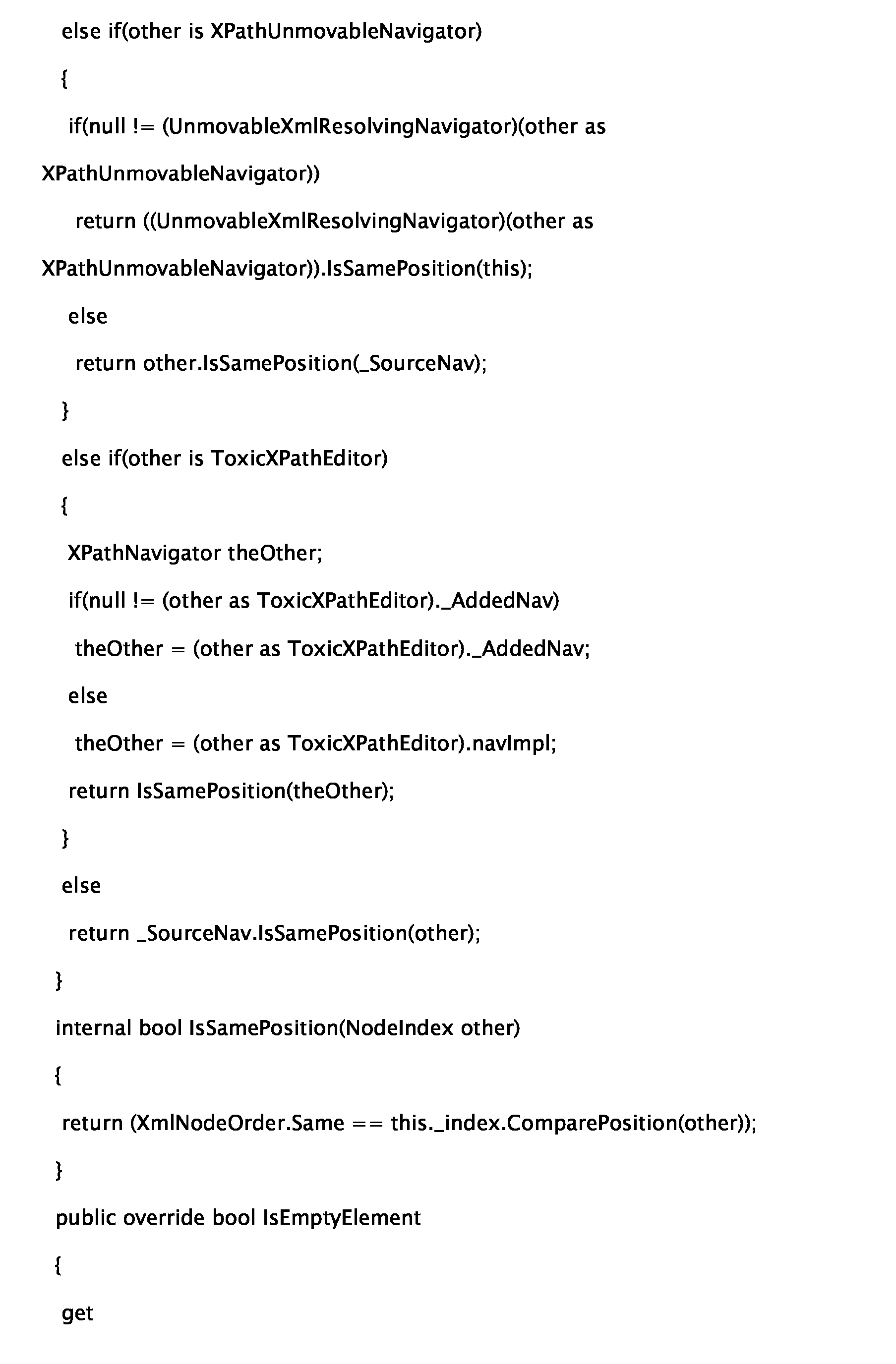

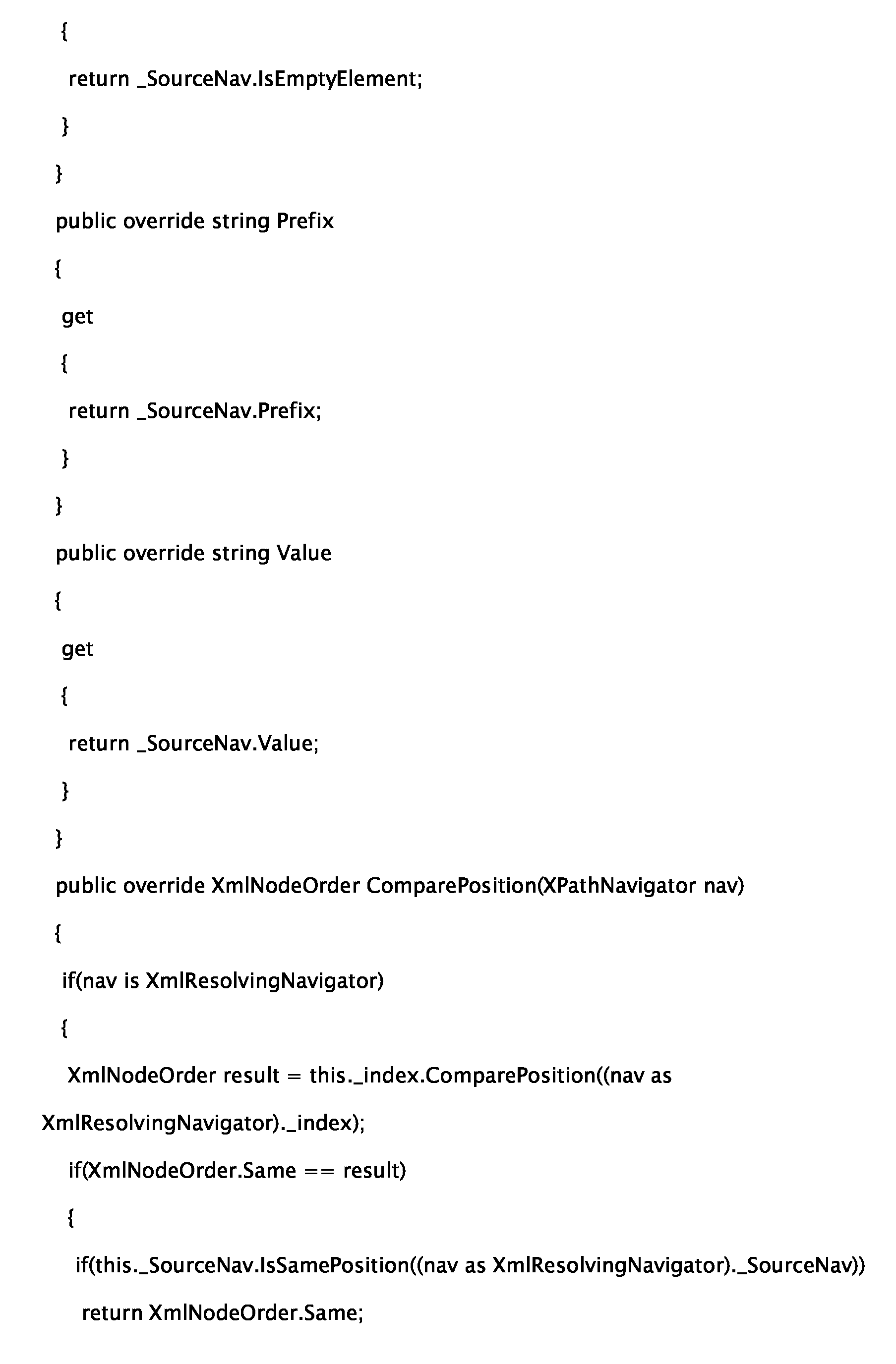

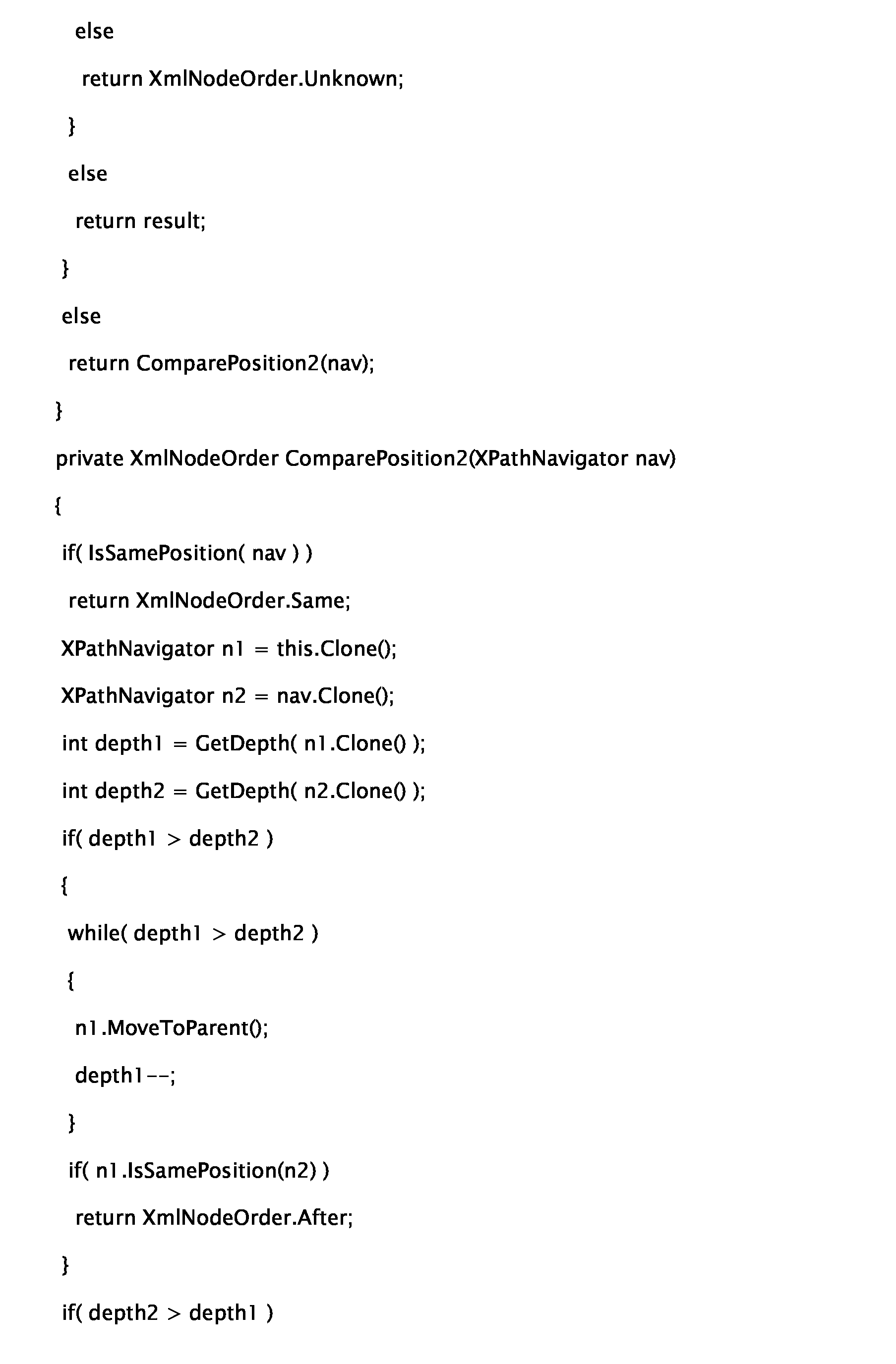

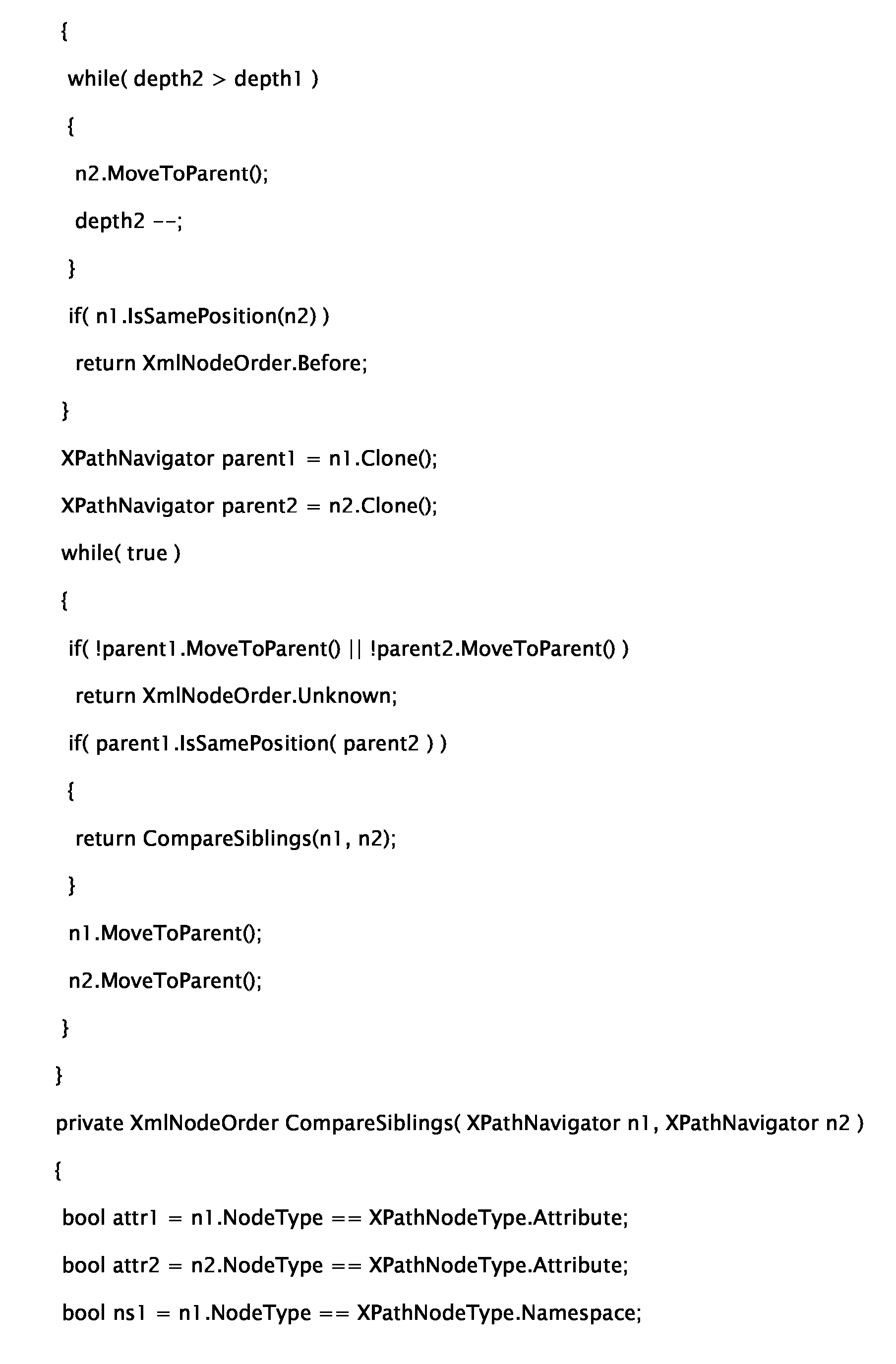

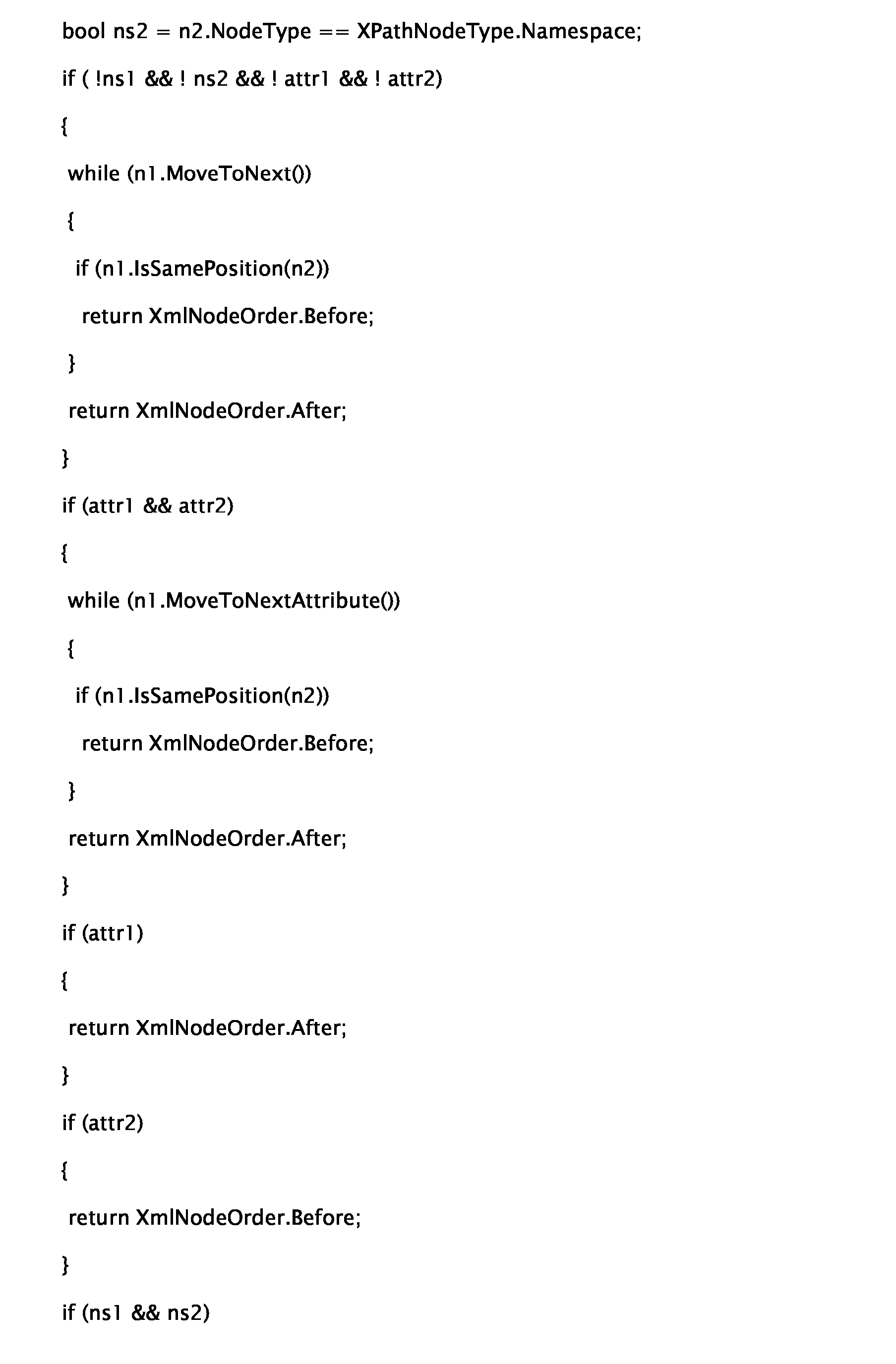

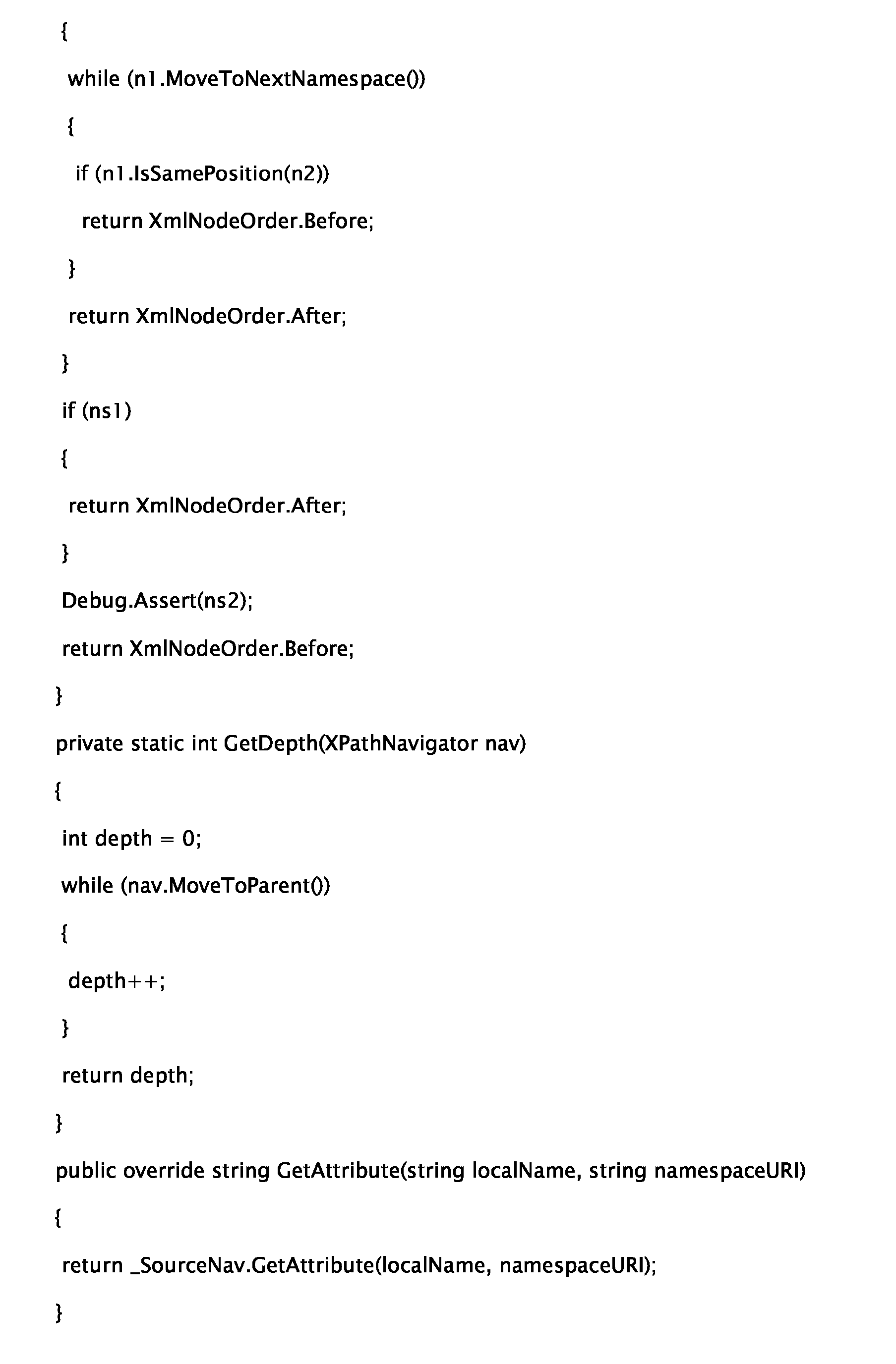

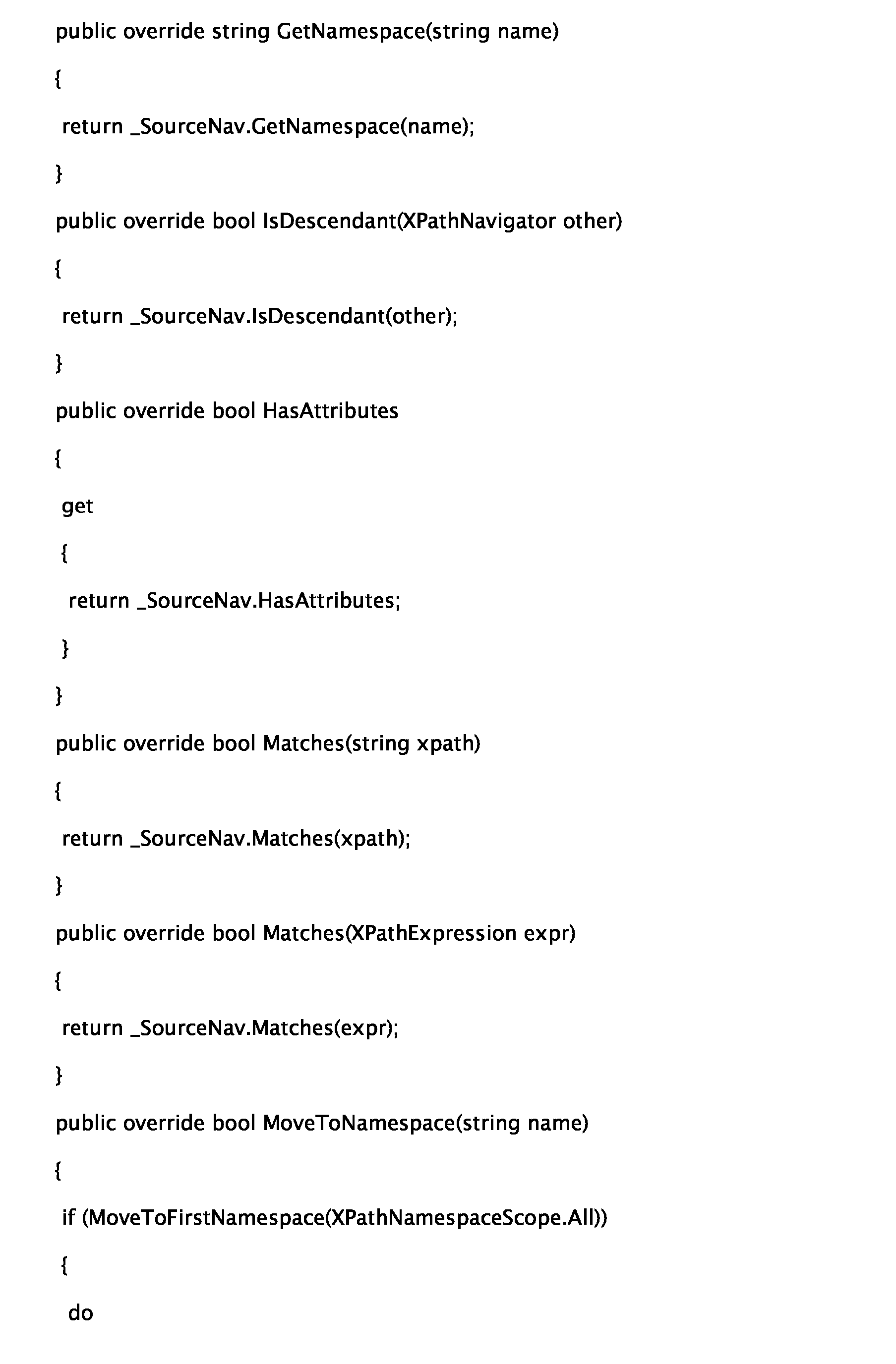

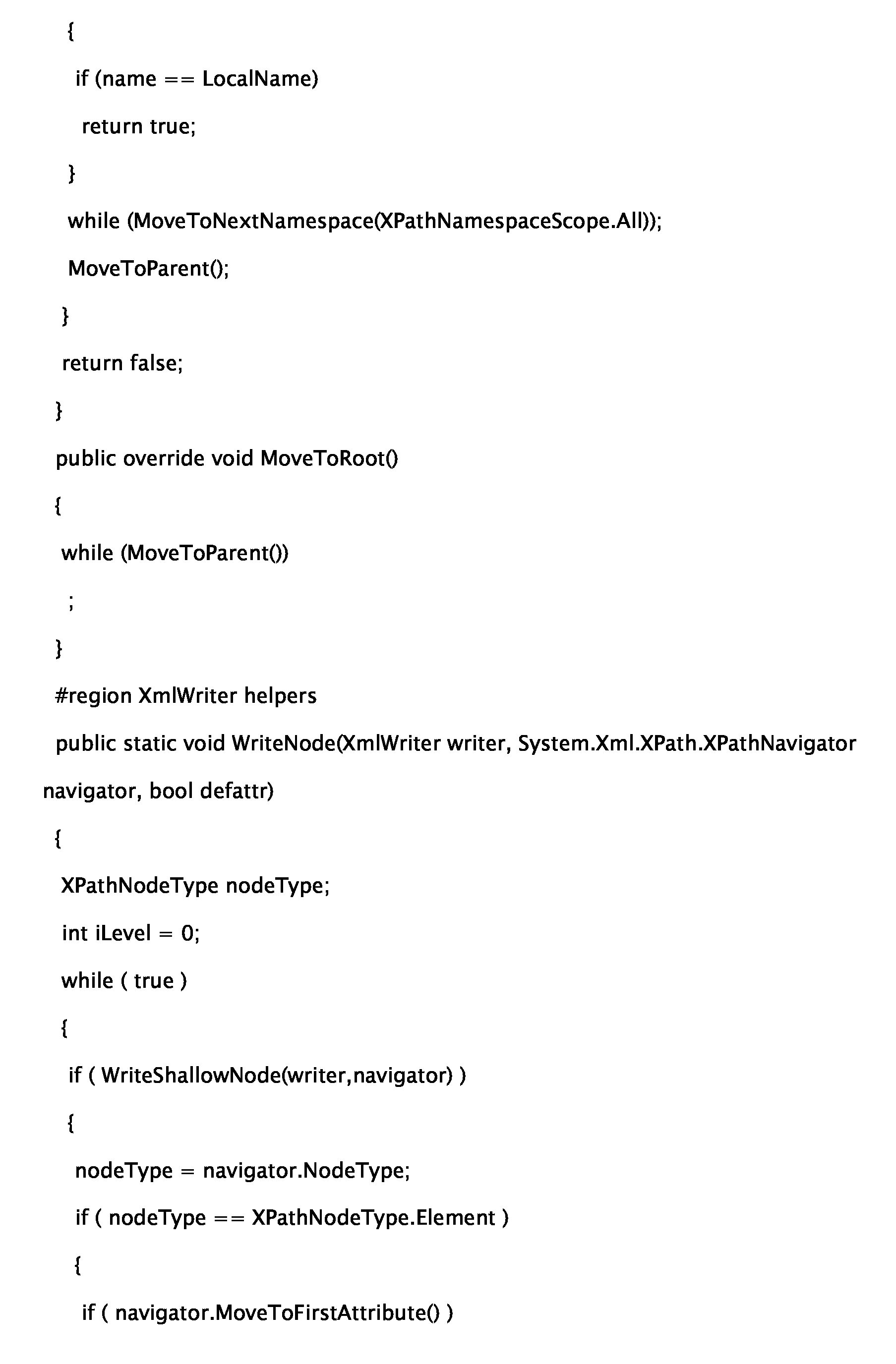

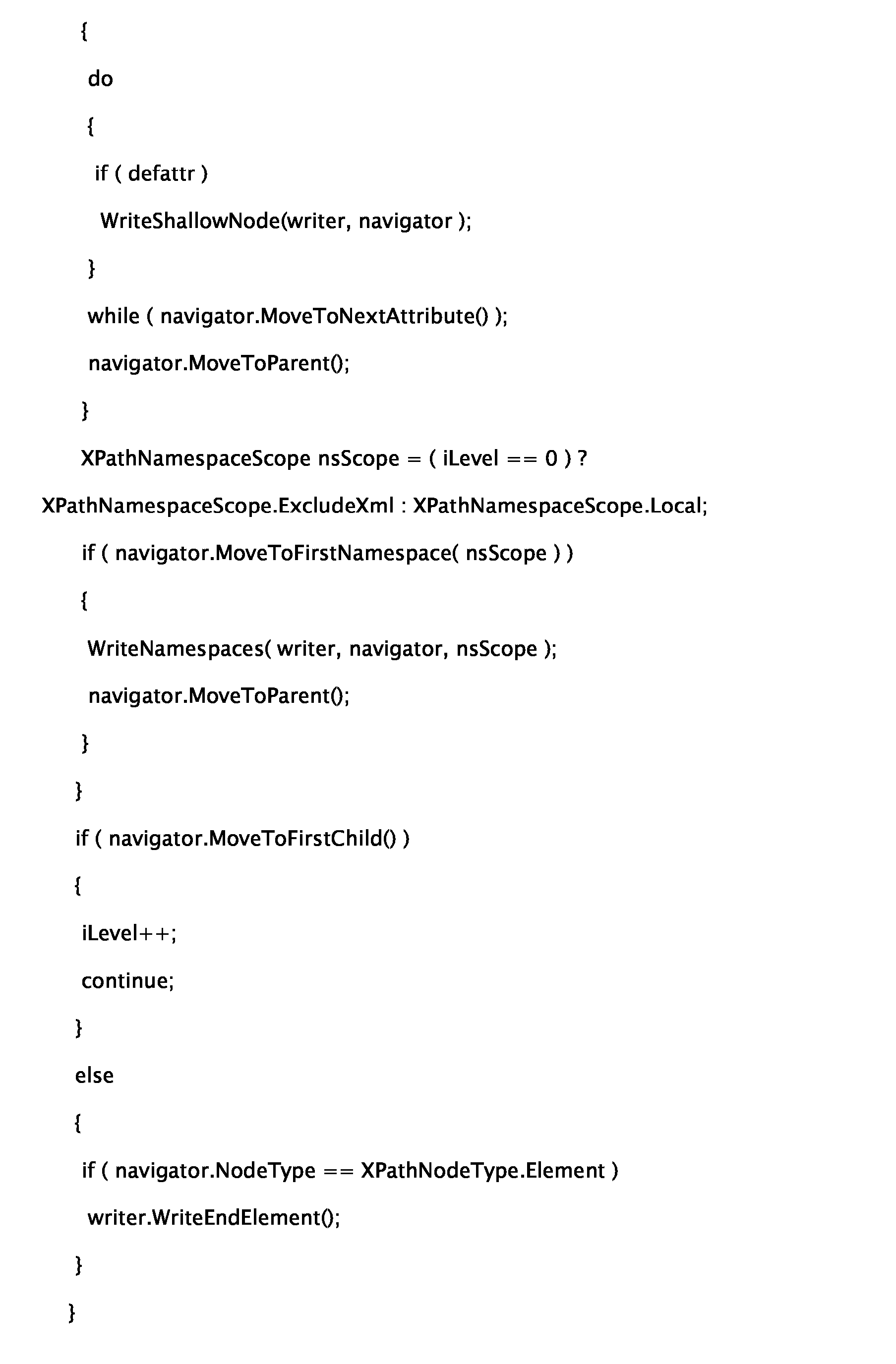

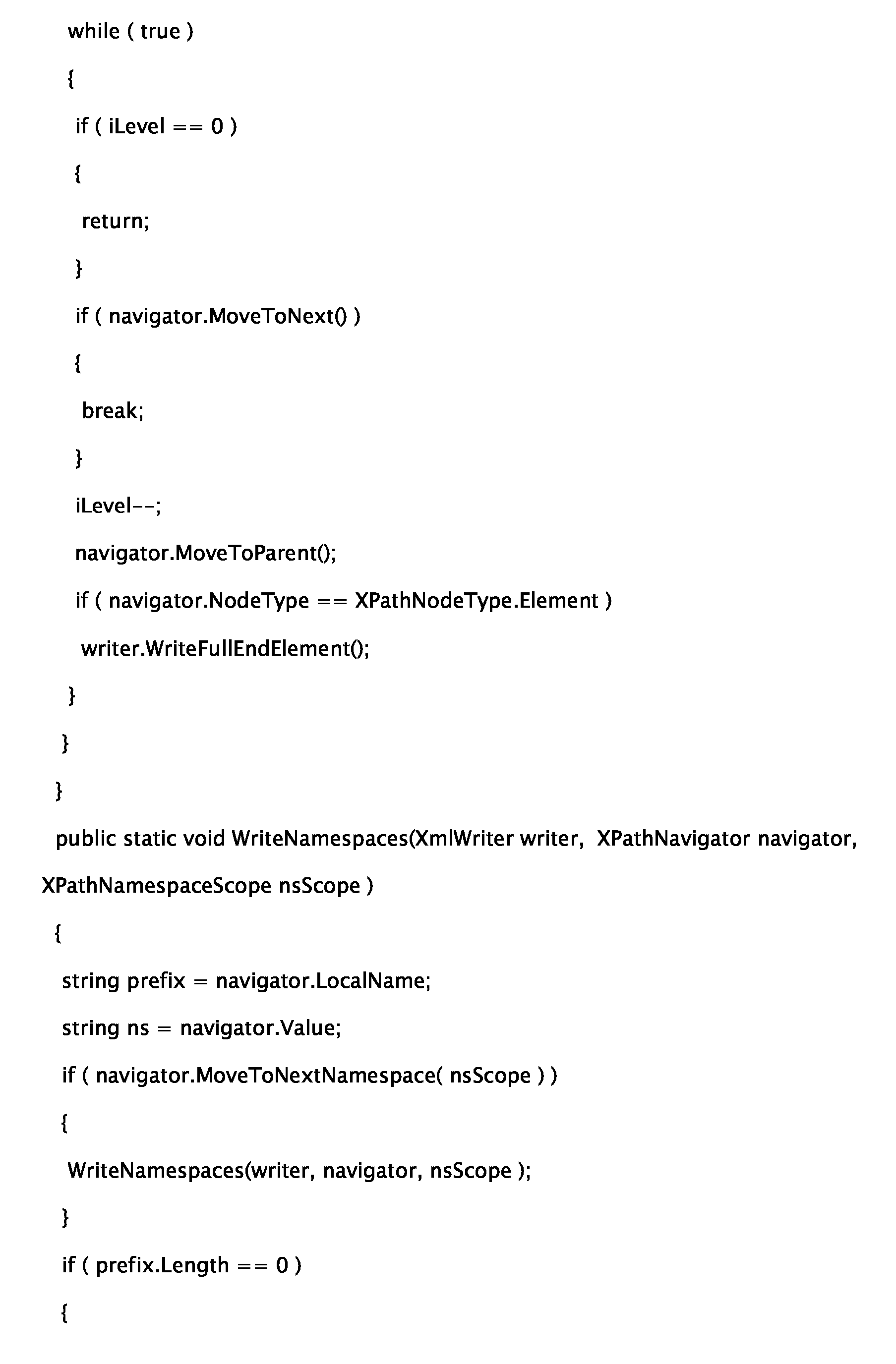

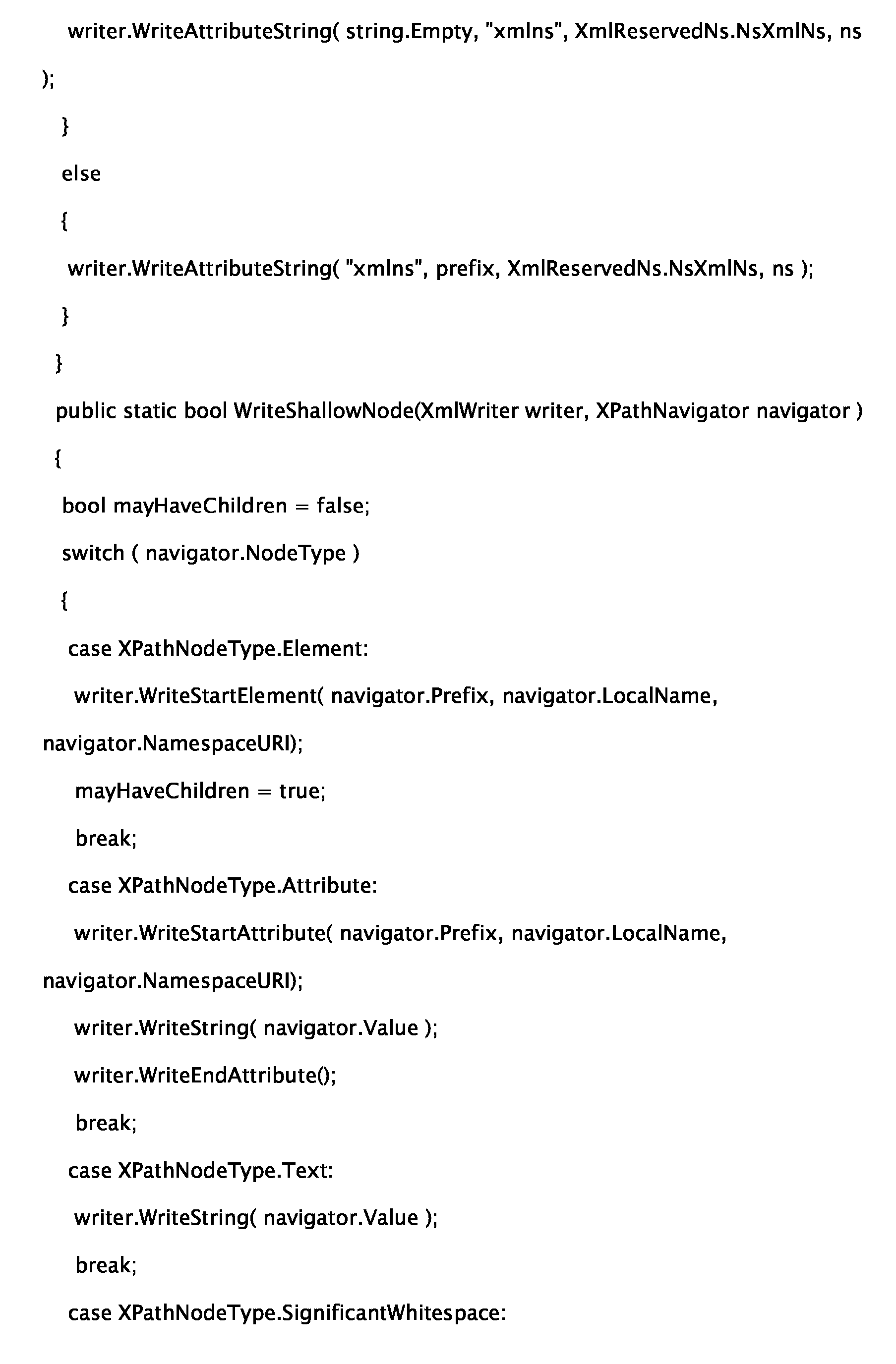

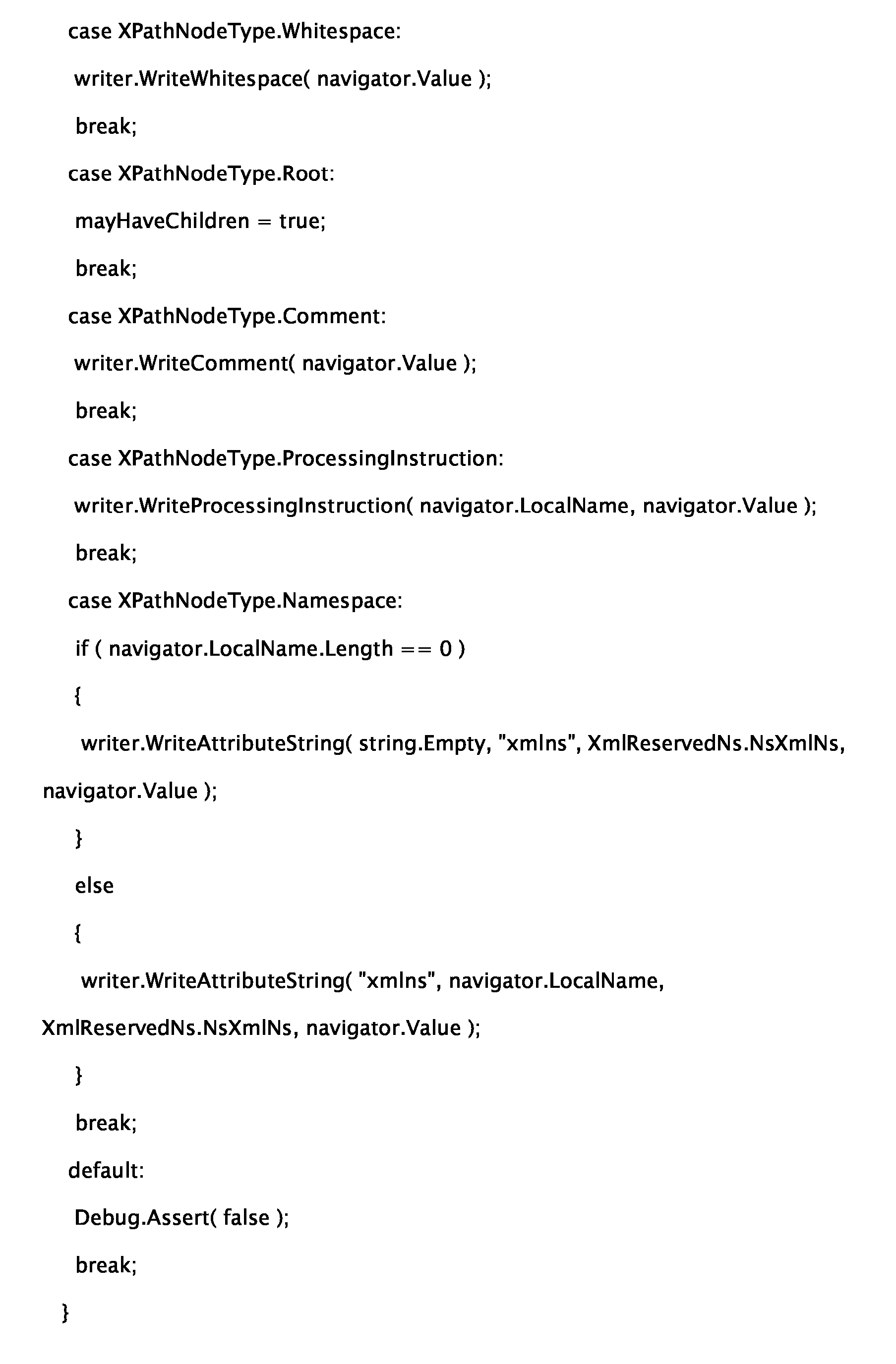

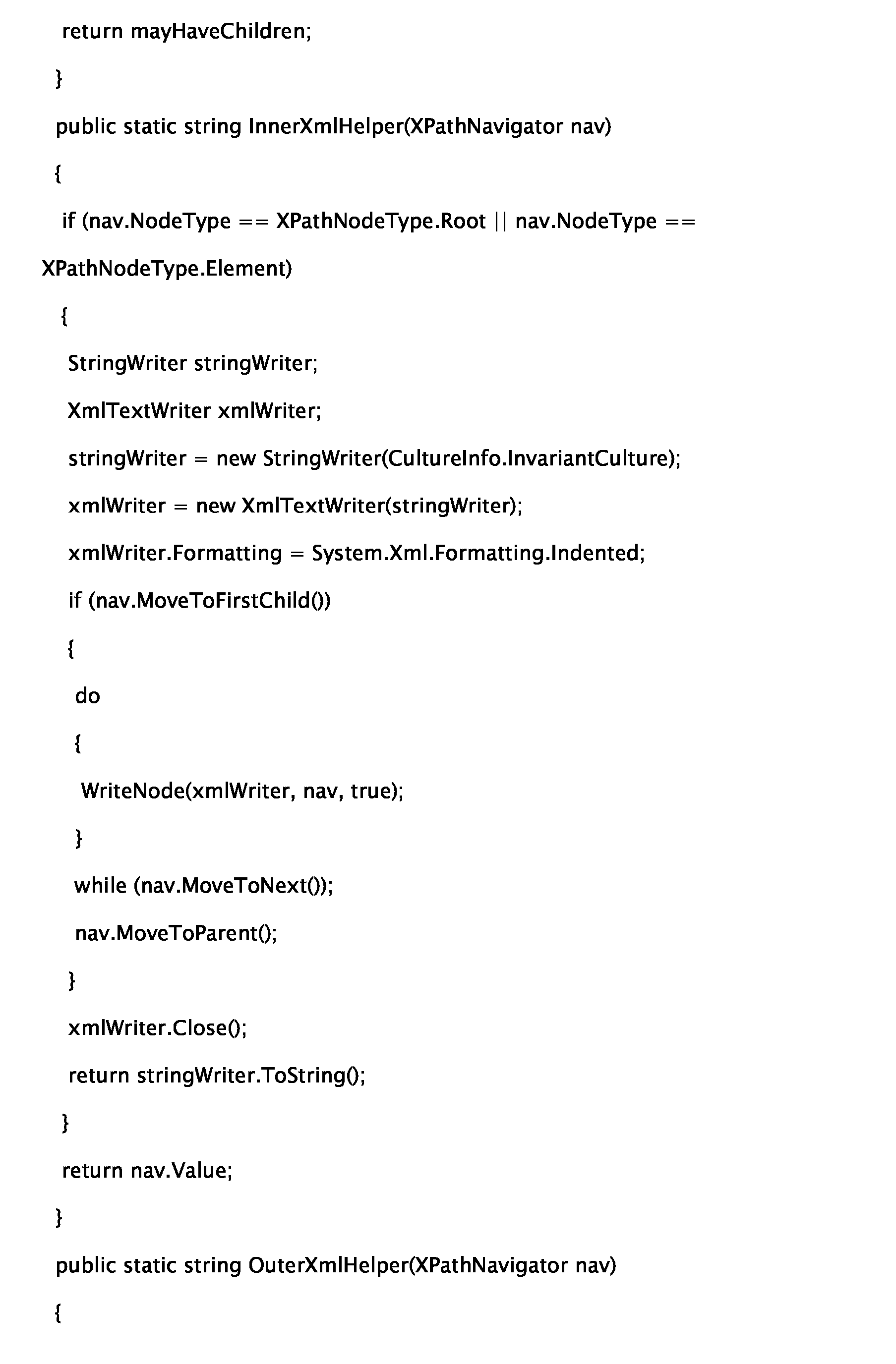

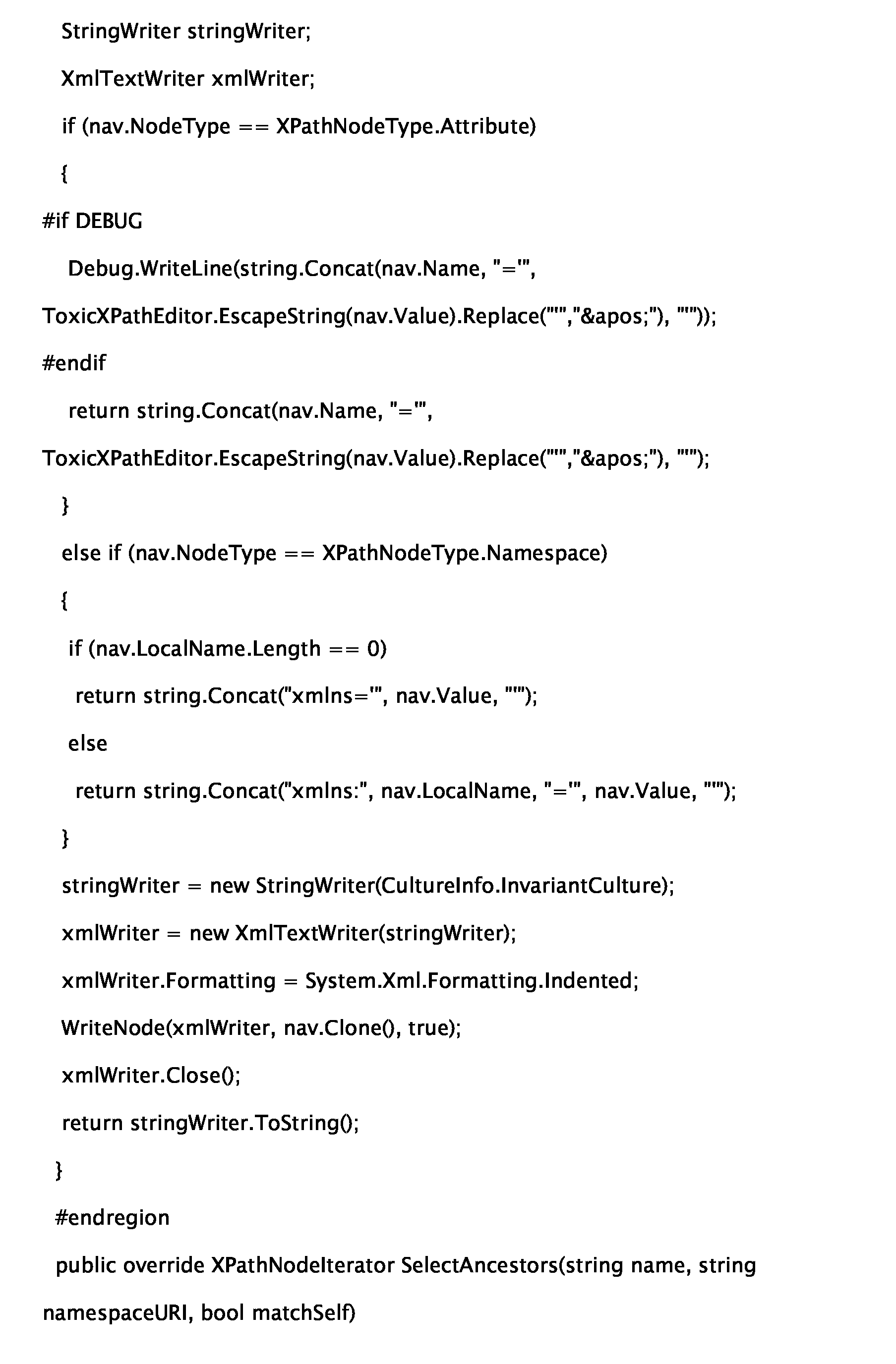

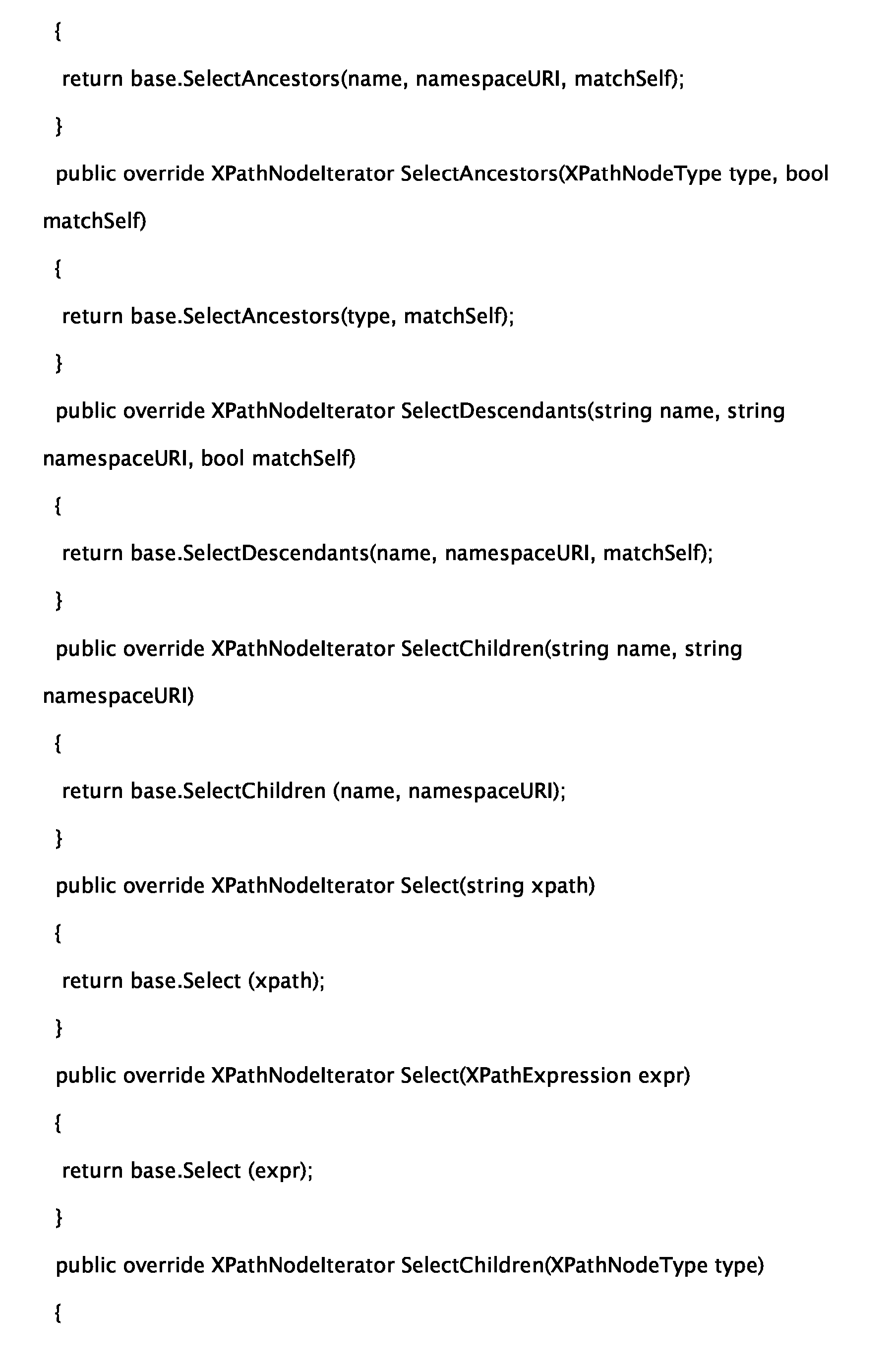

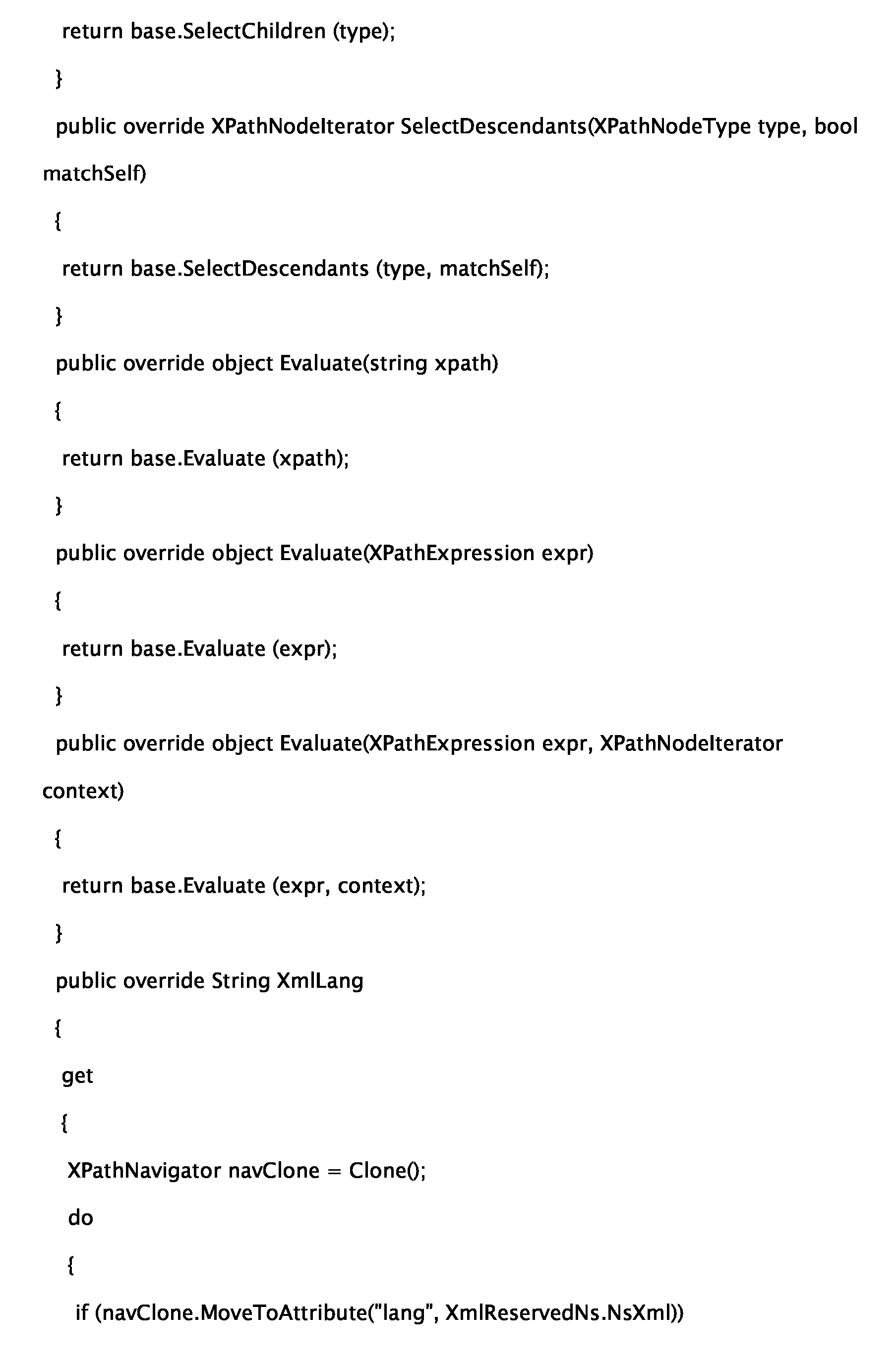

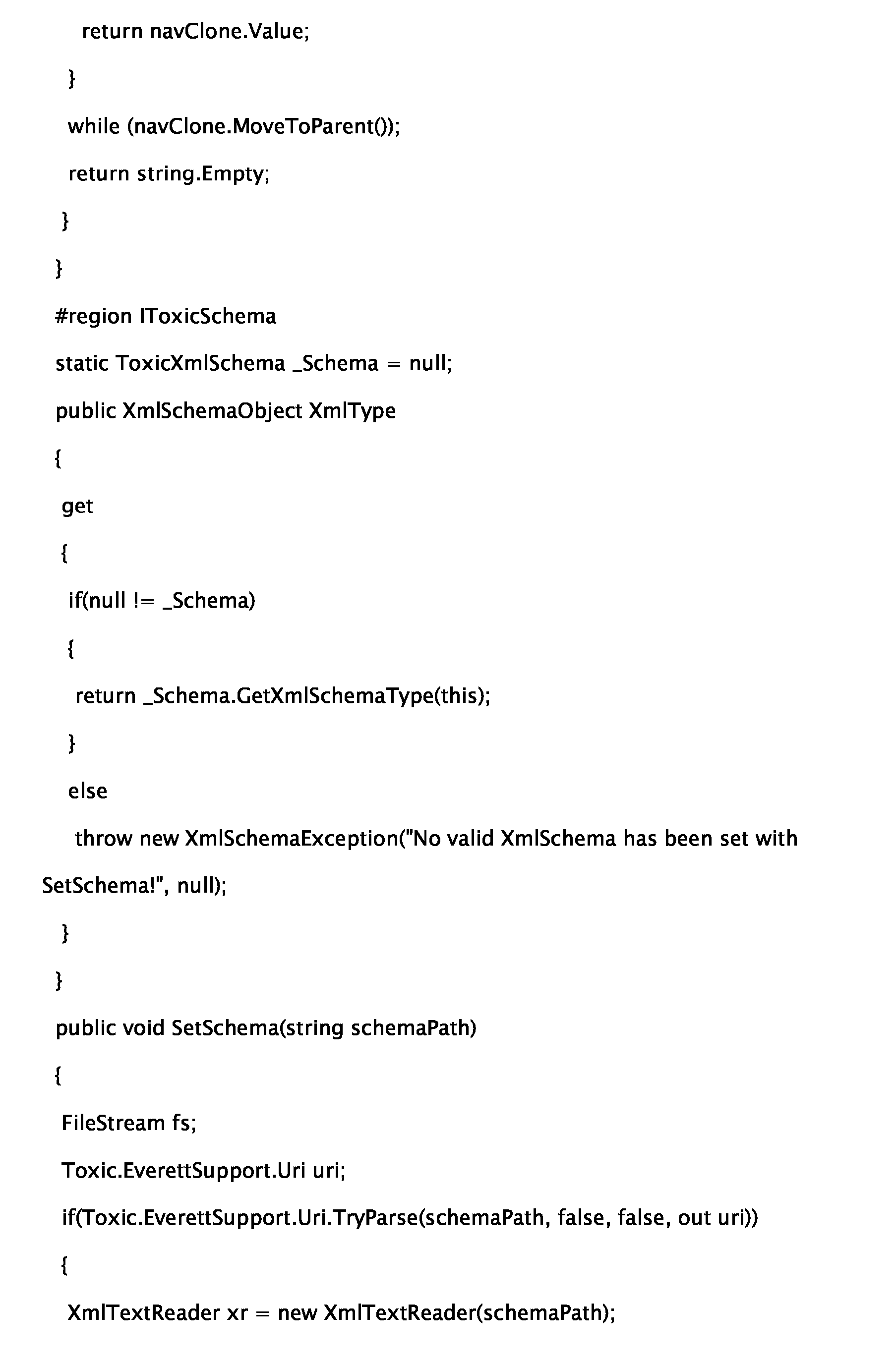

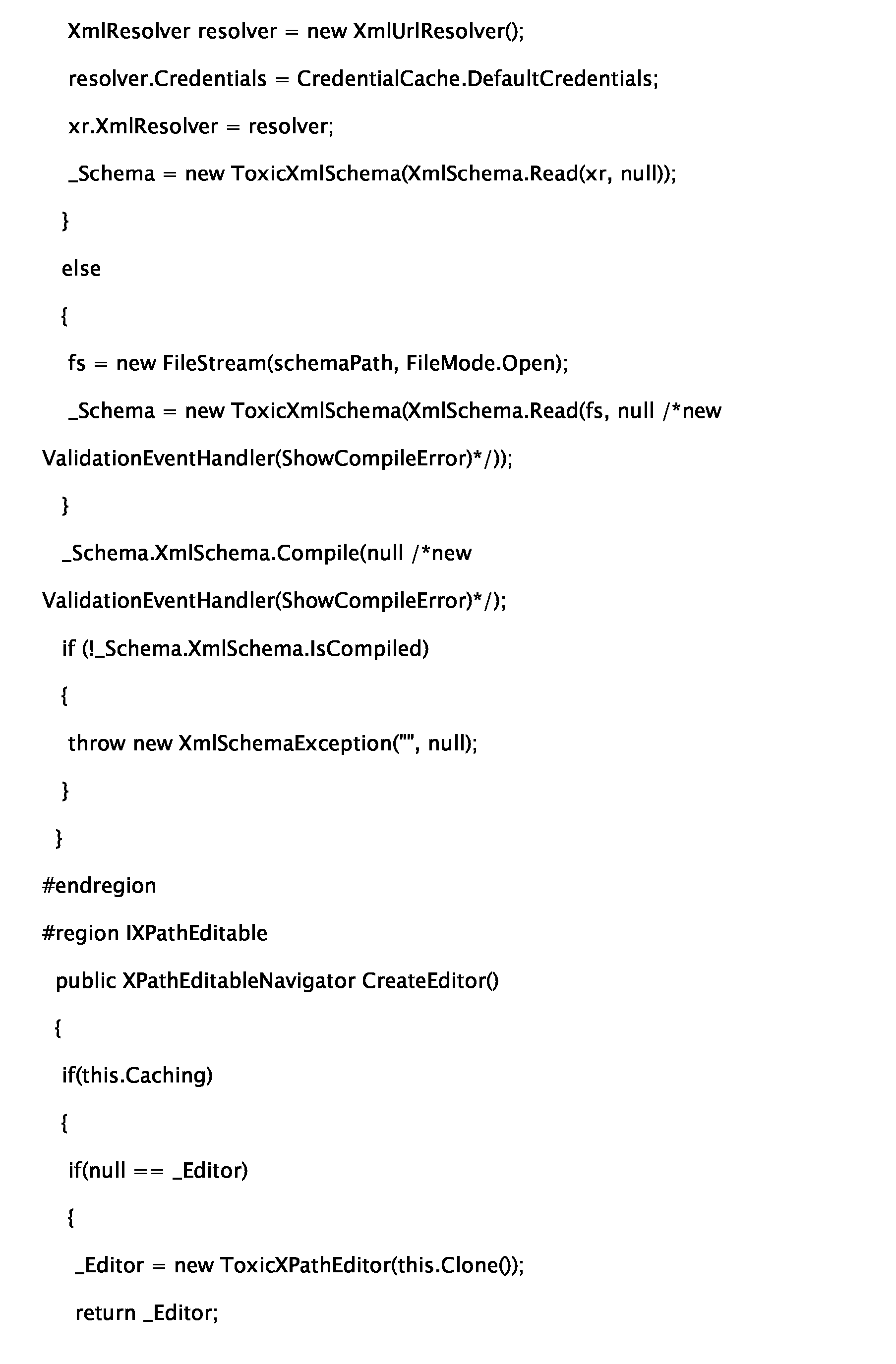

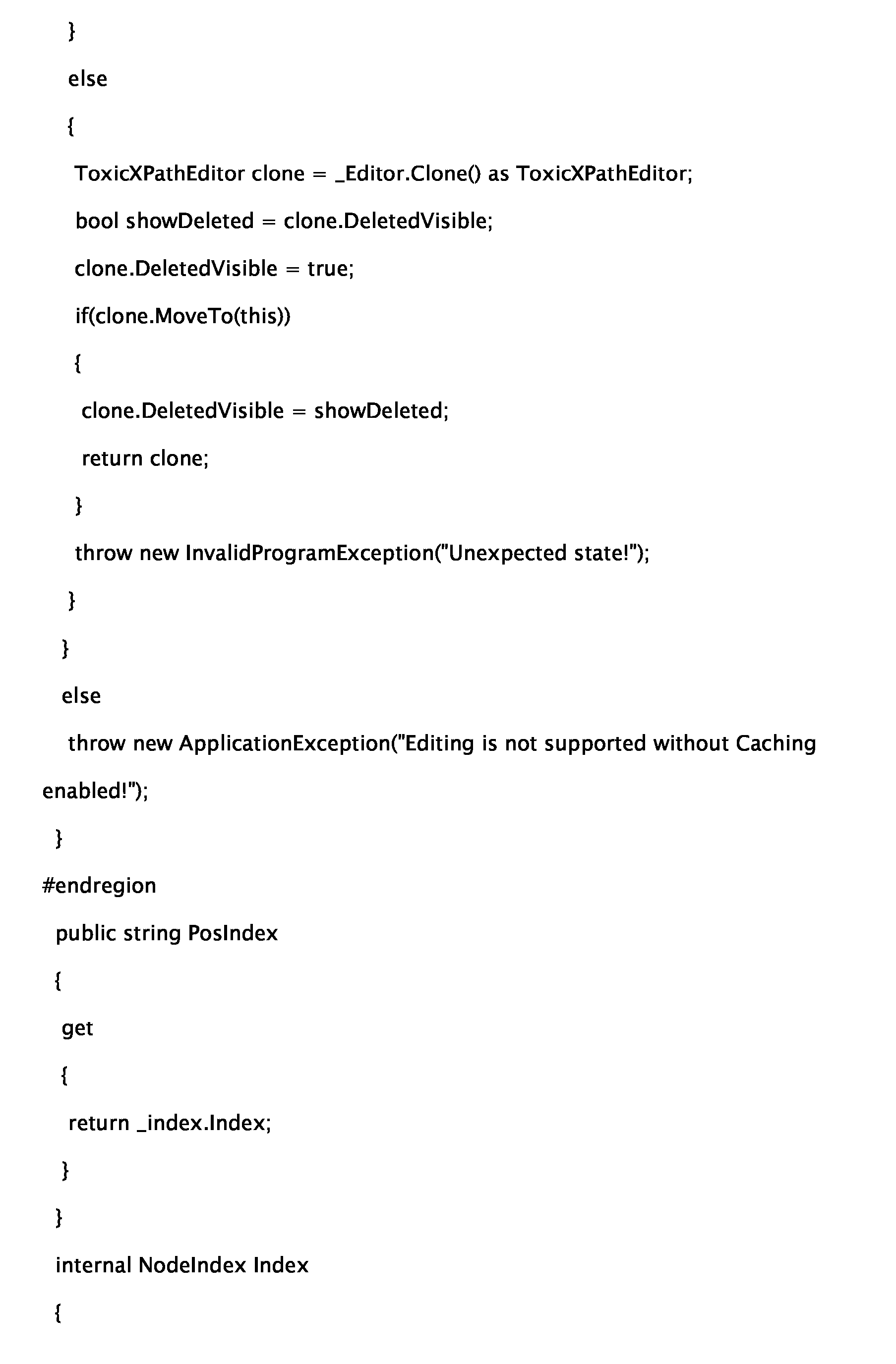

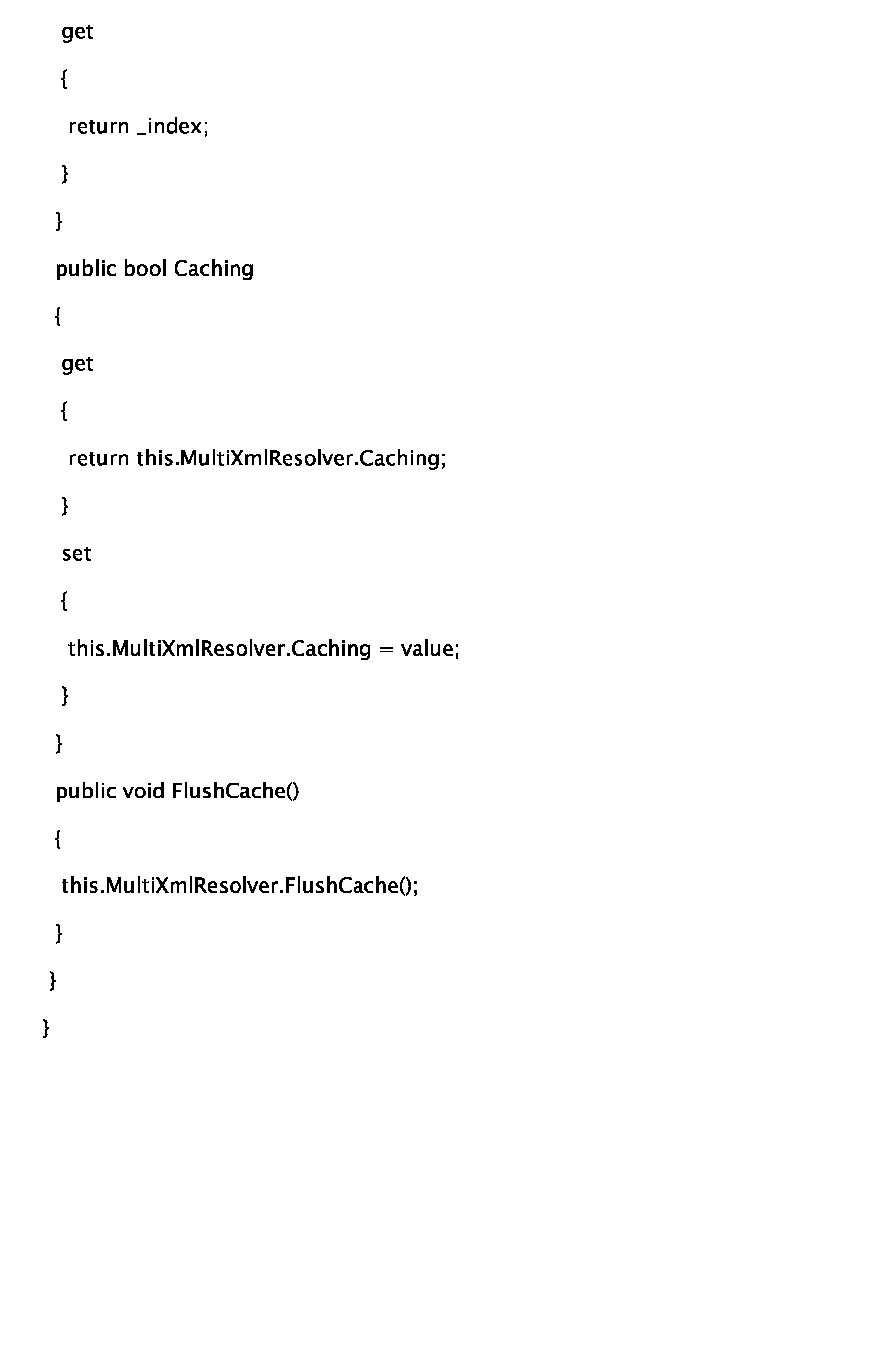

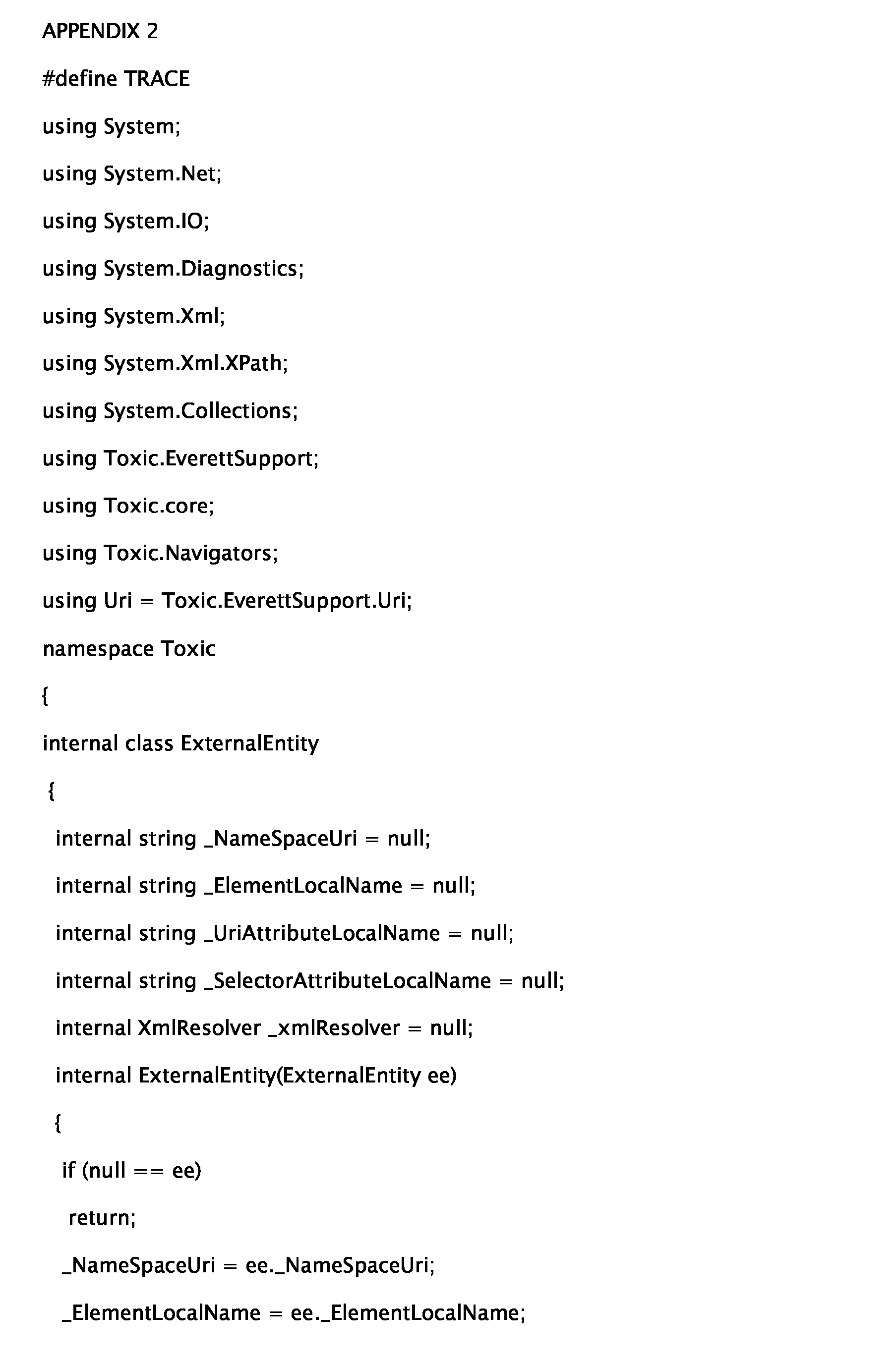

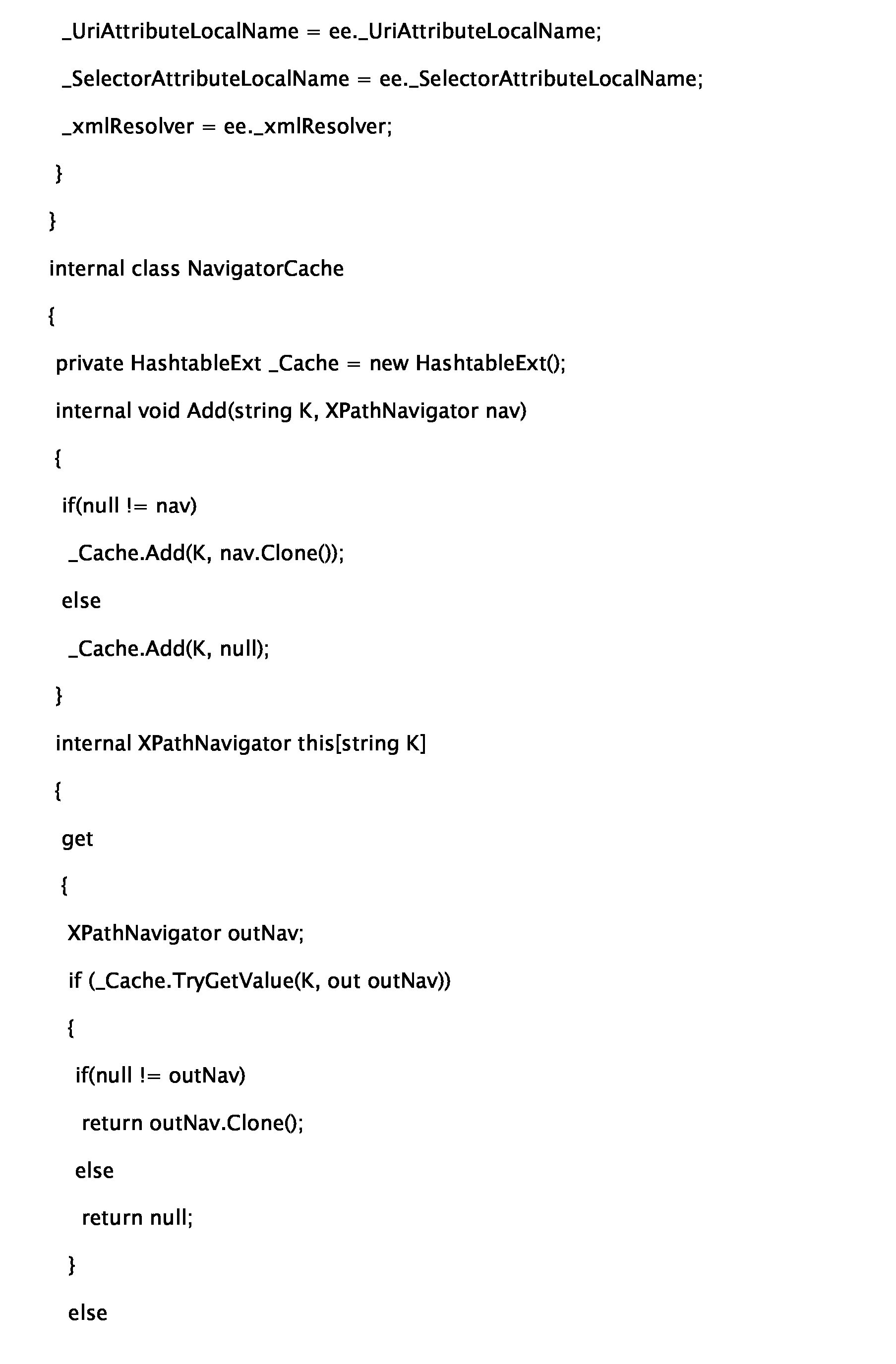

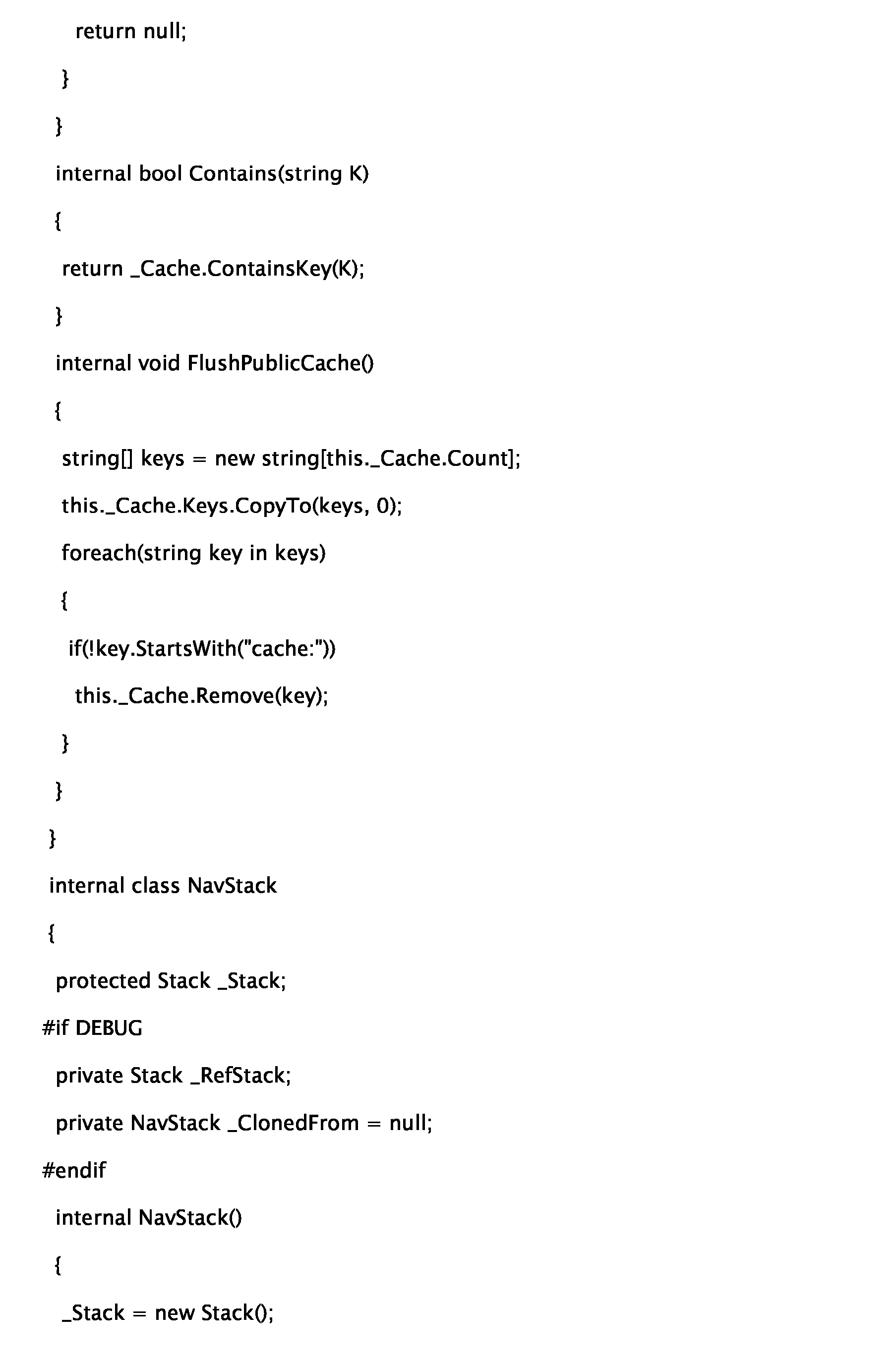

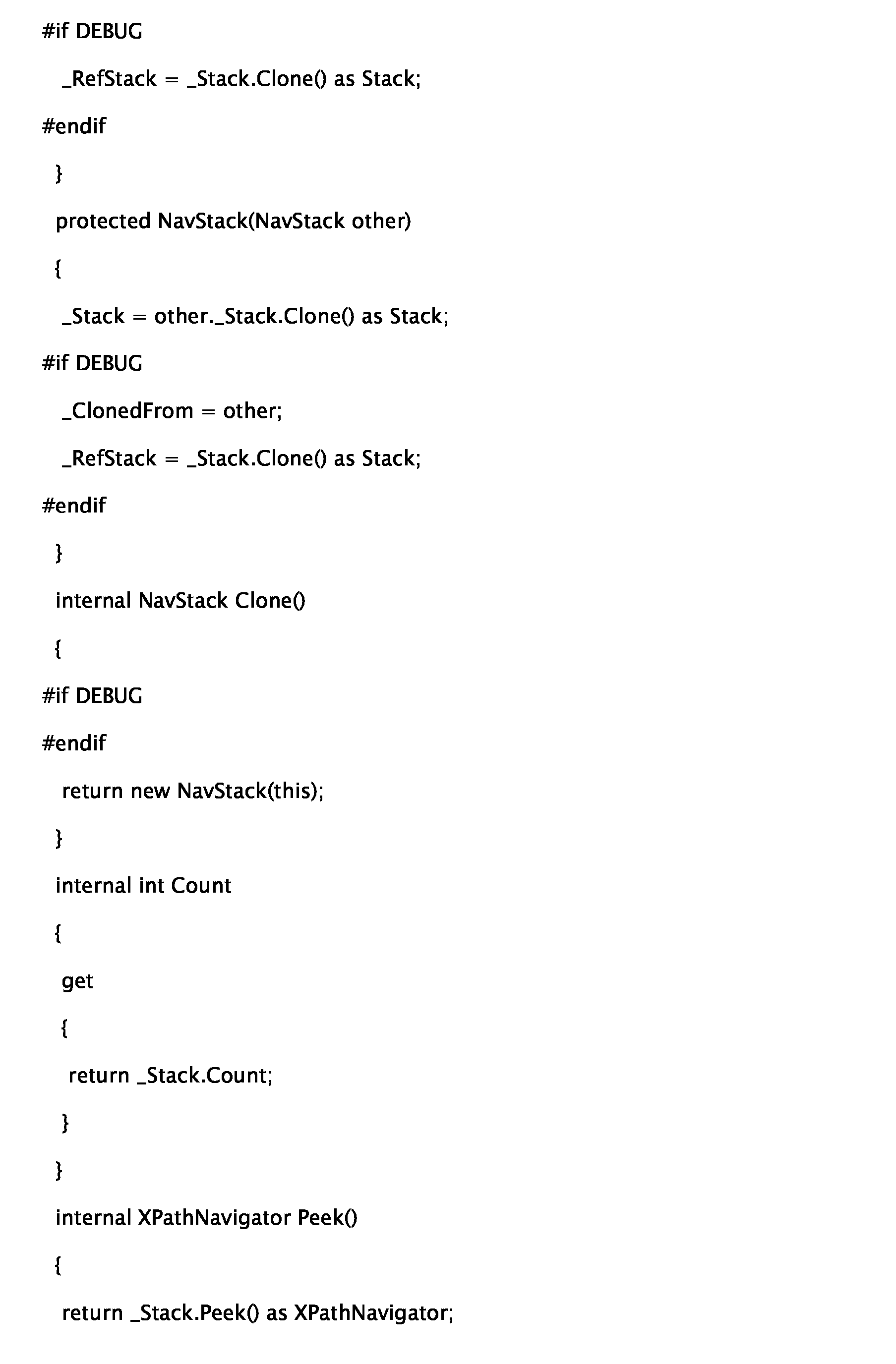

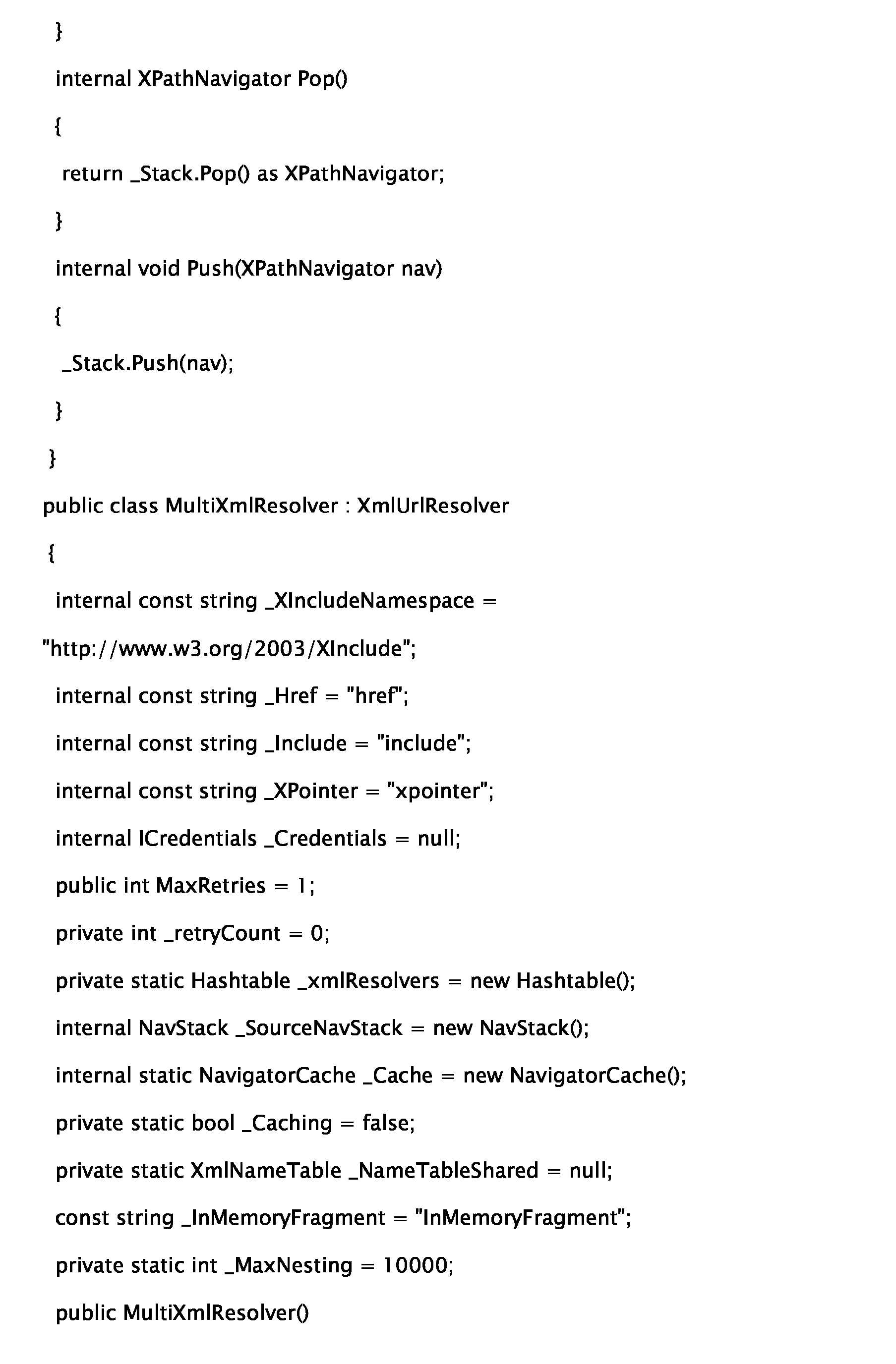

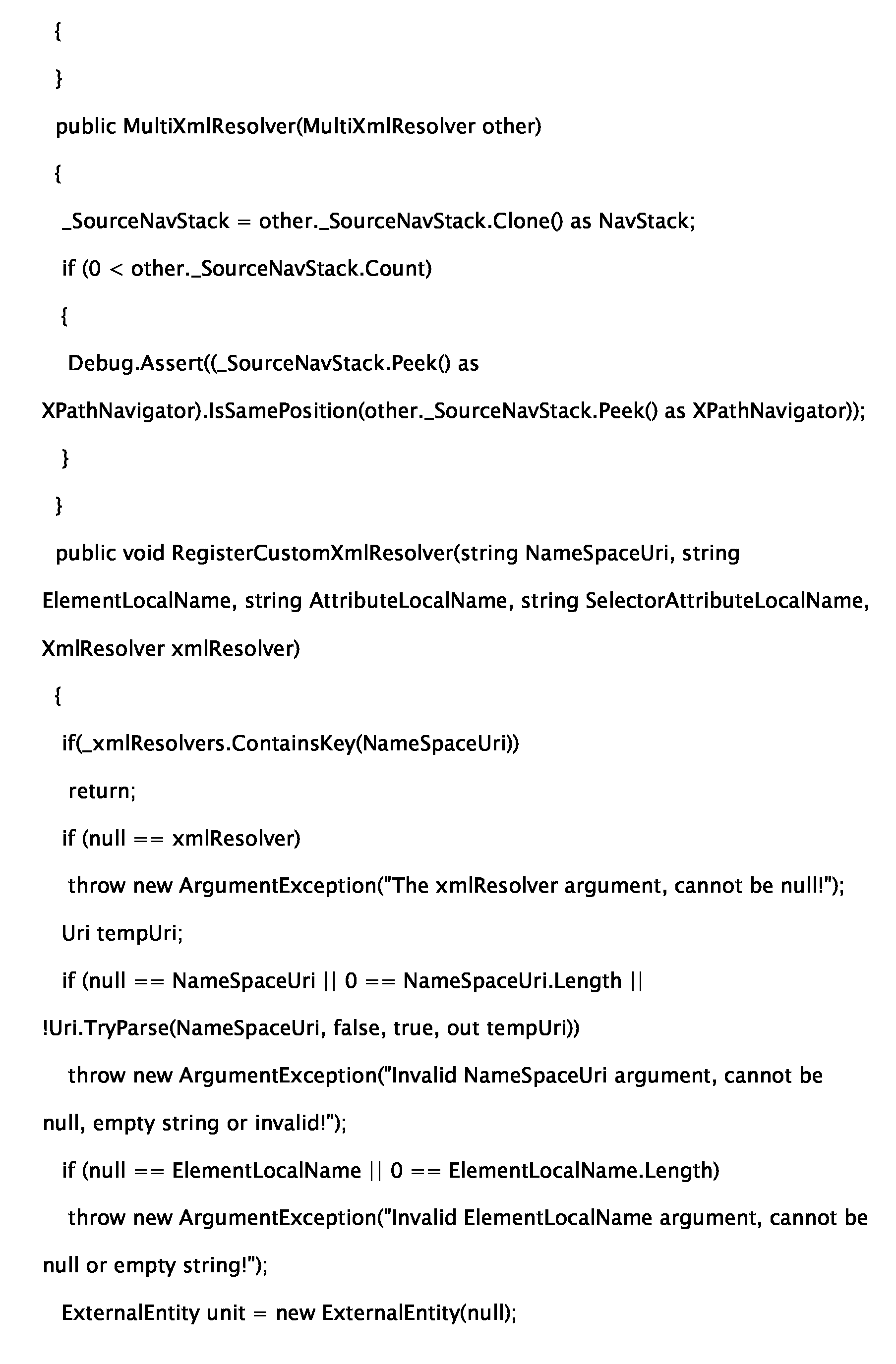

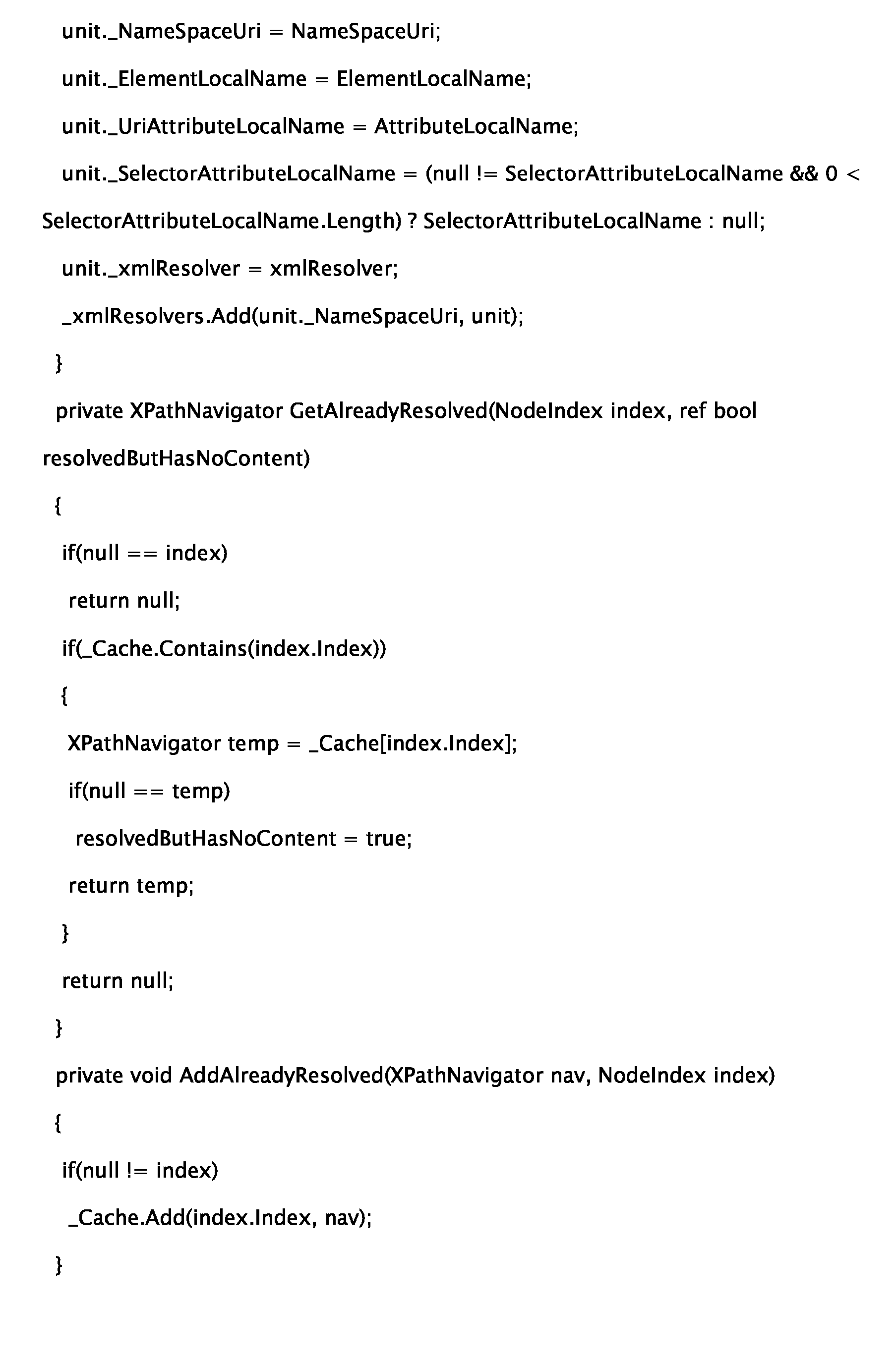

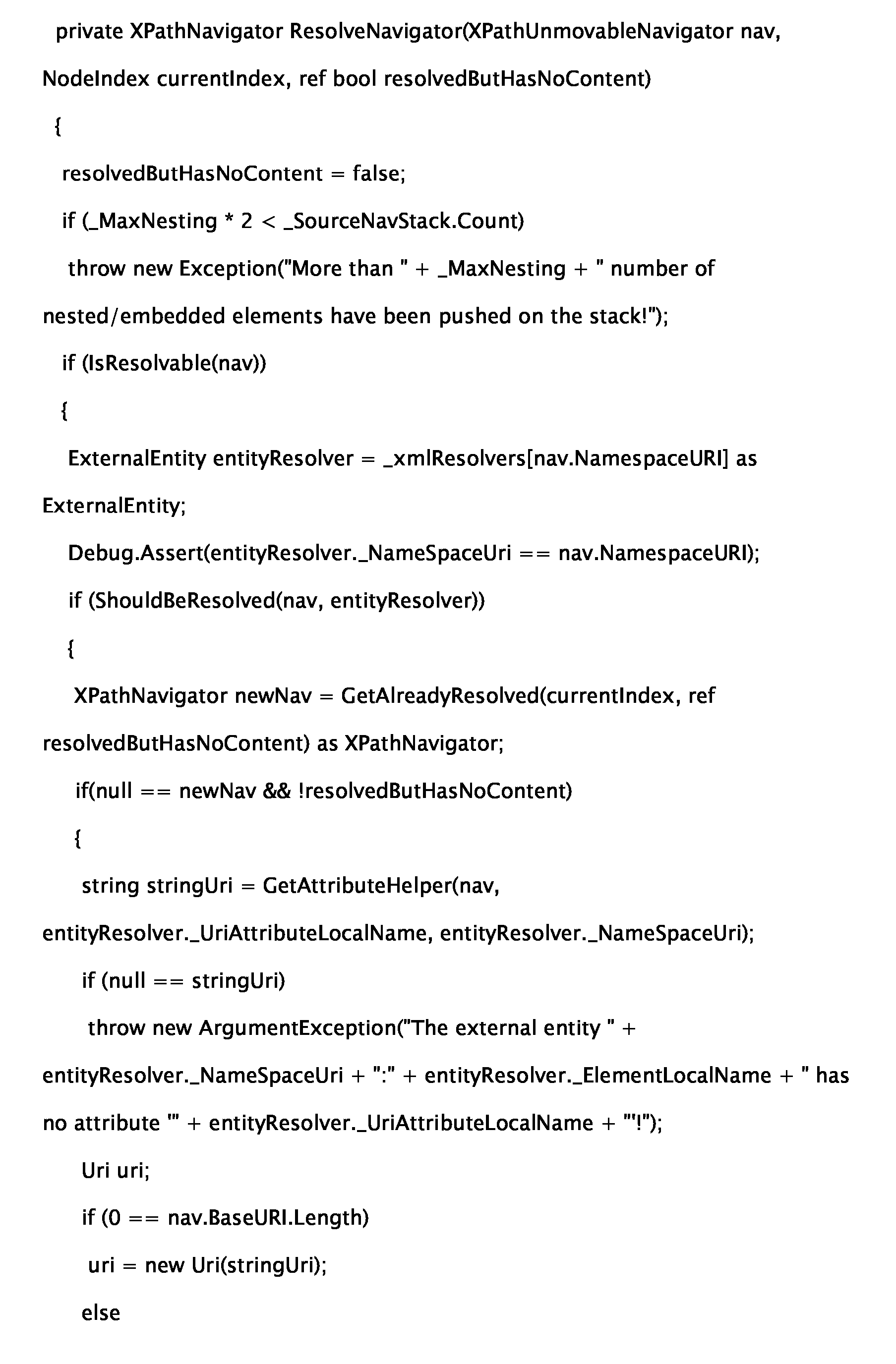

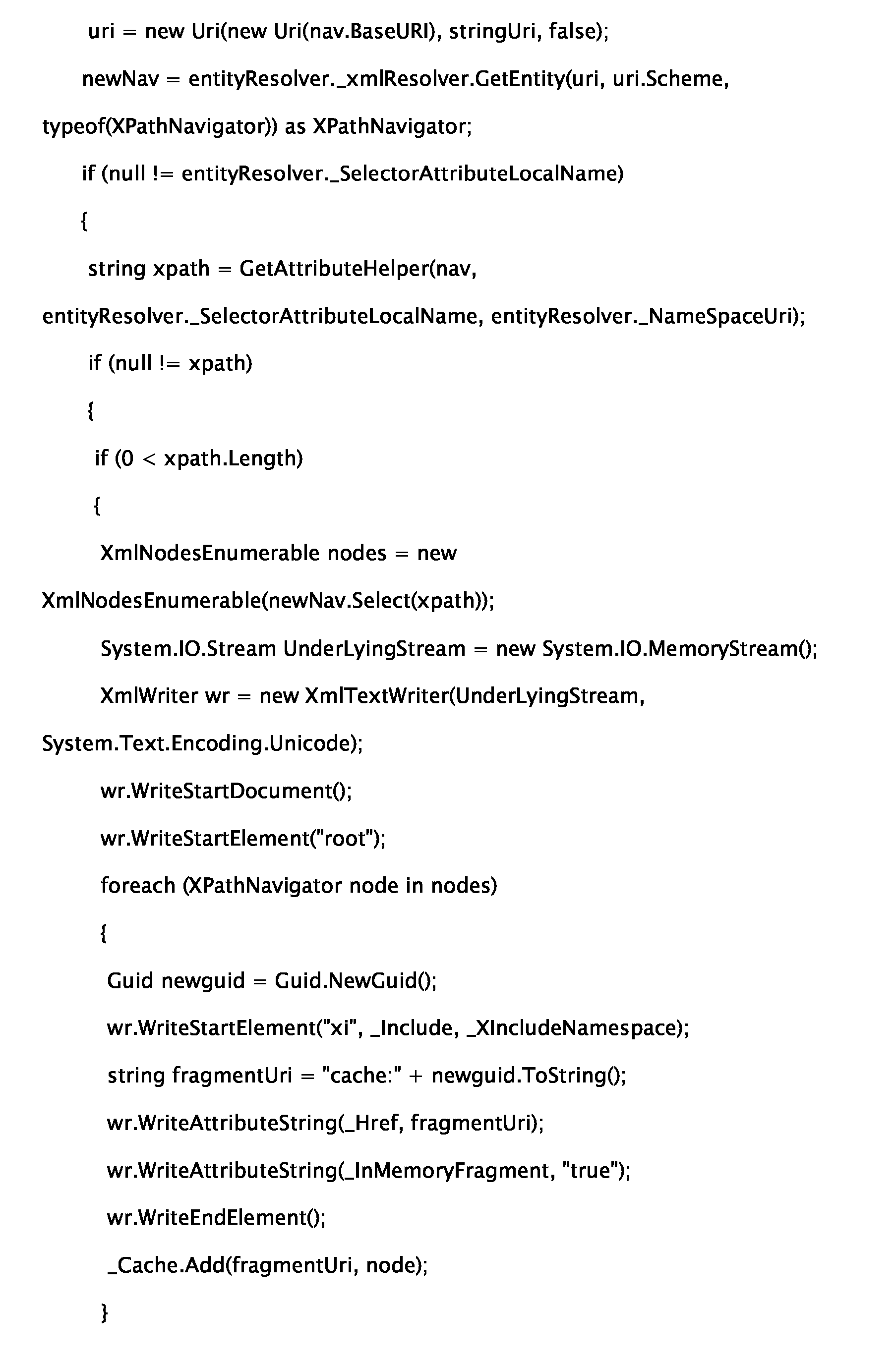

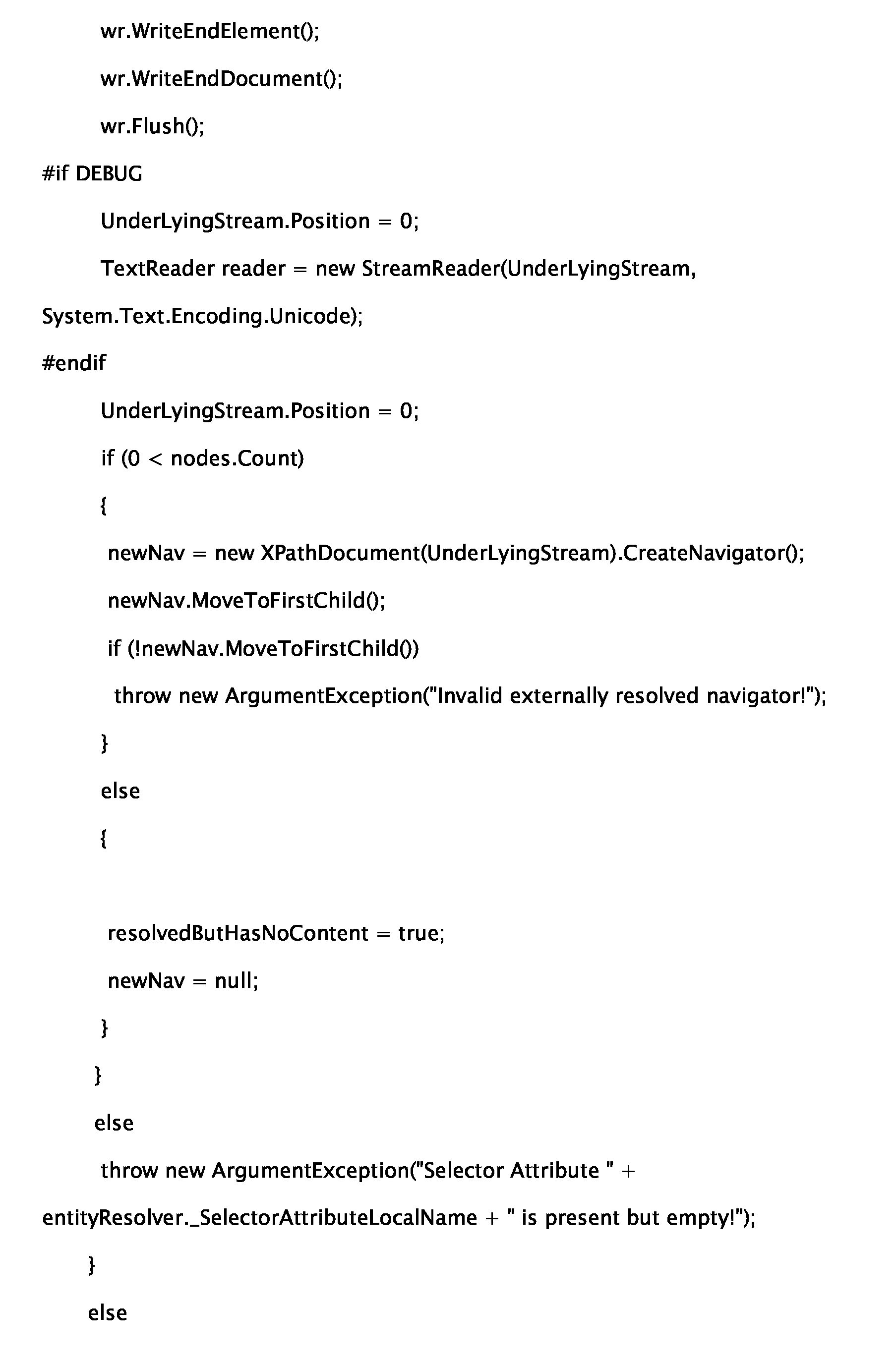

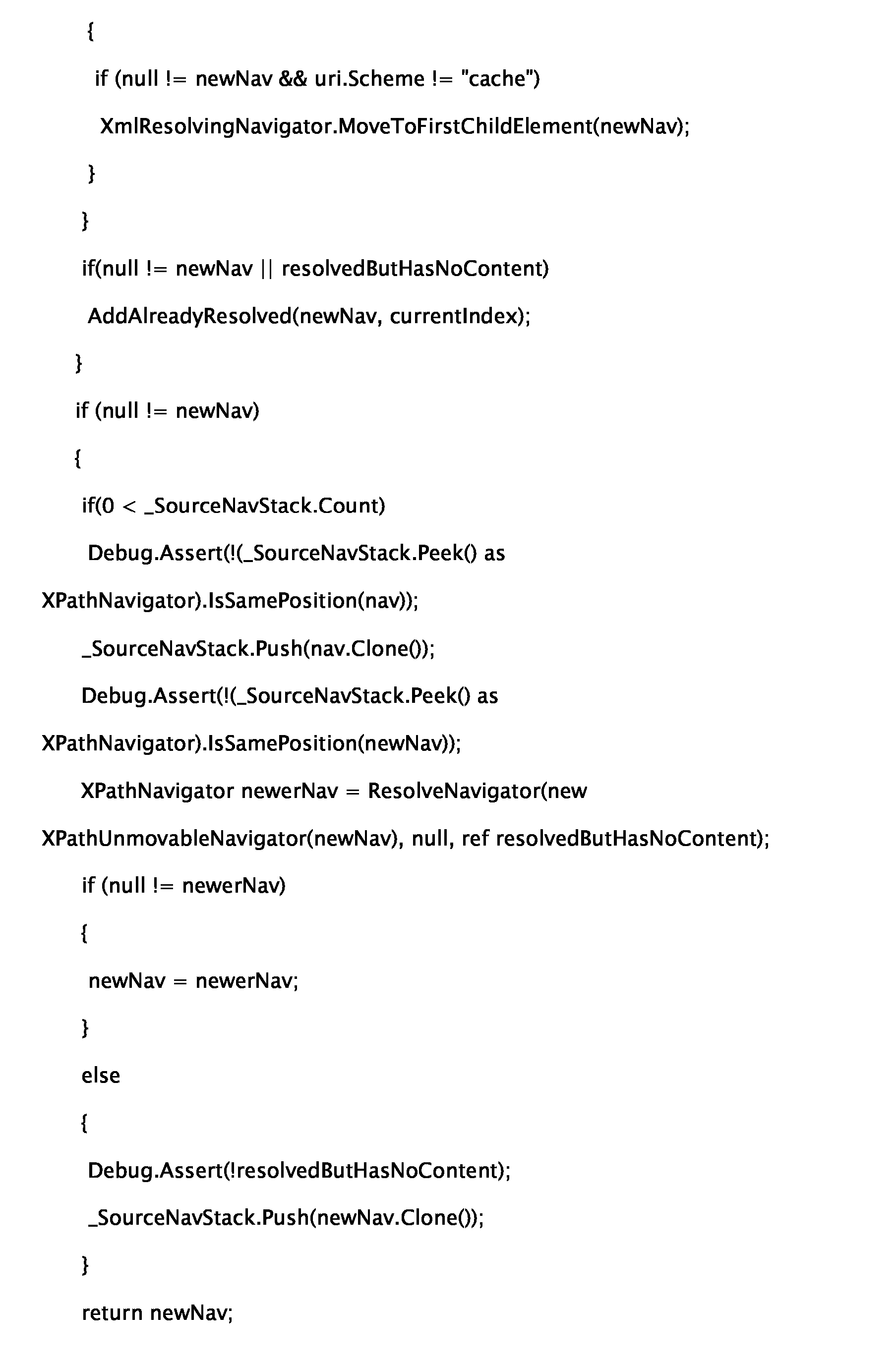

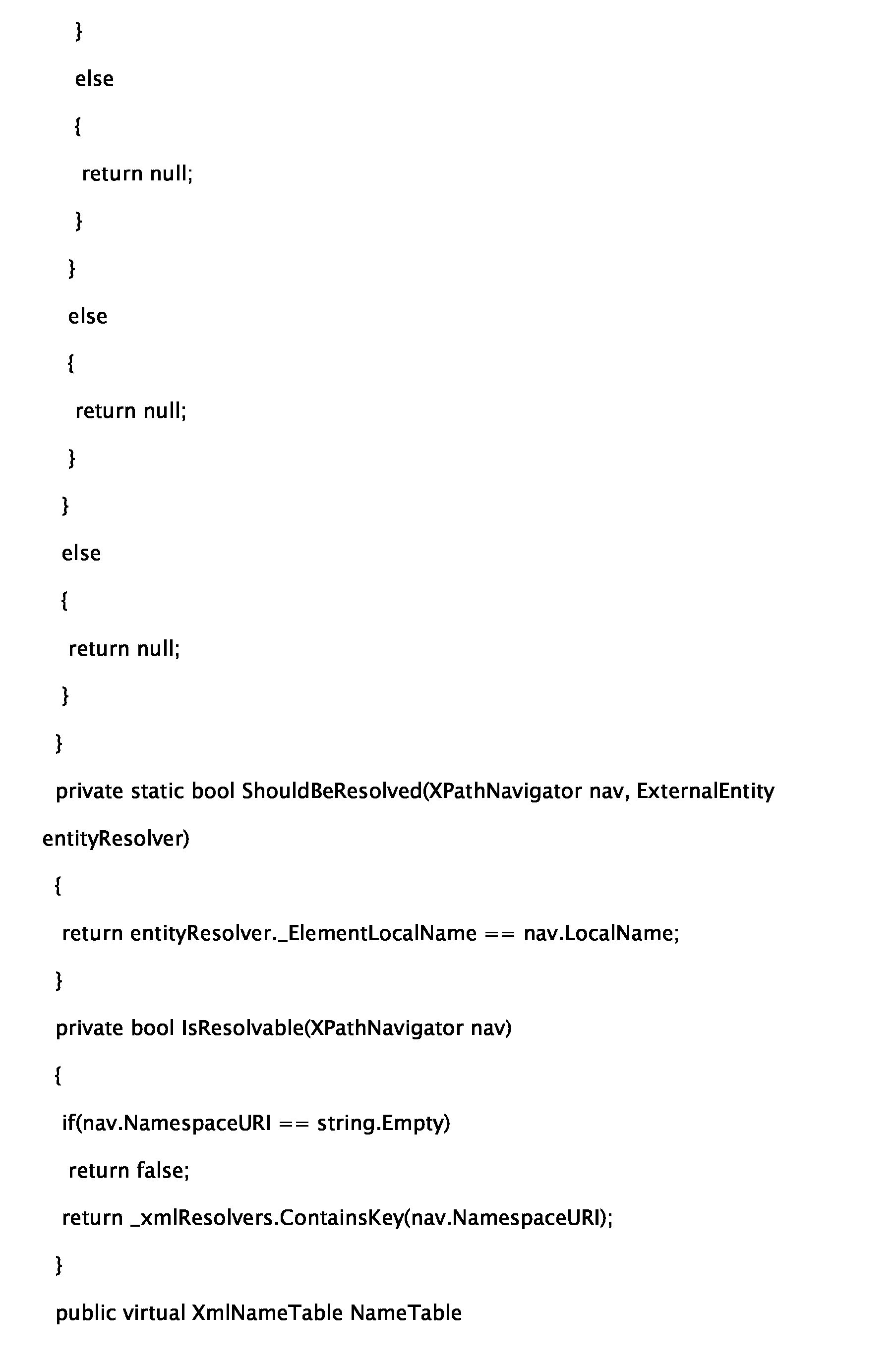

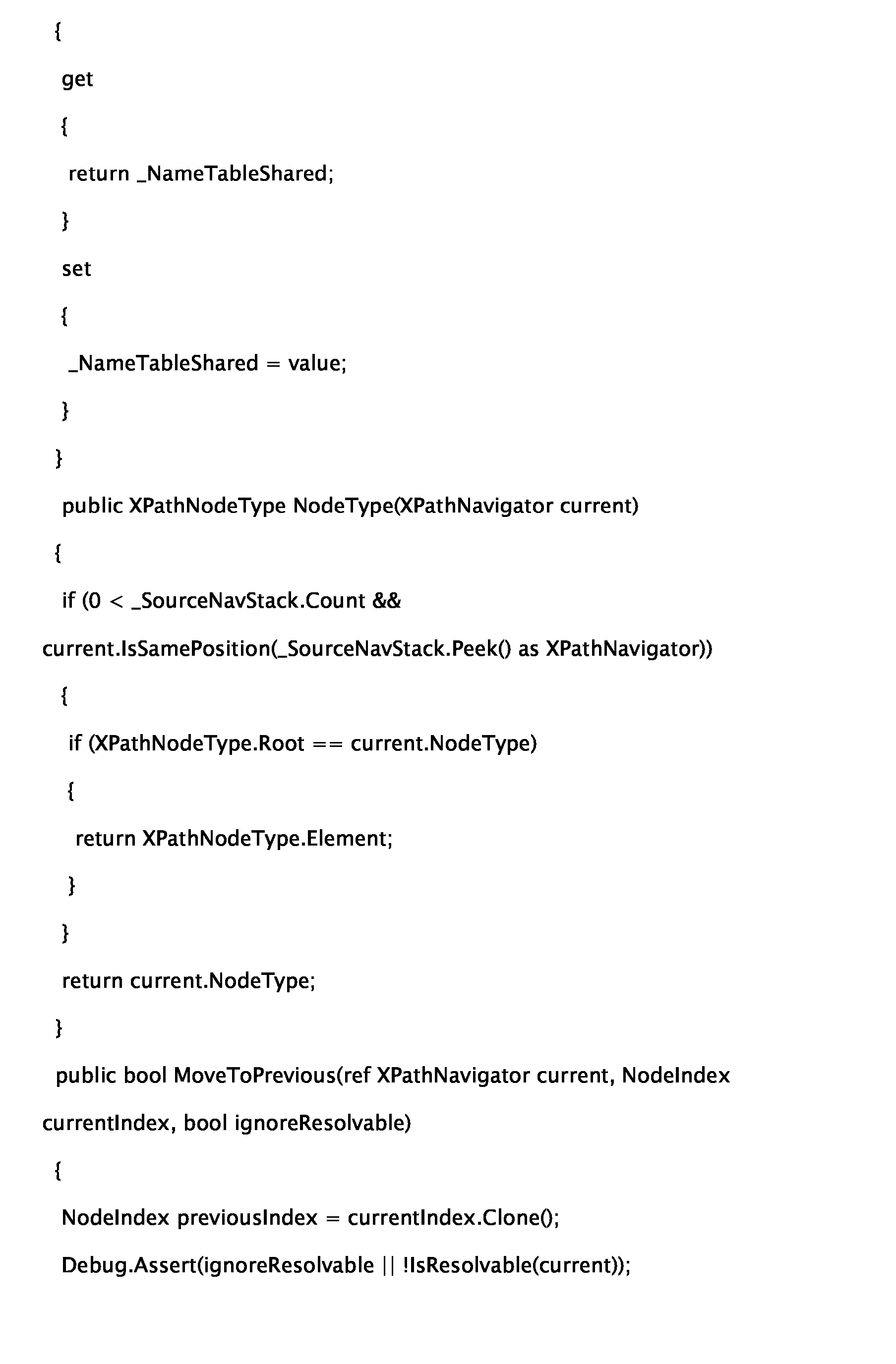

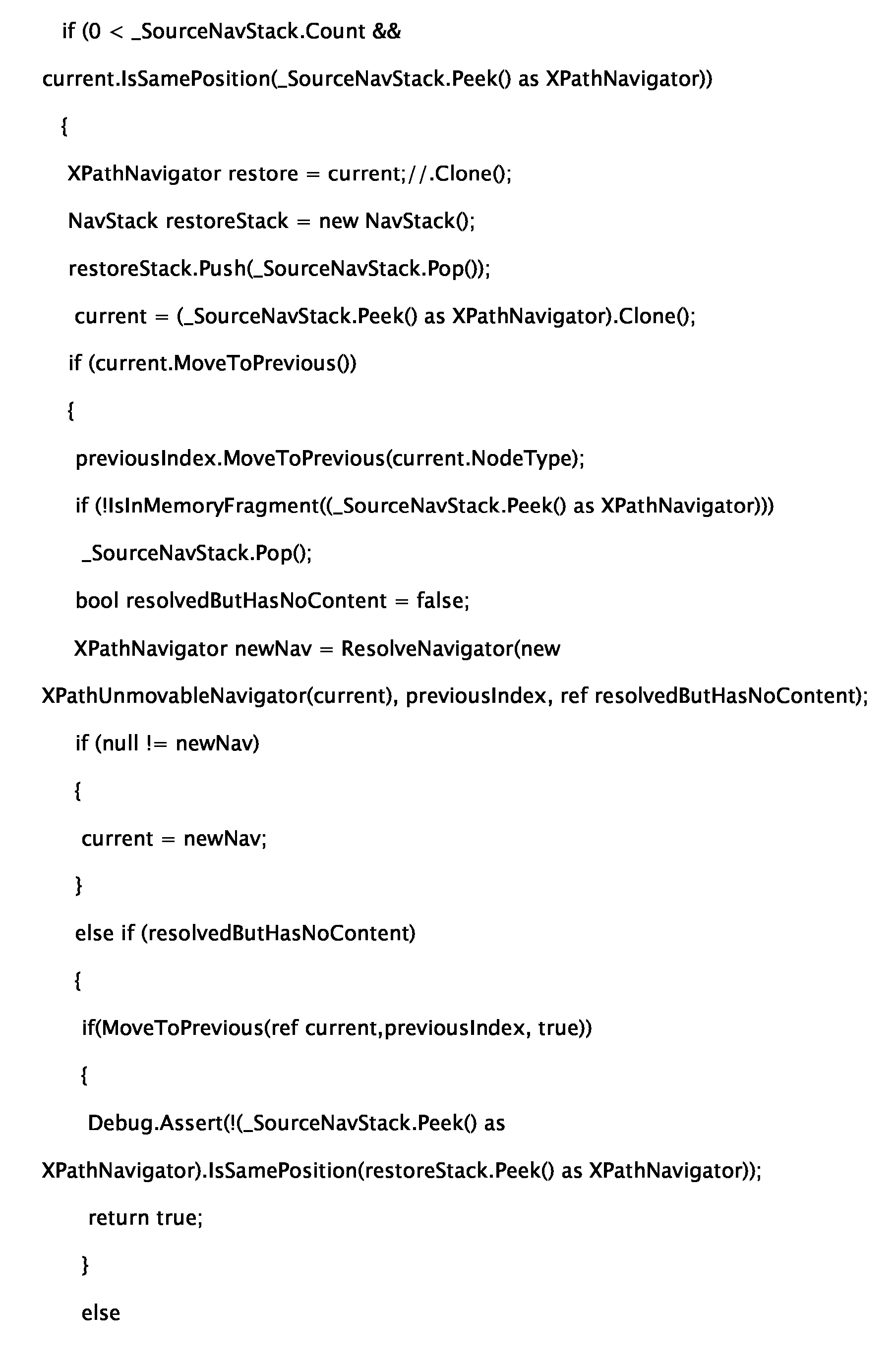

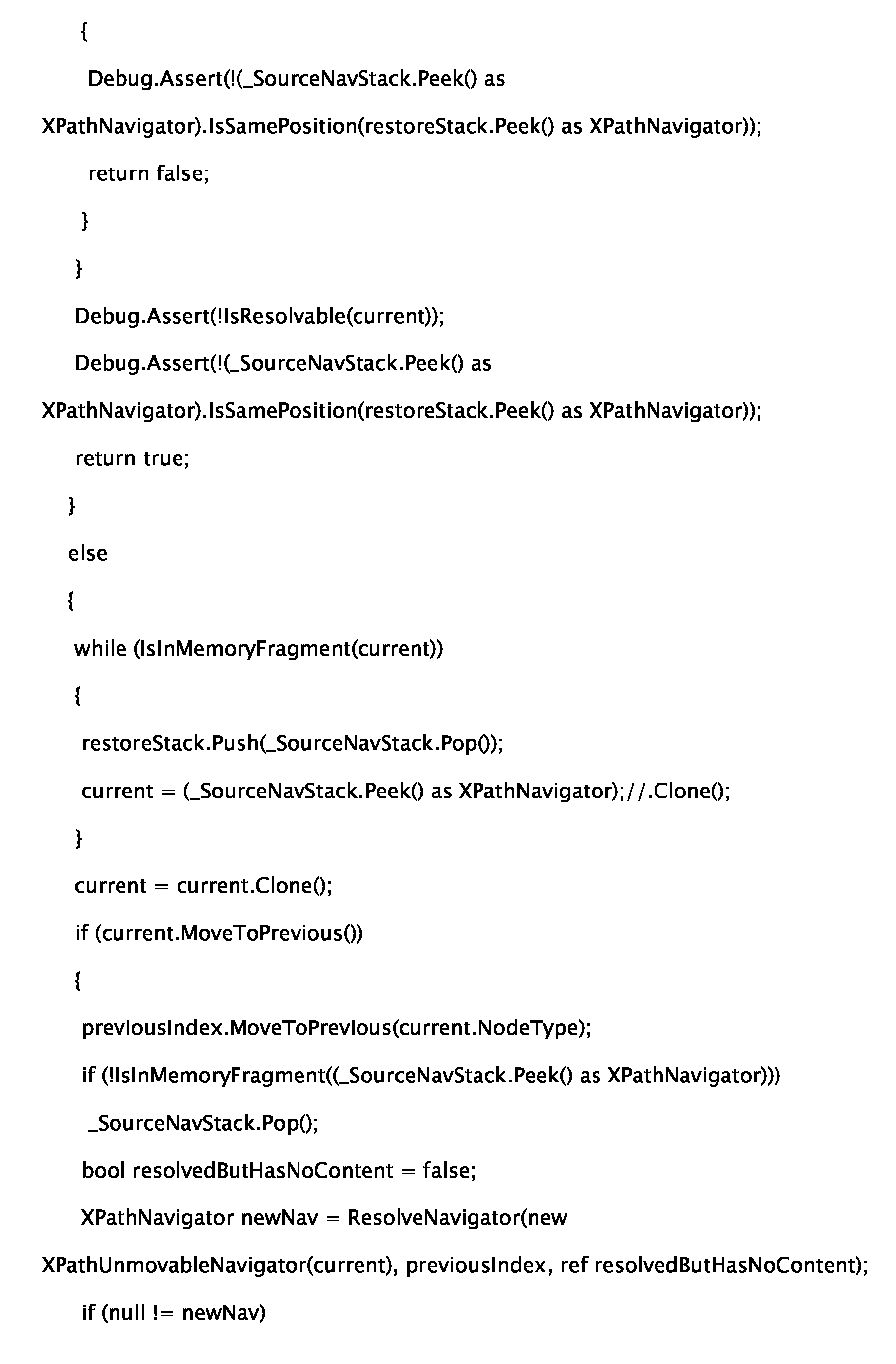

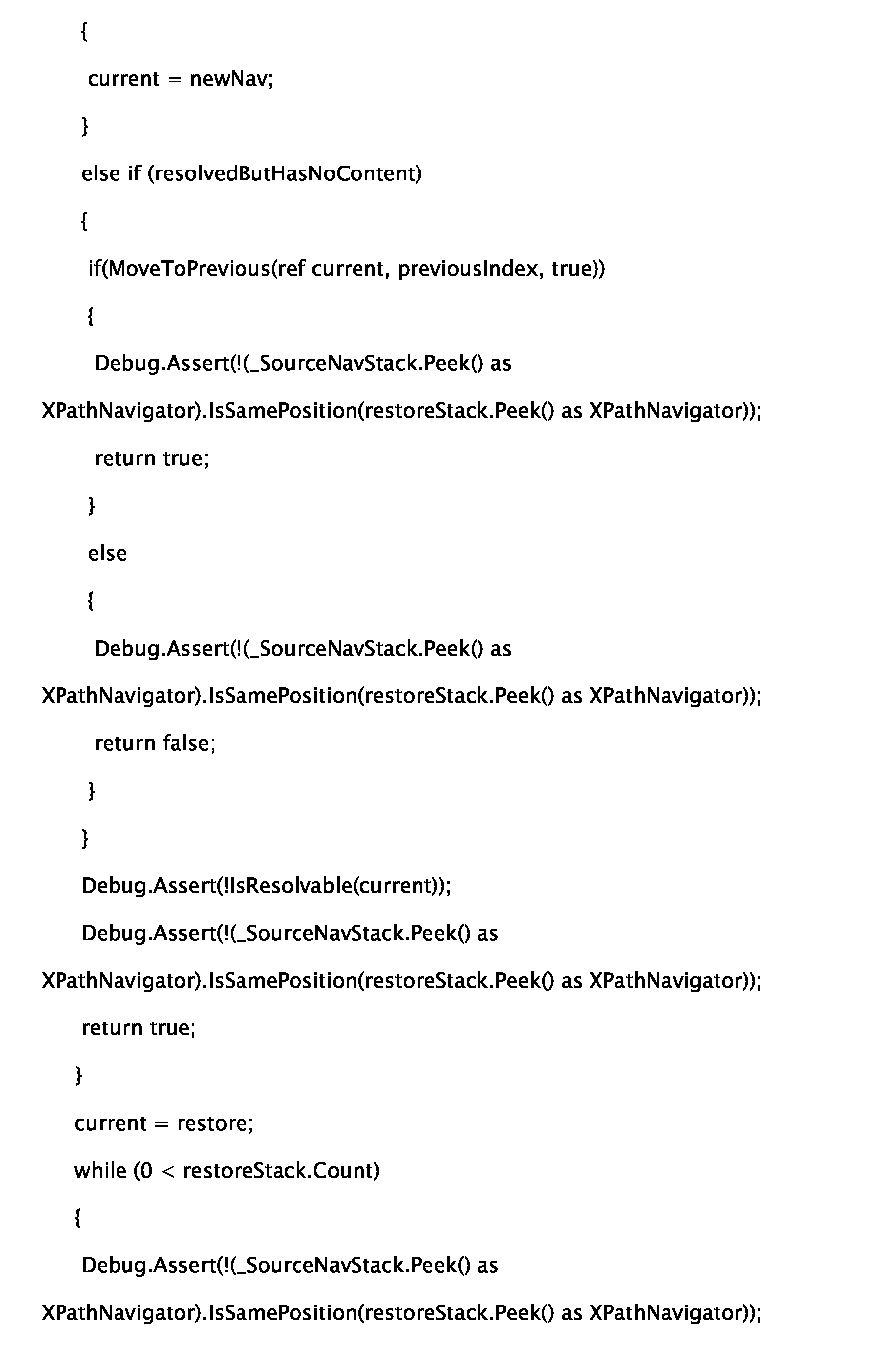

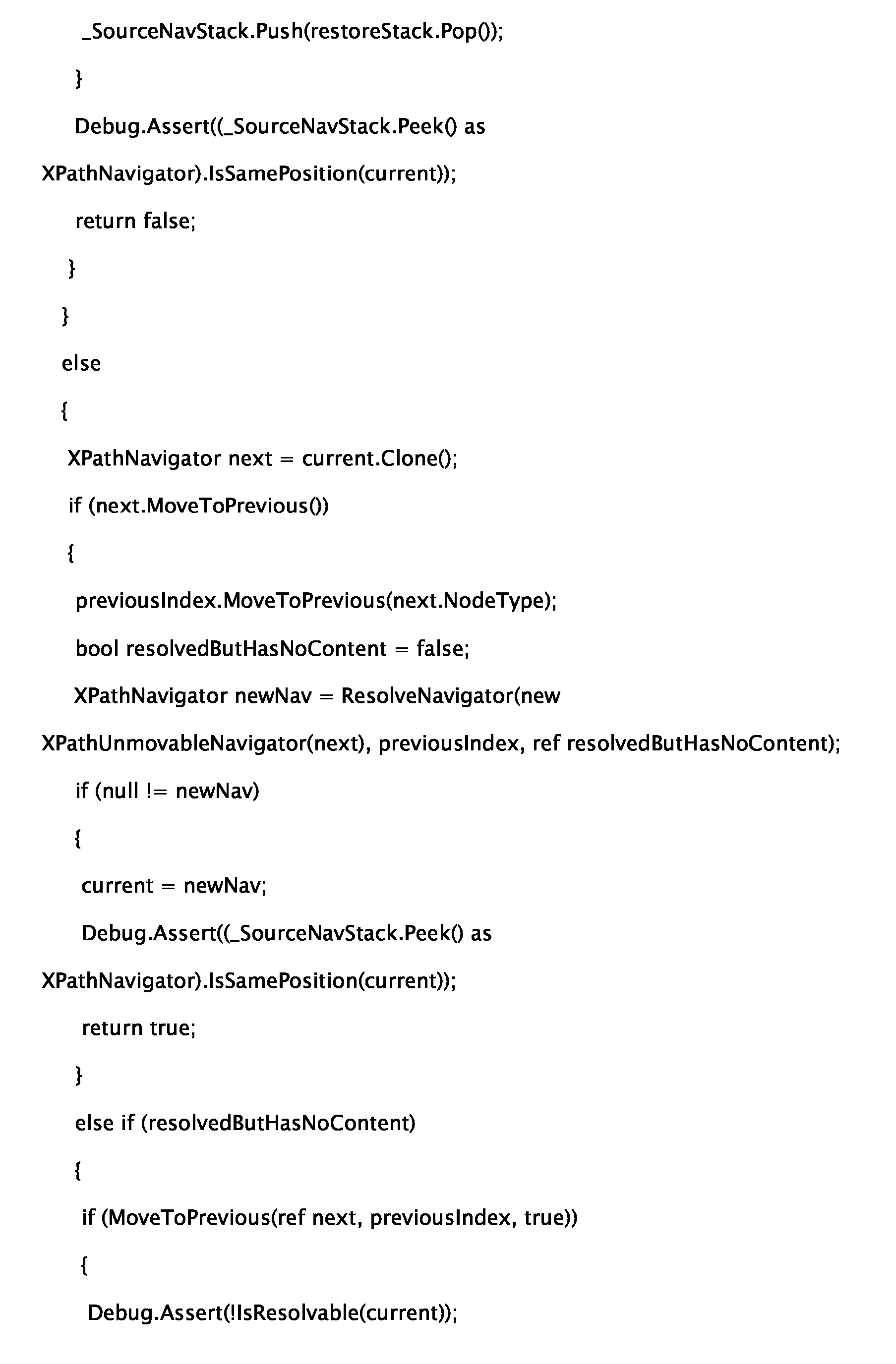

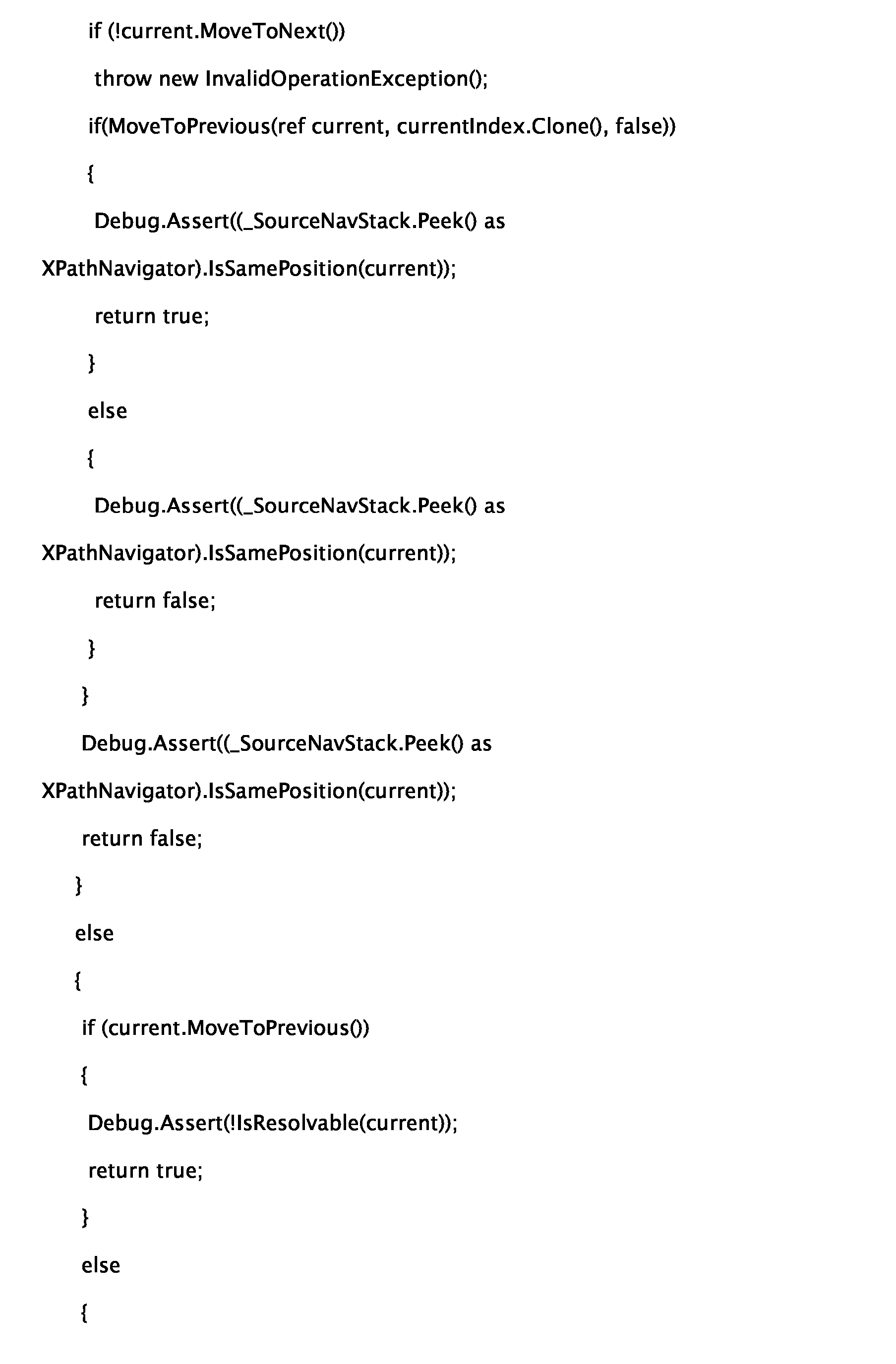

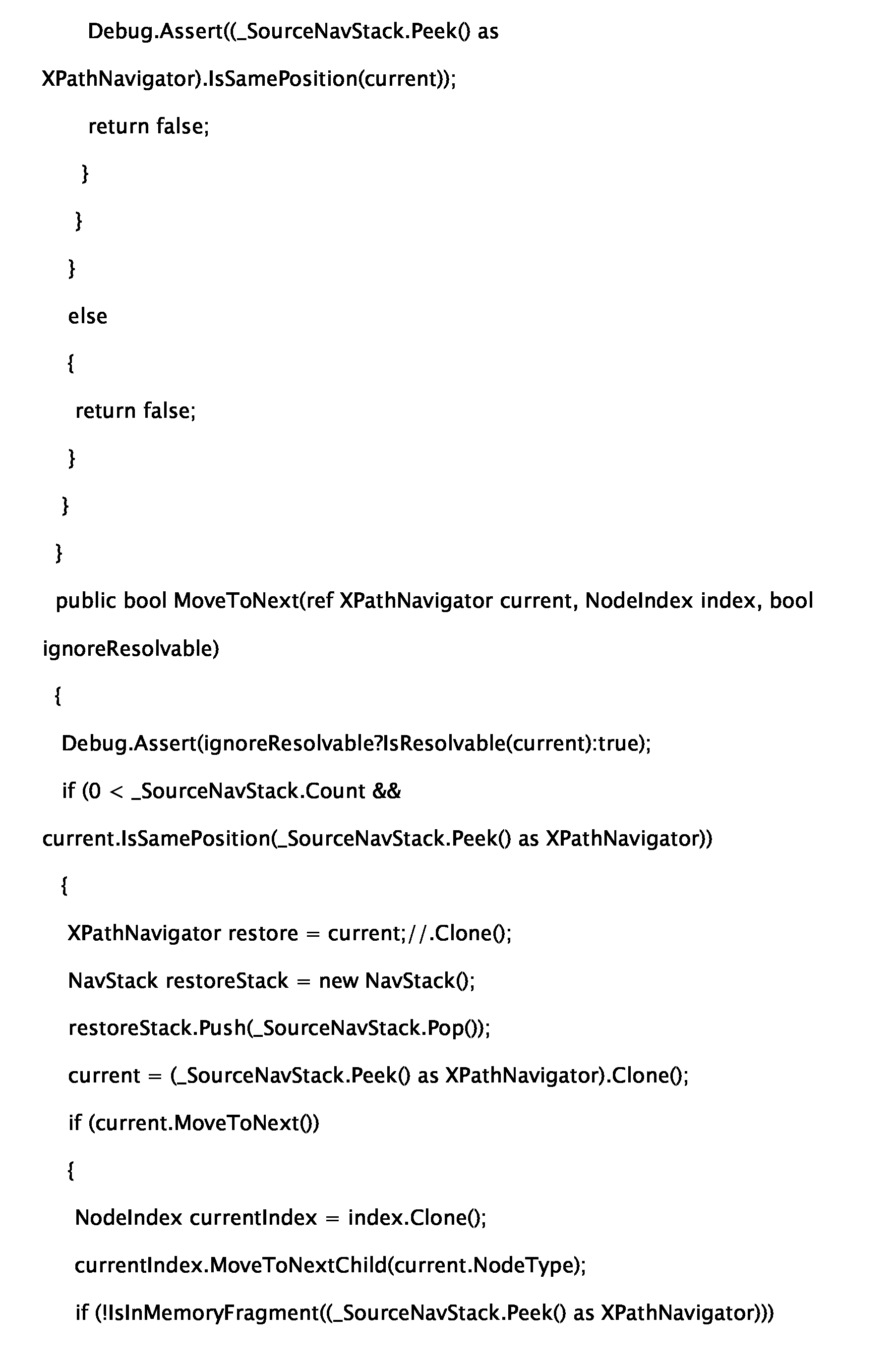

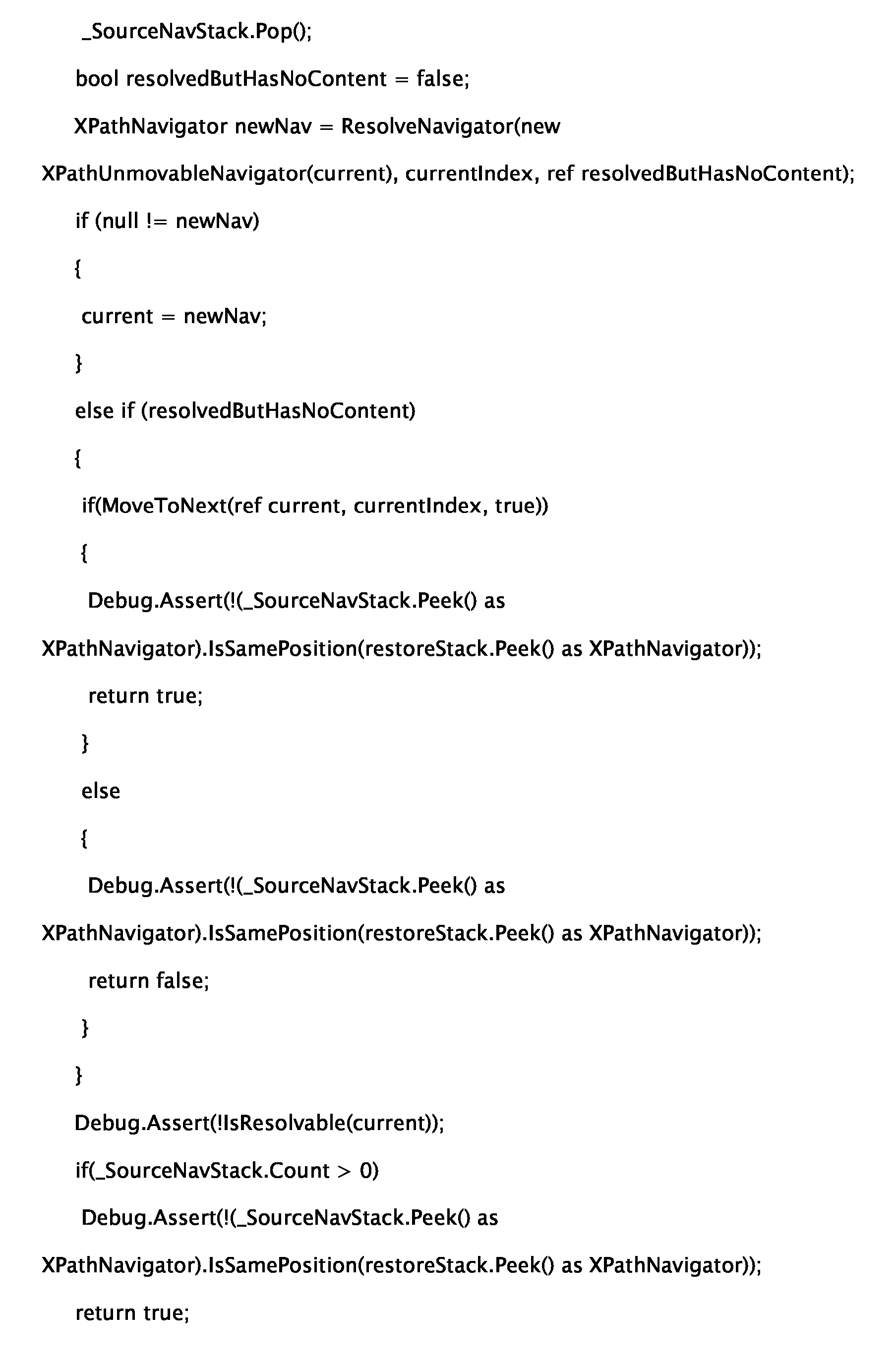

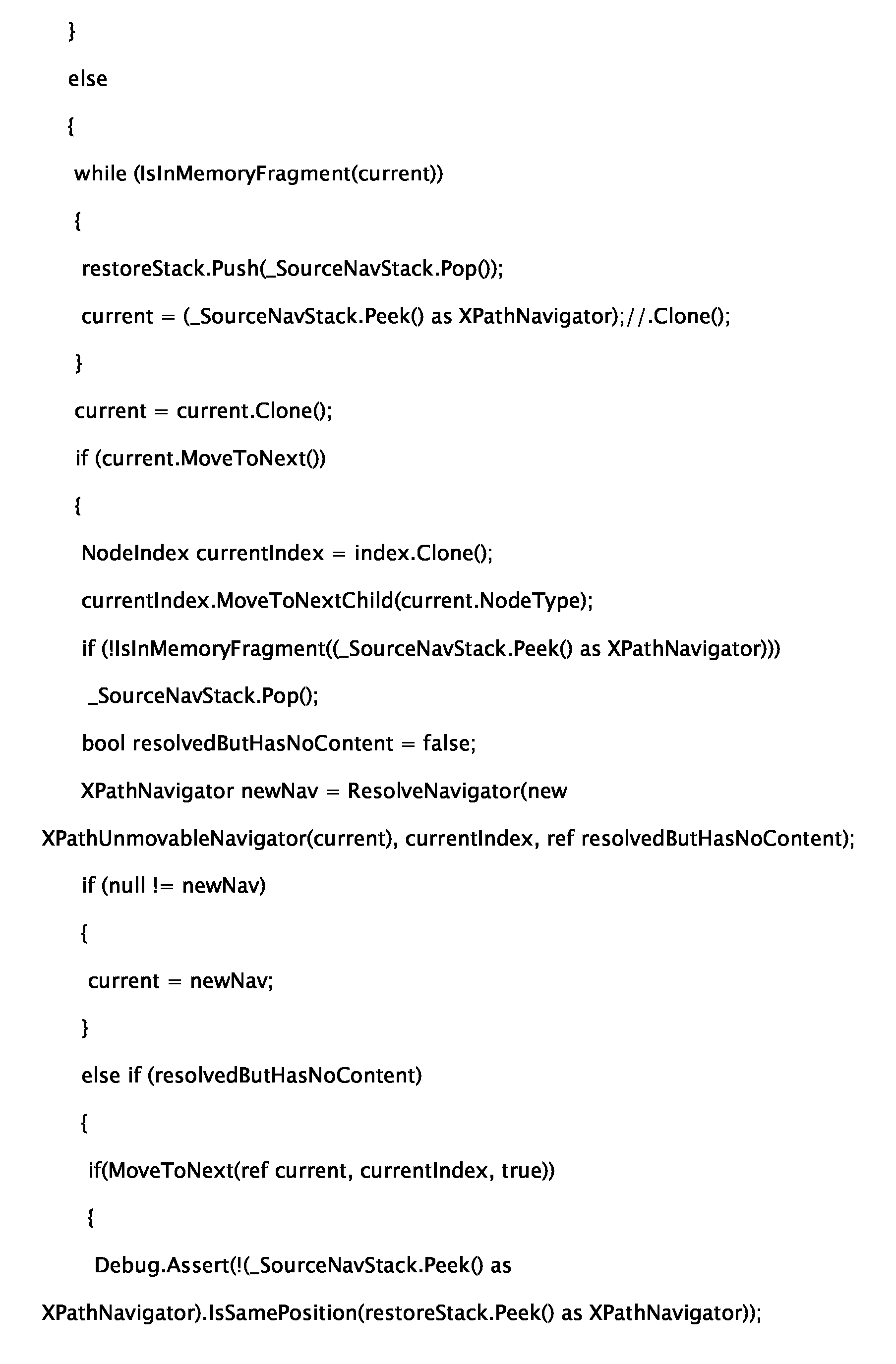

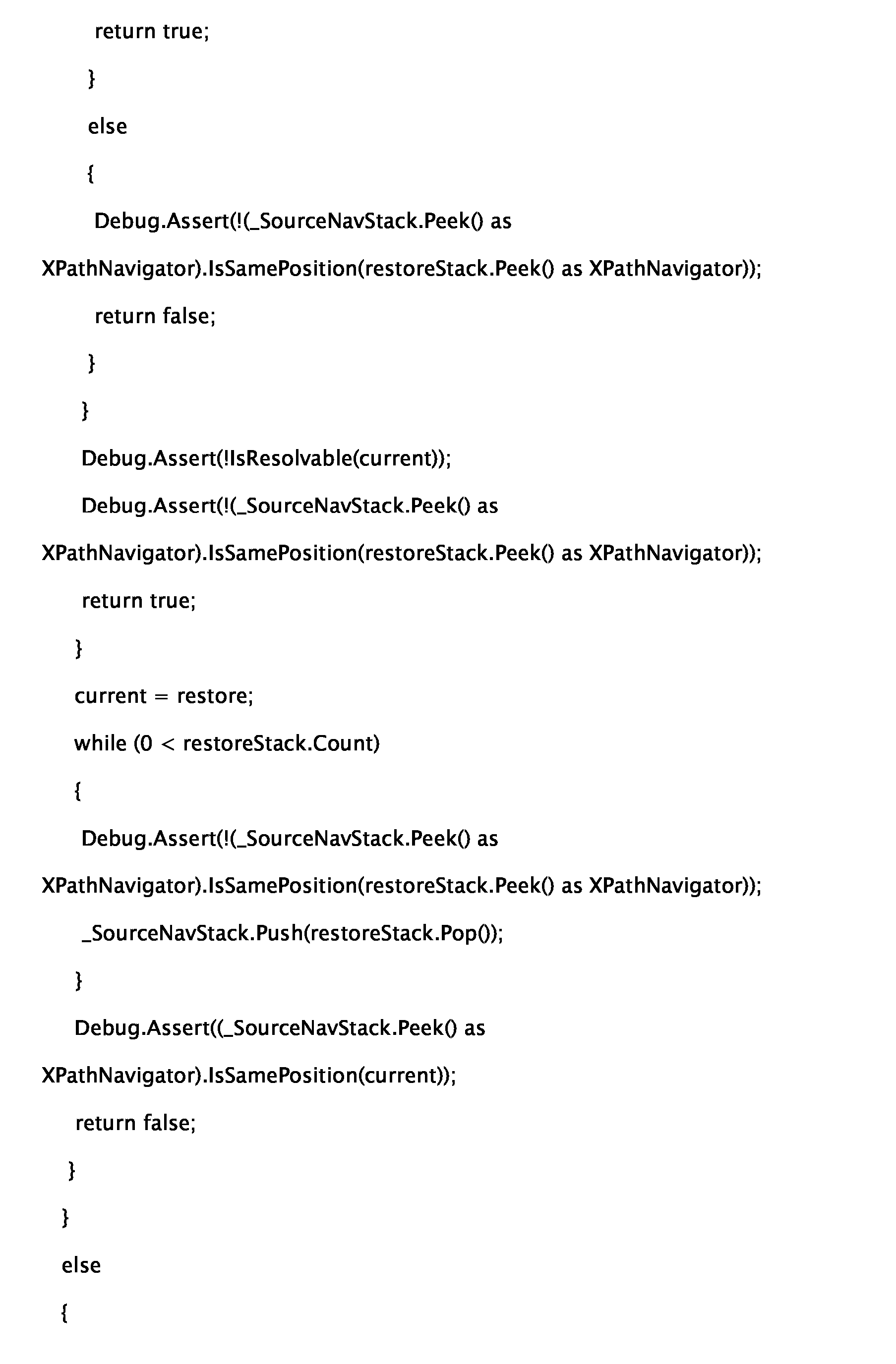

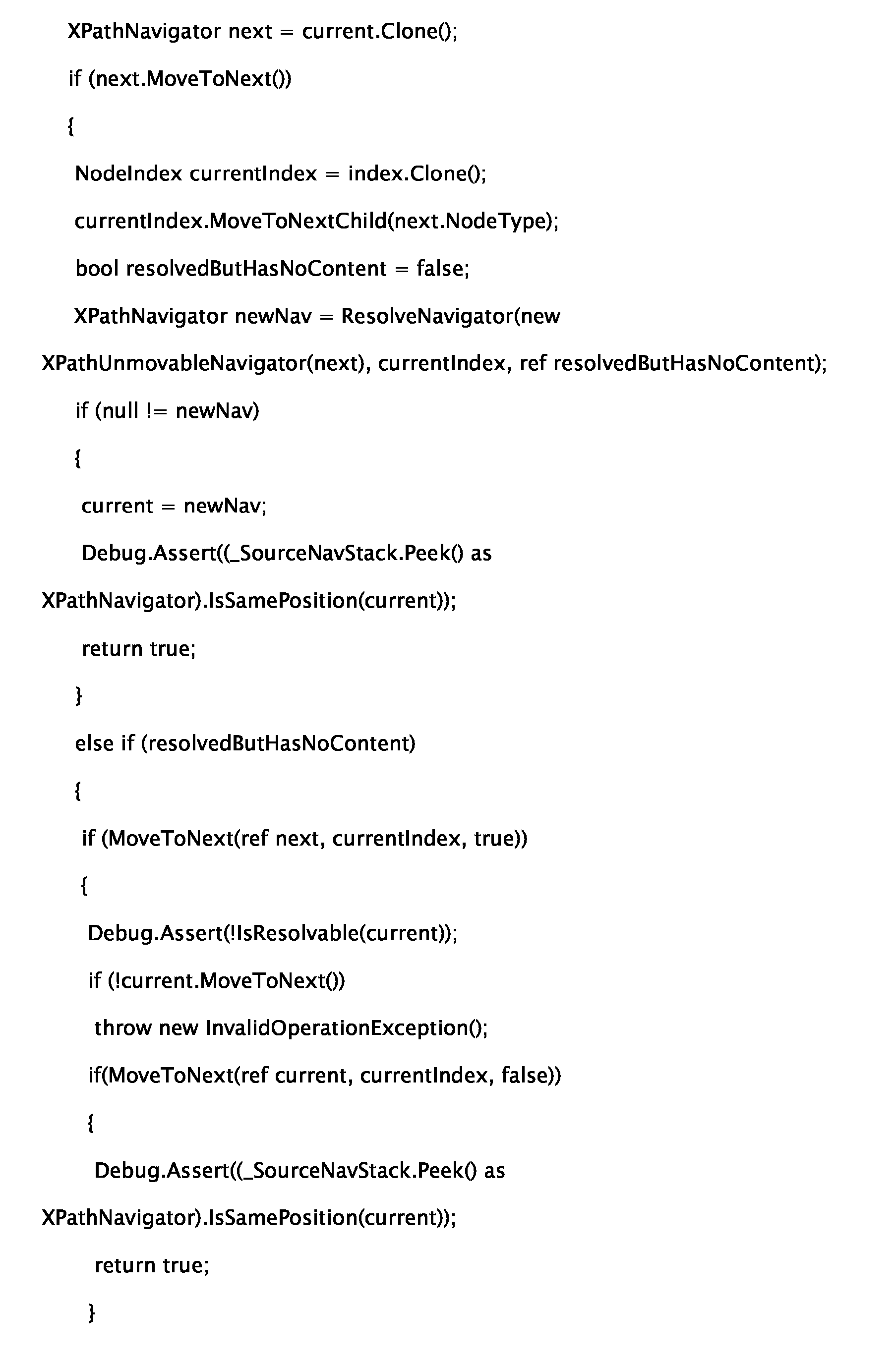

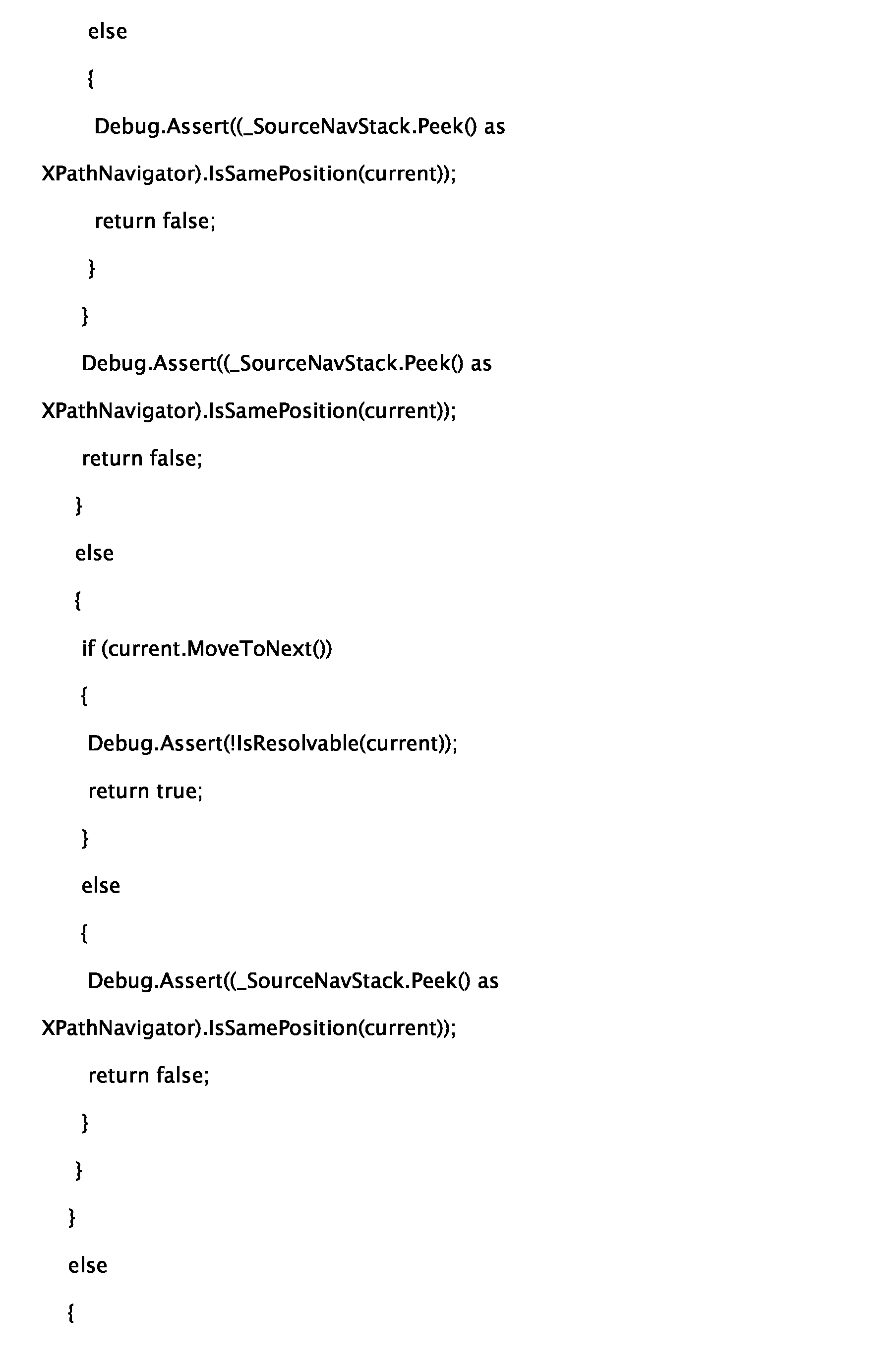

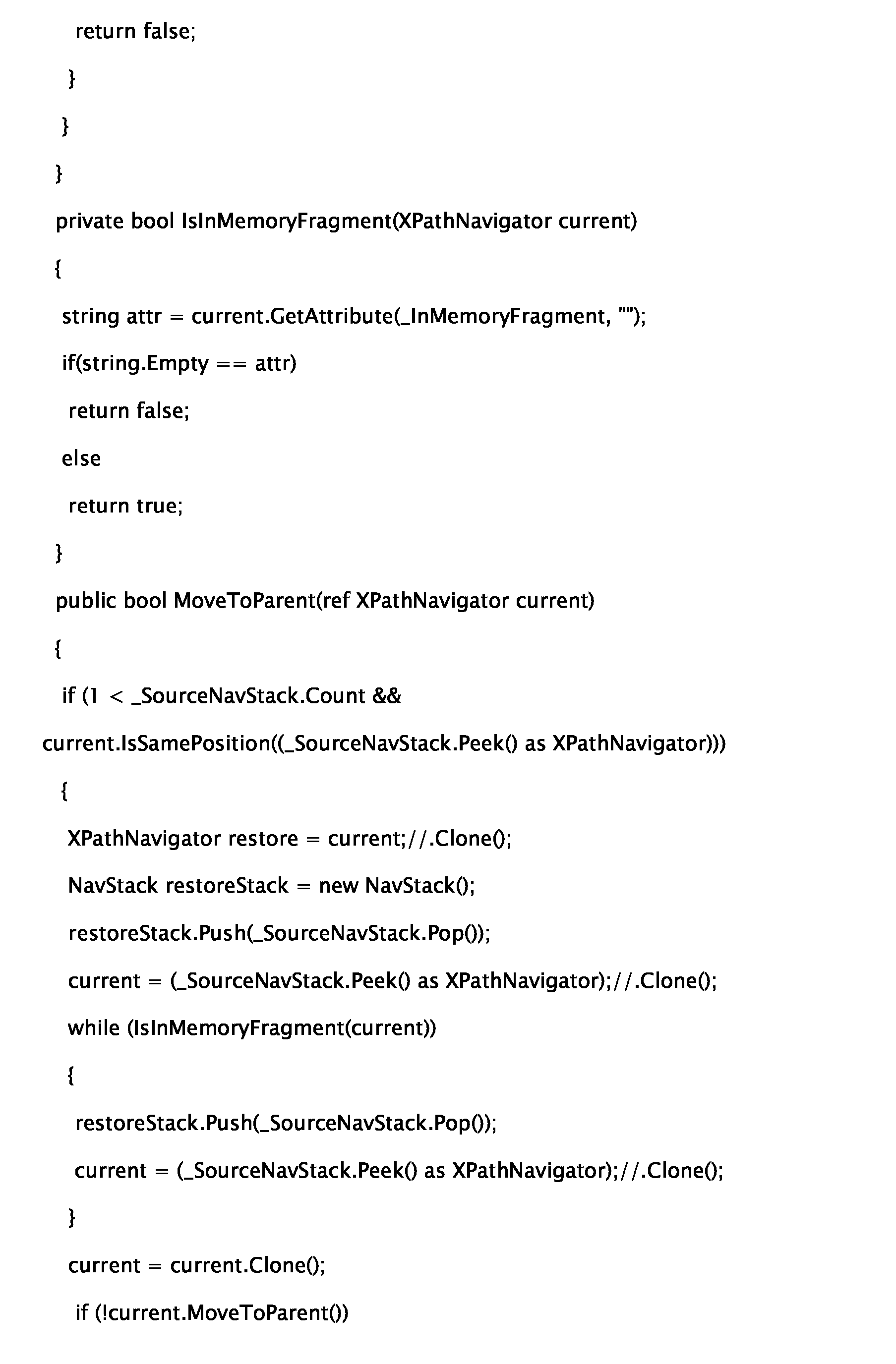

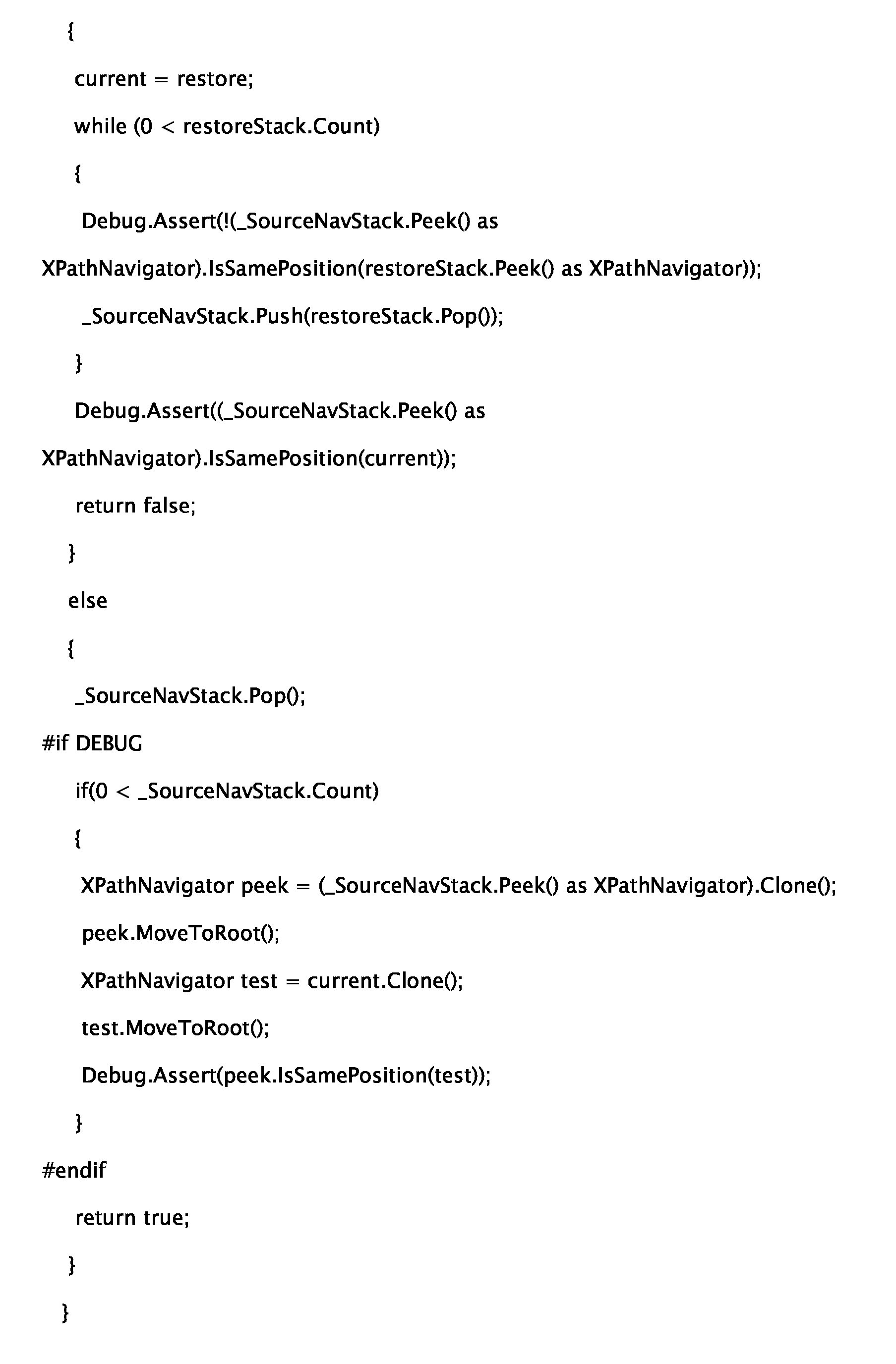

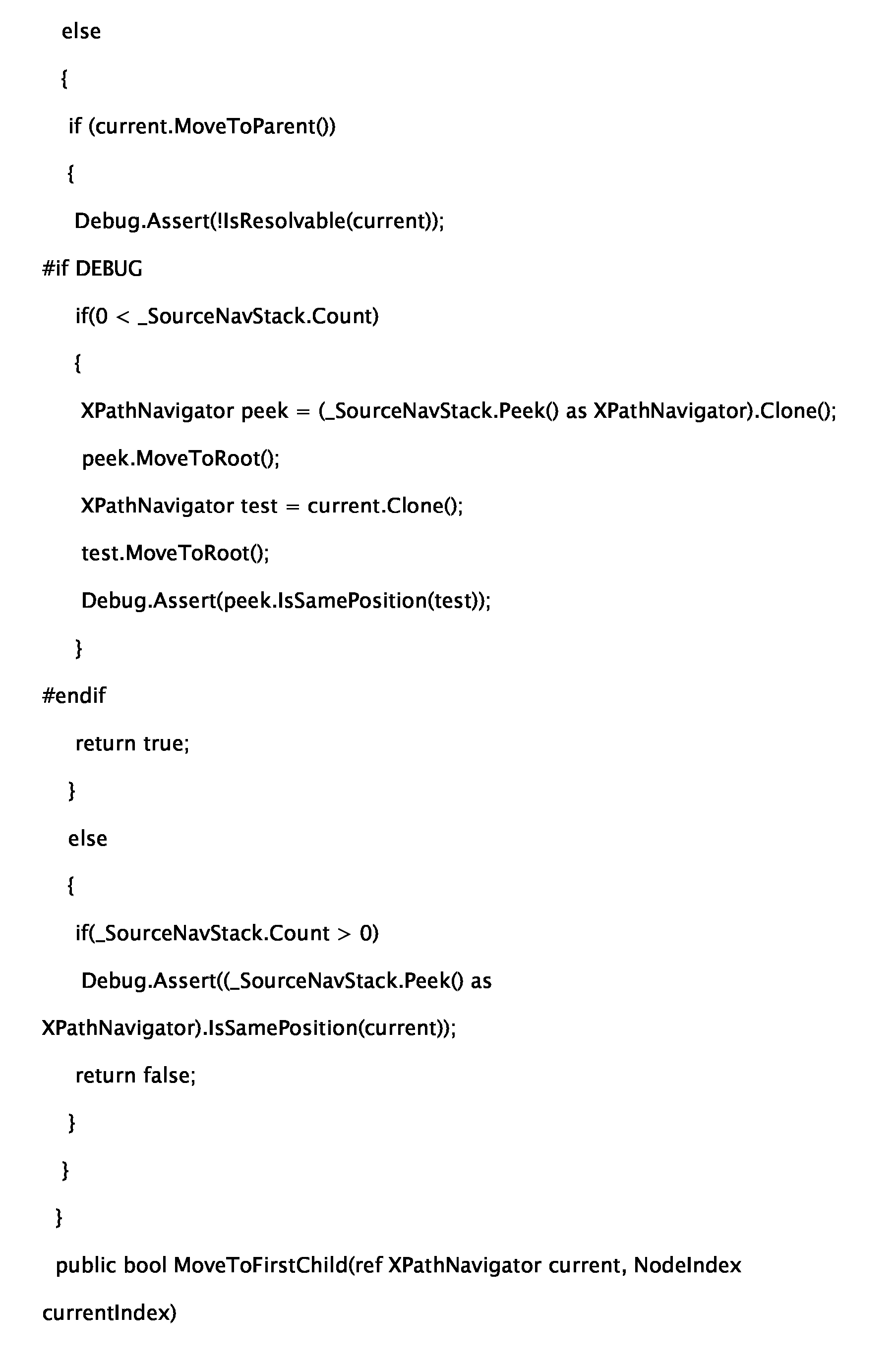

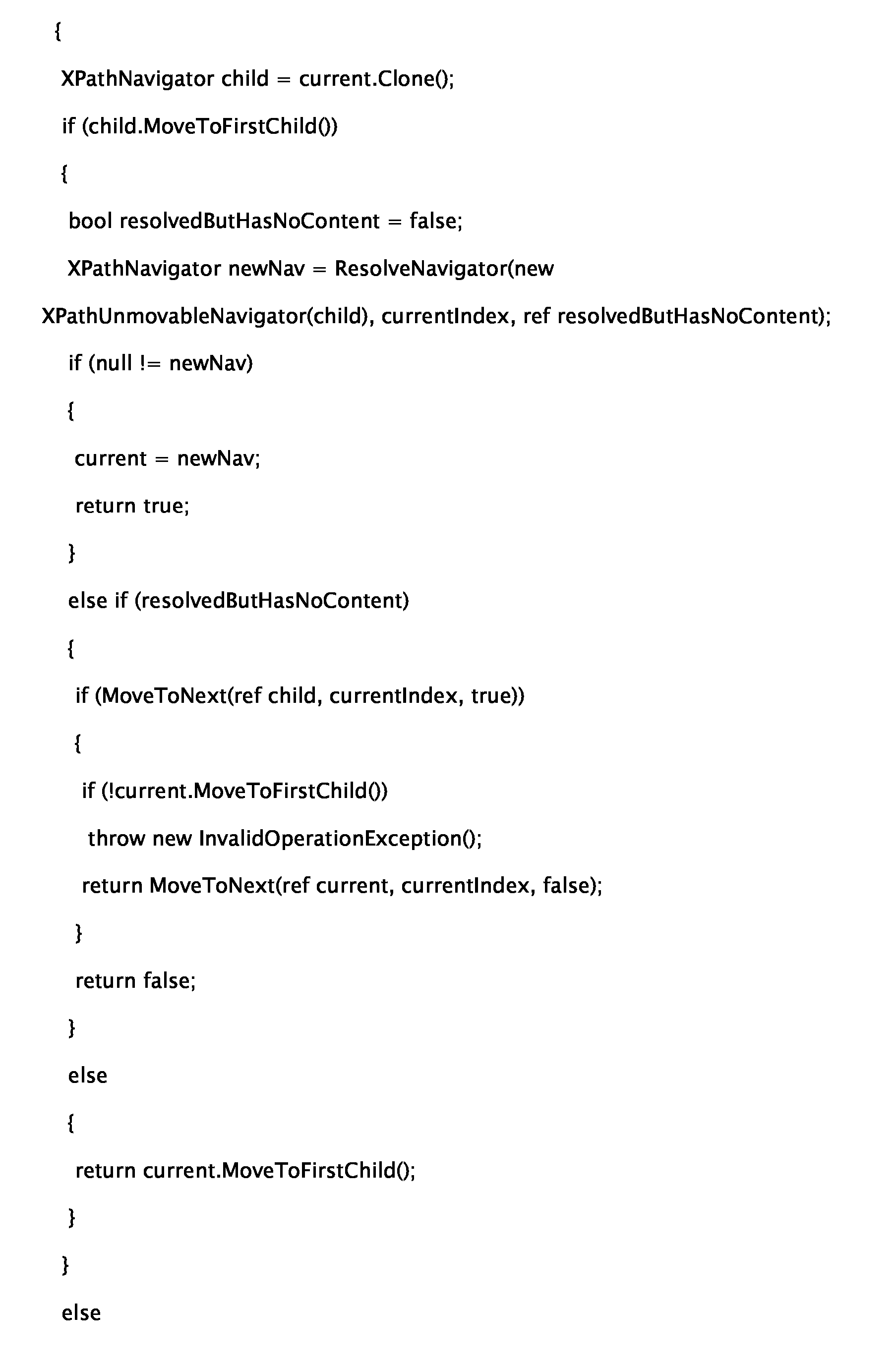

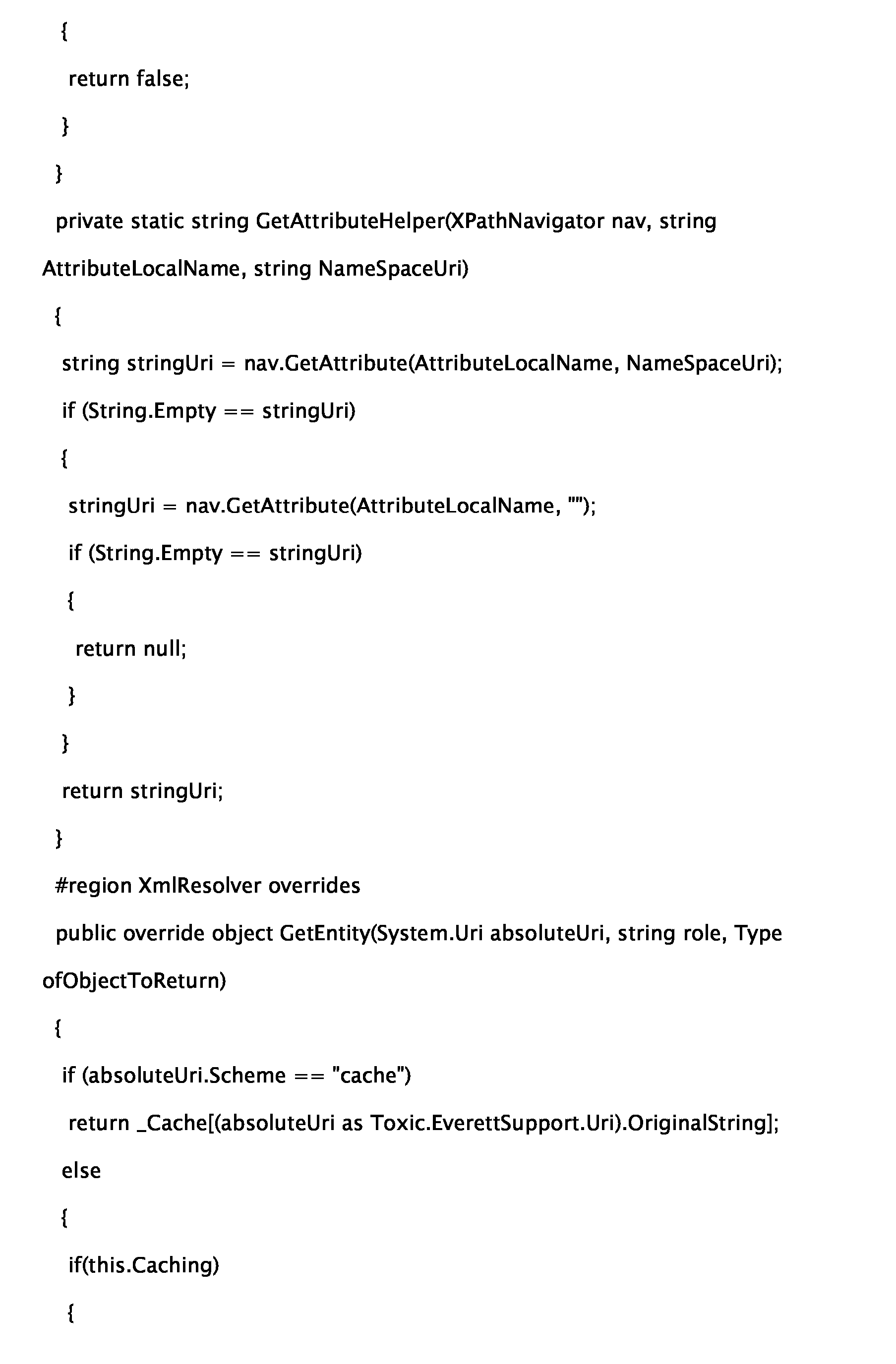

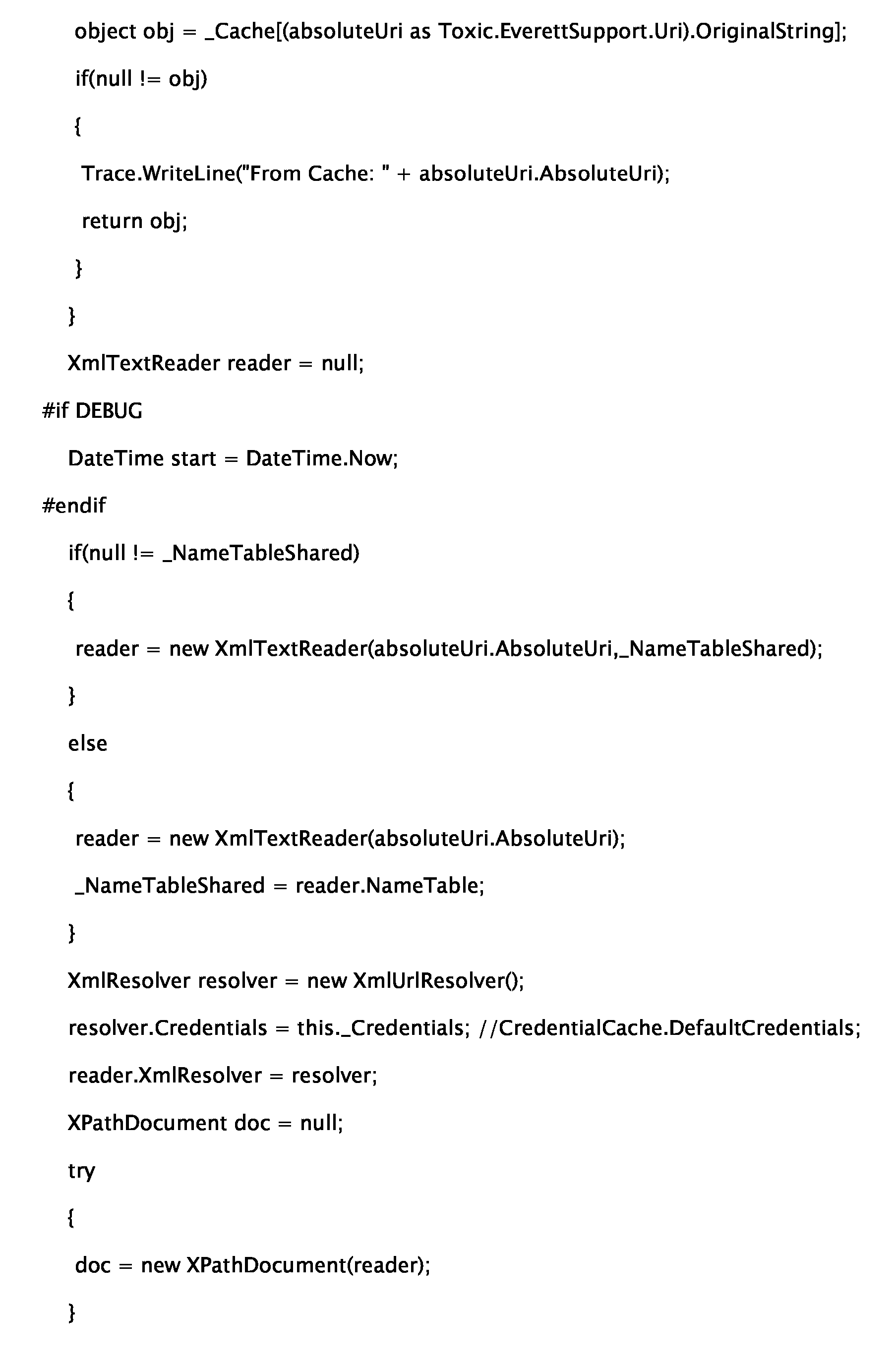

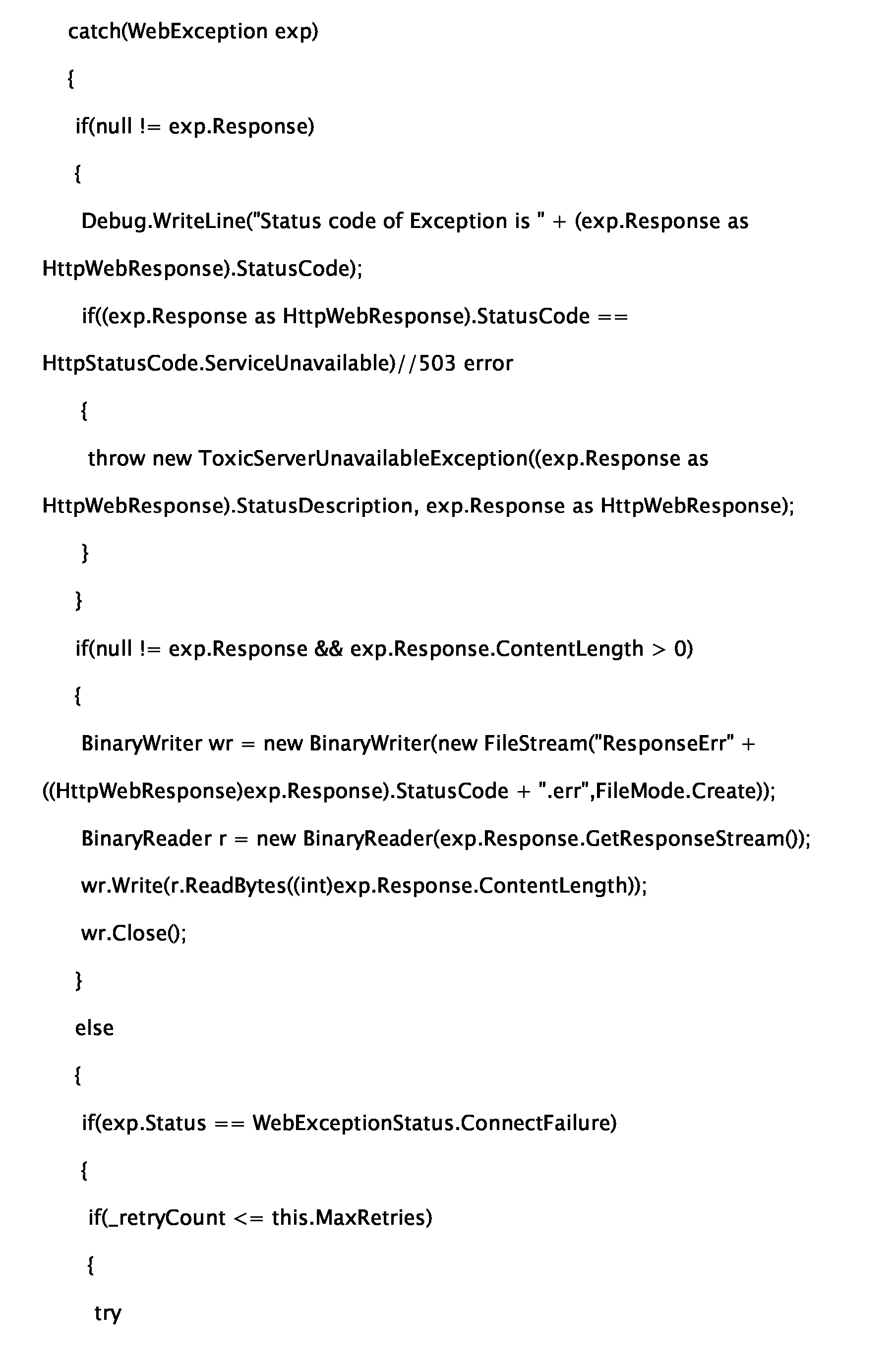

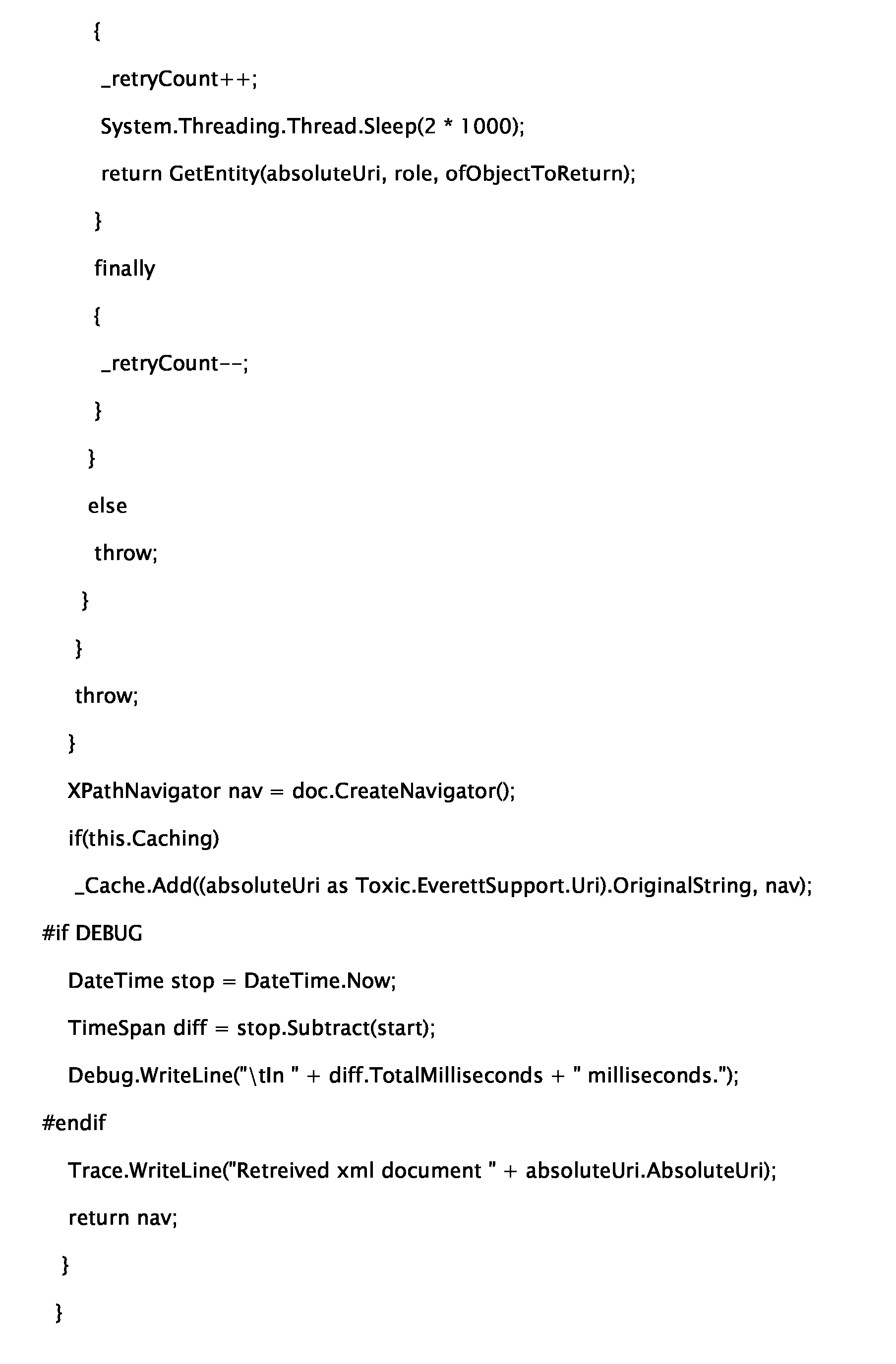

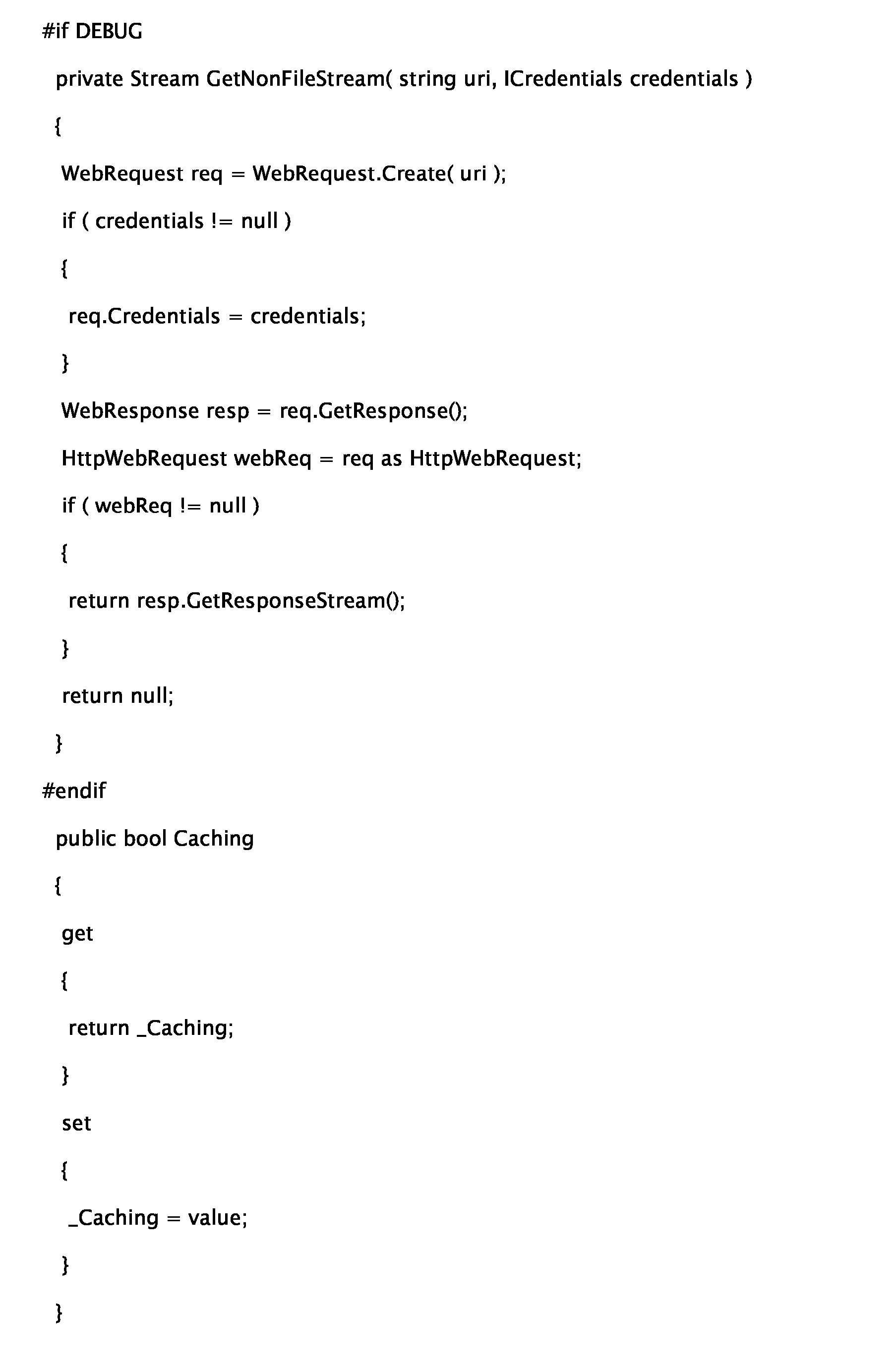

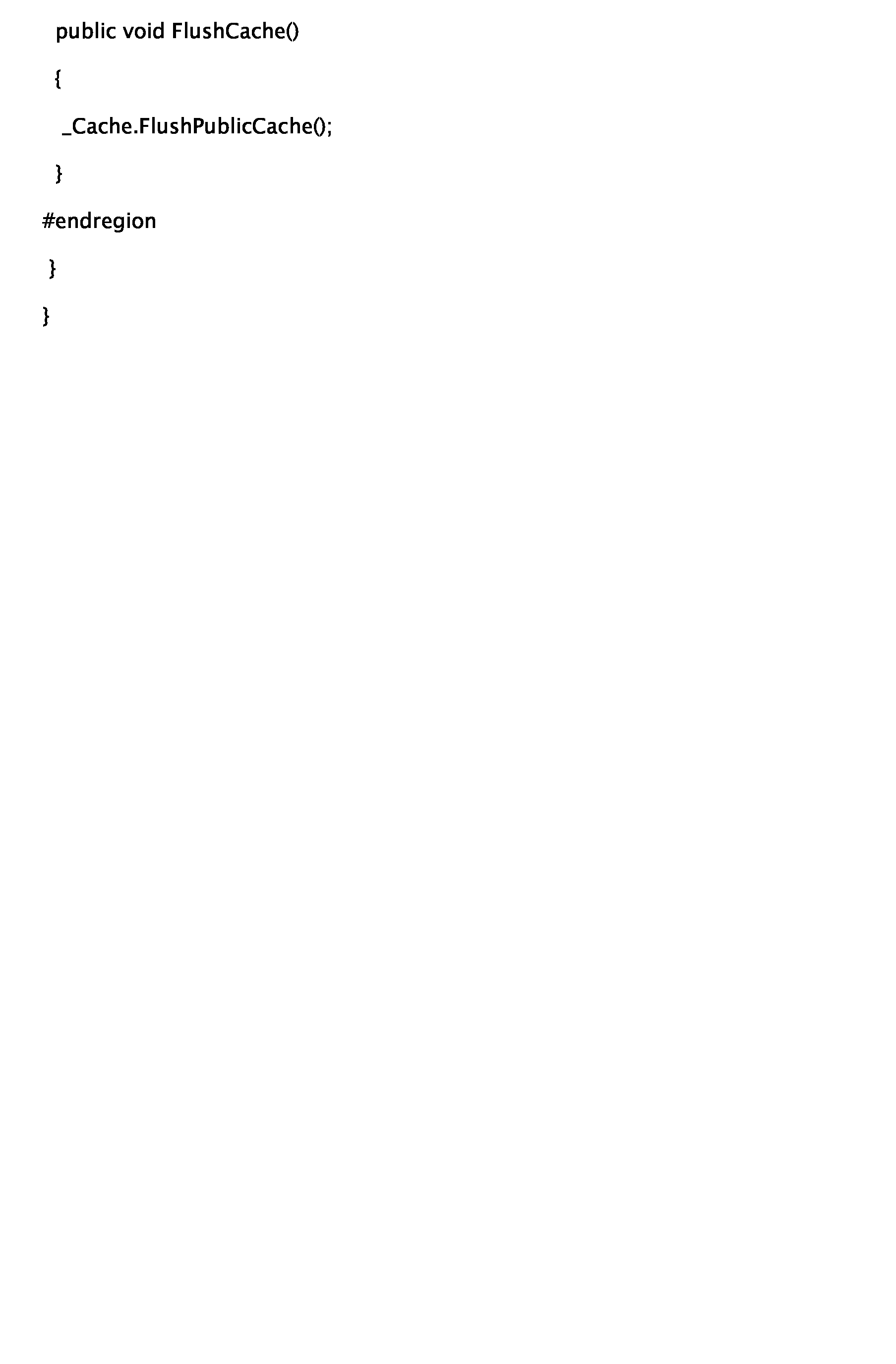

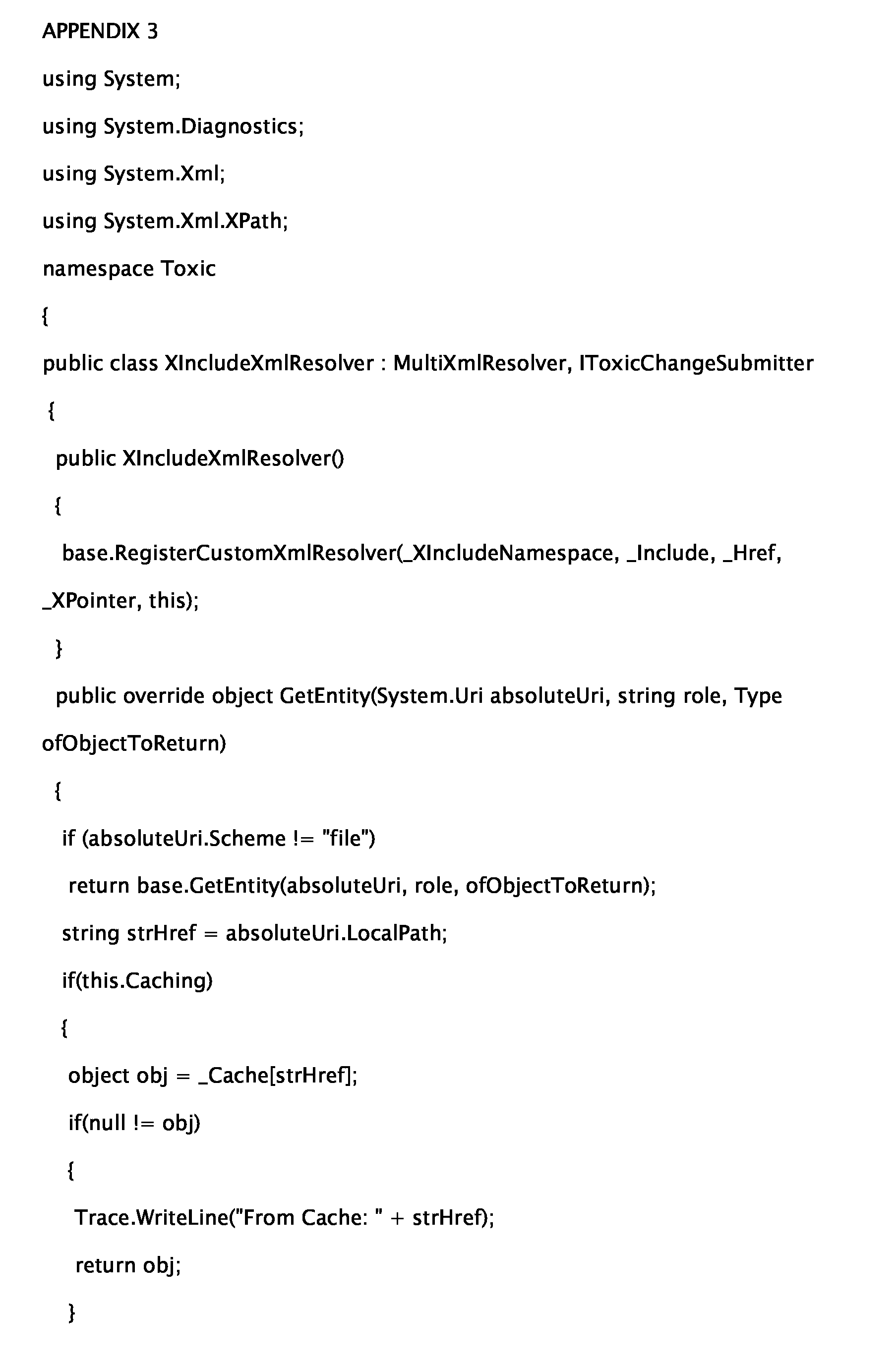

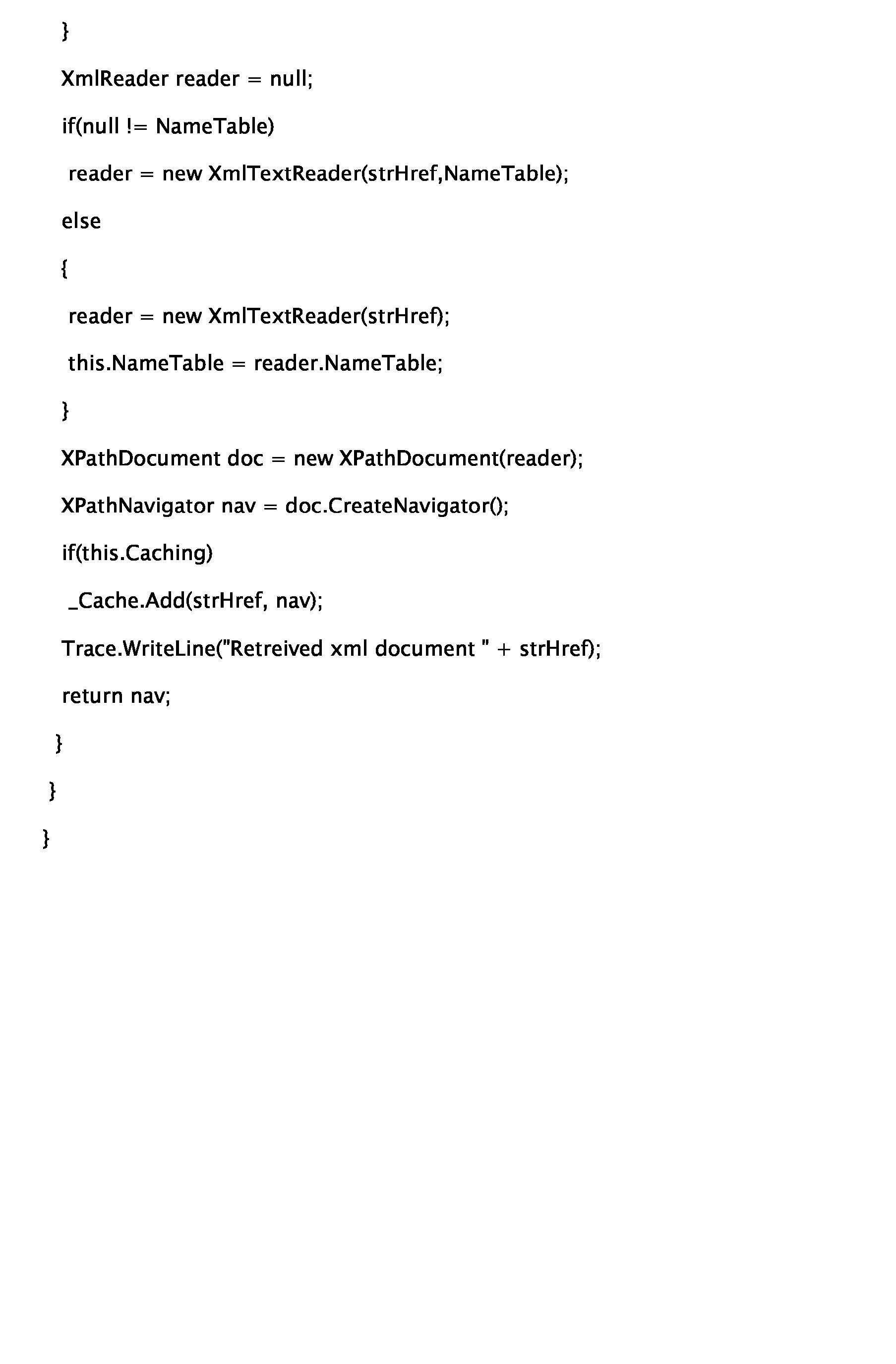

## Claims

1. A method of satisfying a query for data comprising:
retrieving a first data portion related to the query, the first data portion
comprising one or more markers, each marker corresponding to a further data portion;
determining from the query whether a further data portion is required to satisfy the query and if required, retrieving the further data portion;
repeating the determining step for the or each marker in the first data portion and for any markers in retrieved further data portions; and
selecting data from the retrieved data portions to satisfy the query.

2. A method according to claim 1, wherein the selected data comprises one of the retrieved data portions.

3. A method according to claim 1, wherein the selected data comprises a part of one of the retrieved data portions.

4. A method according to any of the preceding claims, wherein the query is received from an application and the method further comprising:
outputting the selected data to the client application.

5. A method according to any of the preceding claims, further comprising, before the step of retrieving a first data portion:
creating the first data portion.

6. A method according to claim 5, wherein creating the first data portion comprises:
accessing a data source;
retrieving data from the data source;
selecting a part of the data based on predefined criteria; and
creating a first data portion comprising the selected part of the data and one or more markers.

7. A method according to claim 6, wherein the predefined criteria comprise one or more of: a data hierarchy, a portion size restriction, location of the data, and characteristics of a link over which the first data portion is to be sent.

8. A method according to claim 6 or 7, further comprising, before the step of retrieving a further data portion:
creating the further data portion.

9. A method according to claim 8, wherein creating the further data portion comprises:
accessing a second data source;
retrieving data from the second data source;
selecting a part of the data based on predefined criteria; and
creating a further data portion comprising the selected part of the data and one or more markers.

10. A method according to claim 9, wherein the first data source and the second data source are the same.

11. A method according to any of claims 6-10, wherein the step of creating the first data portion is performed by a server-side module.

12. A method according to any of claims 8-10, wherein the steps of creating the first data portion creating the further data portion are performed by a server-side module.

13. A method according to any of the preceding claims, wherein each marker comprises location information for a data portion, the location information comprising a universal resource identifier, a file path or a folder.

14. A method according to any of the preceding claims, wherein the query comprises an XPath, XSLT or XQuery query.

15. A method according to any of the preceding claims, wherein each data portion comprises XML data.

16. A computer program comprising computer program code means adapted to perform all the steps of any of the preceding claims when said program is run on a computer.

17. A computer program as claimed in claim 16 embodied on a computer readable medium.

18. A data retrieval system comprising:
a navigational interface (102a) arranged to receive a query; and
a data retrieval means (102b) arranged to:
retrieve a first data portion related to the query, the first data portion comprising one or more markers, each marker corresponding to a further data portion;
determine from the query whether a further data portion is required to satisfy the query and if required, to retrieve the further data portion;
repeat the determining step for the or each marker in the first data portion and for any markers in retrieved further data portions; and
select data from the retrieved data portions to satisfy the query.

19. A data retrieval system according to claim 18, further comprising:
an output arranged to output the selected data.

20. A method of creating a data portion for use in satisfying a query, the method comprising:
accessing a data source;
retrieving data from the data source;
selecting a part of the data based on predefined criteria; and
creating a first data portion comprising the selected part of the data and one or more markers, each marker corresponding to a further data portion.
